# EUROPEAN PATENT APPLICATION

(11) **EP 1 298 561 A1**
(43) Date of publication of application: **02.04.2003**
(21) Application number: 02021469.8
(22) Date of filing: 25.09.2002
(51) Int. Cl.: G06F 17/60

(54) **Vehicle sales support system, vehicle sales support program and vehicle sales support method**

(30) Priority: 28.09.2001 JP 2001303025; 26.07.2002 JP 2002218727
(71) Applicant: Mazda Motor Corporation, Aki-gun, Hiroshima 730-8670 (JP)
(72) Inventor: Takaoka, Hiroki, c/o Mazda Motor Corporation, Aki-gun, Hiroshima 730-8670 (JP)
(74) Representative: Müller-Boré & Partner Patentanwälte

(57) **Abstract**

In the case where an estimated price of a vehicle is presented online to a customer, reference information database for storing reference information to be used by each of a plurality of vehicle distributors in examining estimated prices of vehicles having various specifications is previously prepared, so that the reference information read from the reference information database can be presented to a distributor when the distributor inputs an estimated price.

## Description

### BACKGROUND OF THE INVENTION

The present invention relates to a vehicle sales support system for supporting vehicle sales to customers online by allowing a customer to select, via communications lines, preferred specifications from a plurality of optional specifications previously set with respect to a vehicle and sending an estimated price of a selectively specified vehicle having the preferred specifications in response to an estimate request from the customer, and a vehicle sales support program for controlling a vehicle sales support apparatus used in the vehicle sales support system, and a vehicle sales support method.

In a conventionally known vehicle sales support system, as described in, for example, Japanese Laid-Open Patent Publication No. 5-274326, catalogue information on vehicles computerized in the form of multimedia information is previously stored, and if a vehicle has various optional specifications such as a color, a design and optional equipment, a customer selects preferred specifications and equipment by selecting menu items, so that the appearance of the vehicle having the selected preferred specifications (hereinafter referred to as the selectively specified vehicle) can be visualized for providing purchase support information to the customer.

Also, a system in which price estimate, inquiry about delivery time, order receipt and the like regarding the selectively specified vehicle can be performed online is known.

In the current sales form (namely, the sales form in which an estimated price is not presented online), there are a plurality of distributors such as vehicle sales companies, their shops and dealers. In each of the distributors, when a customer requests for an estimate of the price of a selectively specified vehicle, the distributor itself determines a reduction in price from a manufacturer recommended retail price of the selectively specified vehicle (which may be a reduction in whole price including the price of a trade-in or expenses necessary for the purchase of the vehicle), so as to set the estimated price of the selectively specified vehicle, which is presented to the customer.

Therefore, also in the sales support system for presenting an estimated price to a customer online, after the customer selects the optional specifications of a vehicle that is to be purchased, he/she selects a distributor by which an estimated price of the selectively specified vehicle is desired to be presented and requests for the estimated price of the selected distributor. Thus, the estimated price of the selectively specified vehicle set by the selected distributor may be presented to the customer. In this case, an estimated price database (in which estimated prices can be updated) for storing estimated prices of vehicles having respective optional specifications set by each distributor is previously prepared. When a customer requests for estimate, the estimated price stored in the estimated price database and set by the distributor selected by the customer may be sent to the customer, or the estimated price stored in the estimated price database may be sent to the distributor selected by the customer at the request so as to receive a response from the distributor (such as approval of the stored estimated price or input of a new estimated price), and the estimated price resulting from the response may be sent to the customer. Alternatively, even when the estimated price database is not prepared, an estimated price may be input by the selected distributor at the request for the estimated price so that the input estimated price can be sent to the customer.

However, in such a method for presenting estimate online, a customer can easily get the estimated price set by a preferred distributor without visiting the distributor. Therefore, the customer tends to request for estimate of a plurality of distributors so as to enter into negotiations for the purchase of the selectively specified vehicle with a distributor that sets the lowest estimated price.

In other words, in the sales form in which estimate is not presented online, it is not easy for a customer to get estimated prices from a plurality of distributors because he/she needs to visit the respective distributors. In addition, it is easy for a distributor to set an appropriate estimated price because a customer visit the distributor for negotiations and the distributor can set an estimated price on the basis of various information gained during the negotiations. Also, even after presenting the estimated price once, the distributor can continue the negotiations by presenting a new estimated price set in accordance with an estimated price of another distributor.

On the contrary, in the sales method in which estimate is presented online, it is necessary for a distributor to present an estimated price online before negotiations. Therefore, if the presented estimated price is much higher than an estimated price presented by another distributor, there arises a problem that the customer never give the distributor an opportunity of negotiations.

In this manner, in the sales support system in which estimate is presented online before negotiations, in order to make a customer consider entering into negotiations with a distributor, it seems very significant what estimated price the distributor sets with respect to a selectively specified vehicle selected by the customer.

However, in the case where estimate is presented online at the request before negotiations, it is difficult for a distributor to set an appropriate estimated price because there are few factors for determining what estimated price is appropriate (namely, what estimated price can make a given profit without being too much higher than an estimated price set by another distributor) with respect to a given selected specification.

Also, even if a distributor presents an estimated price to a customer, in the case where the customer did not enter into negotiations with the distributor afterward, the distributor cannot know whether the presented estimated price was much higher than the market price and hence the customer entered into negotiations with another distributor having presented a lower estimated price or whether the customer did not enter into negotiations for certain reasons, for example, of schedule of the customer himself/herself although the presented estimated price was appropriate. Also in this manner, it is very difficult to find out an appropriate estimated price. Therefore, the distributor may never notice what is an appropriate estimated price, and hence may be semipermanently taken away an opportunity of negotiations by other distributors presenting lower estimated prices.

Furthermore, in the sales support system in which the specification selection by a customer is accepted online, the number of optional specifications available is increasing, and hence, it is difficult to remember all information (such as the market price of each optional specification and information of competitive vehicles) necessary to consider for setting an estimated price of every optional specification. This is also an obstacle to set an appropriate estimated price.

The present invention was devised in consideration of the aforementioned problems. An object of the invention is, in a sales support or vehicle configuration system for supporting vehicle sales to customers or vehicle configuration by customers online by presenting estimate to the customers, allowing a distributor to easily set an appropriate estimated price not much higher than an estimated price set by another distributor in examining the estimated price of a selectively specified or configured vehicle selected by a customer and allowing a customer to get online an estimated price appropriate in consideration of the market price.

### SUMMARY OF THE INVENTION

In order to achieve the object, according to the invention, a reference information database for storing reference information to be used in setting an estimated price of each specification or configuration of a vehicle is provided in each of a plurality of vehicle distributors, so that the reference information read from the reference information database can be provided to a distributor when the distributor inputs an estimated price.

Specifically, the the invention is directed to a vehicle sales support or configuration system for supporting vehicle sales to customers or vehicle configuration by customers online by allowing a customer to select, via communications lines, preferred specifications or configurations from a plurality of specifications or configurations previously set with respect to a vehicle and sending an estimated price of a selectively specified or configured vehicle having the preferred specifications or configurations to the customer in response to an estimate request from the customer.

This vehicle sales support or configuration system includes a manufacturer recommended retail price database for storing data for enabling calculation of manufacturer recommended retail prices of vehicles having the plurality of specifications or configurations; a reference information database for storing reference information to be used by each of a plurality of vehicle distributors in examining estimated prices of vehicles having the plurality of specifications or configurations; an estimated price database for storing the estimated prices of vehicles having the plurality of specifications or configurations set by each of the plurality of distributors; specification or configuration selection means for presenting the plurality of specifications or configurations of the vehicle to the customer, allowing the customer to select the preferred specifications or configurations from the plurality of specifications or configurations, calculating a manufacturer recommended retail price of the selectively specified or configured vehicle on the basis of the data stored in the manufacturer recommended retail price database and presenting the calculated manufacturer recommended retail price to the customer; distributor selection means for presenting the plurality of distributors to the customer and allowing the customer to select, from the plurality of distributors, a distributor by which an estimated price of the selectively specified or configured vehicle is desired to be presented; estimated price submit means, used when an estimate request regarding the selectively specified or configured vehicle is received from the customer, for reading an estimated price of the selectively specified or configured vehicle set by the distributor selected by the customer, and sending the read estimated price to the customer having made the estimate request; estimated price setting means, used in response to an estimated price update request from any of the plurality of distributors, for presenting, to the distributor, an estimated price, set by the distributor, of a vehicle having specifications or configurations related to the update request read from the estimated price database, allowing the distributor to input a new estimated price of the vehicle having the specifications or configurations related to the update request, and storing the new estimated price for updating the estimated price database as an estimated price to be sent to a customer by the estimated price submit means when the distributor is selected by the customer; and reference information providing means, used when the distributor having made the update request inputs the new estimated price, for presenting the reference information read from the reference information database to the distributor having made the update request.

Owing to the aforementioned structure, when a customer selects preferred specifications or configurations, a manufacturer recommended retail price of a selectively specified or configured vehicle having the preferred specifications or configurations is (preferably automatically) presented to the customer. Then, when the customer selects a distributor by which an estimated price of the selectively specified or configured vehicle is desired to be presented and requests for the estimate of the selectively specified or configured vehicle, an estimated price of the selectively specified or configured vehicle set by the distributor selected by the customer is read from the estimated price database, and is sent to the customer having made the estimate request. On the other hand, when a distributor makes an estimated price update request, an estimated price of a vehicle having specifications or configurations related to the update request set by the distributor is read from the estimated price database and presented to the distributor. When the distributor inputs a new estimated price of the vehicle having the specifications or configurations, the input estimated price is stored as an estimated price to be sent to a customer when the customer selects the distributor for updating the estimated price database. In other words, when a customer makes an estimate request after the update, the updated estimated price is (preferably automatically) sent to the customer. Furthermore, when the distributor having made the update request inputs the new estimated price, the reference information to be used in examining the estimated price, such as an estimated price input by another distributor different from the distributor having made the update request and/or market price information of vehicles of brands different from the vehicle whose specifications or configurations are to be selected by the present system, is read from the reference information database to be presented to the distributor having made the update request.

Accordingly, the distributor having made the update request can grasp an appropriate estimated price on the basis of the reference information, so as to easily set an appropriate estimated price that is not much higher than one set by another distributor and can satisfy a customer. As a result, the opportunity of negotiations can be minimally lost against the intention of the distributor. Specifically, if an improper estimated price (namely, an estimated price much higher than one presented by another distributor) is presented online before negotiations, the customer enters into negotiation with another distributor having presented a lower estimated price, and hence, the distributor cannot have an opportunity of negotiations. However, when an appropriate estimated price is presented in the aforementioned manner, the opportunity of negotiations can be minimally lost against the intention of the distributor.

Furthermore, in such a sales support or vehicle configuration system in which specification or configuration selection of a customer is accepted online, the number of selectable specifications or configurations tends to increase, and it is difficult to remember all the items to be considered in setting estimated prices (such as market price information and information of competitive vehicles) with respect to all the specifications or configurations. In this system, however, an appropriate estimated price can be easily obtained on the basis of the reference information without remembering these items to be considered. Finally, the overall effectiveness of the system can be improved and an automatization is advantageously possible.

According toa preferred embodiment of the invention, the estimated price setting means stores the new estimated price input by the distributor having made the update request for updating the estimated price database and stores the new estimated price in the reference information database correspondingly to the specifications or configurations related to the update request, and the reference information providing means reads, from the reference information database, an estimated price of a vehicle having the specifications or configurations related to the update request input by a distributor other than the distributor having made update request, and presents at least the read estimated price to the distributor having made the update request as reference information.

In this manner, the estimated price, set by another distributor, of a vehicle having equivalent specifications or configurations can be obtained as the reference information, and hence, the estimated price of the reference information can be regarded as a reference for setting an appropriate estimated price that is not much higher than one set by another distributor. Accordingly, from the viewpoint of the distributor, the opportunity of negotiations is minimally lost against its intention, and from the viewpoint of a customer, an estimated price appropriate in view of market prices can be obtained.

Preferably, the reference information providing means is inhibited from presenting, to the distributor having made the update request as reference information, an estimated price input by a distributor located to be away from the distributor having made the update request by a given distance or more.

In this manner, estimated price information of another distributor located too far away from the distributor having made the update request can be automatically prevented from being presented as the reference information. Therefore, the distributor having made the update request can easily set an appropriate estimated price that is not much higher than one set by another distributor located within its sales area, and the customer can obtain an estimated price appropriate in view of the market prices within the sales area of the distributor.

Further preferably, the reference information providing means allows the distributor having made the update request to specify another distributor and is inhibited from presenting, to the distributor having made the update request as reference information, estimated prices input by the other distributors not specified by the distributor having made the update request.

In this manner, estimated price information of the other distributors not specified by the distributor having made the update request can be automatically prevented from being presented as the reference information. Therefore, the distributor having made the update request can easily set an appropriate estimated price that is not much higher than one set by another distributor actually regarded to be competitive.

Still further preferably, the vehicle sales support or configuration system further includes negotiation application accepting means, used when a negotiation application regarding the selectively specified vehicle is received from the customer to which the estimated price has been sent, for sending negotiation application information corresponding to the negotiation application regarding the selectively specified or configured vehicle to the distributor selected by the customer, and storing the negotiation application information in the reference information database correspondingly to the preferred specifications or configurations and the estimated price related to the negotiation application, and the reference information providing means reads, from the reference information database, an estimated price and negotiation application information of another distributor regarding a vehicle having the specifications related to the update request, and presents, to the distributor having made the update request as reference information, at least the estimated price and a ratio of a number of times of receiving negotiation applications to a total number of times of presenting the same estimated price.

In this manner, the distributor having made the update request can find the estimated price of a vehicle having the specifications related to the update request set by another distributor and the ratio of the number of times of receiving negotiation applications to the number of times of presenting the same estimated price (negotiation ratio). Therefore, the distributor can easily grasp an estimated price at which a given negotiation ratio can be expected, namely, an appropriate estimated price that is not much higher than one set by another distributor.

Most preferably, the reference information providing means reads, from the reference information database, an estimated price, input by another distributor, of a vehicle having specifications or configurations different from the specifications or configurations related to the update request to a given or smaller extent, and presents the read estimated price and specification or configuration difference to the distributor having made the update request as reference information.

When there are a large number of selectable specifications or configurations, there is a possibility that an estimated price of a vehicle having the same specifications or configurations as the specifications or configurations related to the update request is not input by another distributor. However, according to this embodiment of the invention, the estimated price of the vehicle having similar specifications or configurations to those related to the update request input by another distributor can be obtained as the reference information. Therefore, the estimated price of the vehicle having the similar specifications or configurations can be regarded as a reference for setting an appropriate estimated price that is not much higher than one set by another distributor. Therefore, even when an estimated price of a vehicle having the same specifications or configurations as those related to the update request is not stored in the reference information database, the opportunity of negotiations can be minimally lost against the intention of the distributor.

At this point, "the specifications or configurations different from the specifications or configurations related to the update request to a given or smaller extent" correspond to specifications or configurations equivalent or similar to the specifications or configurations related to the update request. The "similar specifications or configurations" means specifications or configurations different in not large (or expensive) components such as an engine and a transmission but in small (inexpensive) components such as a decoration and an option part, or specifications or configurations whose manufacturer recommended retail price is a given price or lower (which also applies to the following description).

According to a further preferred embodiment of the invention, the reference information database stores market price information of vehicles of brands different from the vehicle whose specifications or configurations are to be selected by the specification or configurations selection means, and the reference information providing means selects, from the market price information of the vehicles of different brands, market price information of a vehicle having specifications or configurations different from the specifications or configurations related to the update request to a given or smaller extent, and presents the selected market price information to the distributor having made the update request as reference information.

In this manner, the market price information of vehicles of different brands having specifications or configurations equivalent or similar to the specifications or configurations related to the update request can be obtained. Therefore, the distributor can regard the market price information of the vehicles of different brands as a reference for setting an appropriate estimated price that is no much higher as compared with the general market price, and hence, the opportunity of negotiations is minimally lost against the intention of the distributor.

Preferably, the reference information providing means allows the distributor having made the update request to specify a vehicle of different brand and is inhibited from presenting, to the distributor having made the update request as reference information, the market price information of other vehicles of different brands not specified by the distributor having made the update request.

In this manner, the market price information of the vehicles of different brands not specified by the distributor having made the update request can be automatically prevented from being presented as the reference information. Therefore, the distributor can refer to the market price information of the vehicle of different brand expected to be actually competitive, and hence can easily set an appropriate estimated price that is not much higher as compared with the market price of such a vehicle.

Preferably, the market price information of vehicles of different brands is calculated on the basis of prices of used vehicles of different brands and stored in the reference information database.

In this manner, the market price information of a vehicle of different brand, which is originally difficult to obtain (such as a price of a new vehicle of actually competitive brand), can be easily obtained, and hence, an appropriate estimated price can be accurately and easily set.

The invention is further directed to a vehicle sales support or configuration system for supporting vehicle sales to customers or vehicle configuration by customers online by allowing a customer to select, via communications lines, preferred specifications or configurations from a plurality of specifications or configurations previously set with respect to a vehicle and sending an estimated price of a selectively specified or configured vehicle having the preferred specifications or configurations to the customer in response to an estimate request from the customer.

This vehicle sales support or configuration system includes a manufacturer recommended retail price database for storing data for enabling calculation of manufacturer recommended retail prices of vehicles having the plurality of specifications or configurations; a reference information database for storing reference information to be used by each of a plurality of vehicle distributors in examining estimated prices of vehicles having the plurality of specifications or configurations; an estimated price database for storing the estimated prices of the vehicles having the plurality of specifications or configurations set by each of the plurality of distributors; specification or configuration selection means for presenting the plurality of specifications or configurations of the vehicle to the customer, allowing the customer to select the preferred specifications or configurations from the plurality of specifications or configurations, calculating a manufacturer recommended retail price of the selectively specified or configured vehicle on the basis of the data stored in the manufacturer recommended retail price database, and presenting the calculated manufacturer recommended retail price to the customer; distributor selection means for presenting the plurality of distributors to the customer and allowing the customer to select, from the plurality of distributors, a distributor by which an estimated price of the selectively specified or configured vehicle is desired to be presented; estimated price setting means, used when an estimate request regarding the selectively specified or configured vehicle is received from the customer, for presenting, to the selected distributor, the preferred specifications or configurations and an estimated price of the selectively specified vehicle, set by the selected distributor, read from the estimated price database, allowing the selected distributor to input a new estimated price of the selectively specified vehicle, and storing the new estimated price as an estimated price of the selectively specified or configured vehicle set by the selected distributor for updating the estimated price database; estimated price submit means for reading, from the estimated price database, the estimated price of the selectively specified or configured vehicle, set by the selected distributor, that has been stored for update by the estimated price setting means, and sending the read estimated price to the customer having made the estimate request; and reference information providing means, used when the selected distributor inputs the estimated price, for presenting the reference information read from the reference information database to the selected distributor.

According to this vehicle sales support or configuration system, when a customer selects preferred specifications or configurations, the manufacturer recommended retail price of a selectively specified or configured vehicle having the preferred specifications or configurations is presented to the customer. When the customer selects a distributor by which an estimated price of the selectively specified or configured vehicle is desired to be presented and requests for an estimate of the selectively specified or configured vehicle, the preferred specifications or configurations and an estimated price of the selectively specified or configured vehicle set by the distributor selected by the customer read from the estimated price database are presented to the selected distributor. When the selected distributor inputs an estimated price of the selectively specified or configured vehicle, the input estimated price is stored as an estimated price of the selectively specified or configured vehicle for updating the estimated price database. Thereafter, the updated estimated price is read from the estimated price database and sent to the customer having made the estimate request. When the selected distributor inputs the estimated price, the reference information to be used for examining an appropriate estimated price, such as an estimated price input by another distributor and market price information of a vehicle of different brand from the vehicle whose specifications or configurations are to be selected by the present system, read from the reference information database is presented to the selected distributor in the same manner asdescribed previously. Accordingly, the same effects as previously can be attained, and since the distributor can be given an opportunity of updating an estimated price every time an estimate request is made by a customer, the distributor can always present an appropriate estimated price to a customer.

According toa further preferred embodiment of the invention, the estimated price setting means stores the new estimated price input by the selected distributor for updating the estimated price database, and stores the new estimated price in the reference information database correspondingly to the preferred specifications, and the reference information providing means reads, from the reference information database, an estimated price of a vehicle having the preferred specifications input by another distributor different from the selected distributor, and presents at least the read estimated price to the selected distributor as reference information.

Preferably, the reference information providing means is inhibited from presenting, to the selected distributor as reference information, an estimated price input by another distributor located to be away from the selected distributor by a given distance or more.

Further preferably, the reference information providing means allows the selected distributor to specify another distributor, and is inhibited from presenting, to the selected distributor as reference information, estimated prices input by the other distributors not specified by the selected distributor.

Still further preferably, the reference information providing means is inhibited from presenting, to the selected distributor as reference information, an estimated price input by another distributor in response to an estimate request from a customer identical to the customer having selected the selected distributor.

Specifically, in the case where the same customer requests for an estimate of the same selectively specified or configured vehicle of a plurality of distributors and the respective distributors input their estimated prices, a distributor that sets the estimated price later tends to set its estimated price to be lower than an estimated price set earlier by another distributor. Therefore, the distributor that sets the estimated price earlier can be improperly disadvantageous in business. According to this embodiment, however, the estimated price input by another distributor in response to the estimate request made by the same customer is not presented, and hence, the problem that a distributor that sets an estimated price earlier is improperly disadvantageous can be minimized.

According to a further preferred embodiment of the invention, the vehicle sales support or configuration system further includes negotiation application accepting means, used when a negotiation application regarding the selectively specified vehicle is received from the customer to which the estimated price has been sent, for sending negotiation application information corresponding to the negotiation application regarding the selectively specified or configured vehicle to the selected distributor selected by the customer, and storing the negotiation application information in the reference information database correspondingly to the preferred specifications or configurations and the estimated price related to the negotiation application, and the reference information providing means reads, from the reference information database, an estimated price and negotiation application information of another distributor regarding a vehicle having the preferred specifications or configurations, and presents, to the selected distributor as reference information, at least the read estimated price and a ratio of a number of times of receiving negotiation application to a total number of times of presenting the same estimated price.

Preferably, the reference information providing means reads, from the reference information database, an estimated price, input by another distributor, of a vehicle having specifications or configurations different from the preferred specifications or configurations to a given or smaller extent, and presents the read estimated price and specification or configuration difference to the selected distributor as reference information.

According to a further preferred embodiment, the reference information database stores market price information of vehicles of brands different from the vehicle whose specifications or configurations are to be selected by the specification or configuration selection means, and the reference information providing means selects, from the market price information of the vehicles of different brands, market price information of a vehicle having specifications or configurations different from the preferred specifications or configurations to a given or smaller extent, and presents the selected market price information of the vehicle of different brand to the selected distributor as reference information.

Preferably, the reference information providing means allows the selected distributor to specify a vehicle of different brand, and is inhibited from presenting, to the selected distributor as reference information, the market price information of vehicles of different brands not specified by the selected distributor.

Further preferably, the market price information of vehicles of different brands is calculated on the basis of prices of used vehicles of different brands to be stored in the reference information database.

The invention is further directed to a vehicle sales support or configuration system for supporting vehicle sales to customers or vehicle configuration by customers online by allowing a customer to select, via communications lines, preferred specifications or configurations from a plurality of specifications or configurations previously set with respect to a vehicle and sending an estimated price of a selectively specified or configured vehicle having the preferred specifications or configurations to the customer in response to an estimate request from the customer.

This vehicle sales support system includes a manufacturer recommended retail price database for storing data for enabling calculation of manufacturer recommended retail prices of vehicles having the plurality of specifications or configurations; a reference information database for storing reference information to be used by each of a plurality of vehicle distributors in examining estimated prices of vehicles having the plurality of specifications or configurations; specification or configuration selection means for presenting the plurality of specifications or configurations of the vehicle to the customer, allowing the customer to select the preferred specifications or configurations from the plurality of specifications or configurations, calculating a manufacturer recommended retail price of the selectively specified or configured vehicle on the basis of the data stored in the manufacturer recommended retail price database, and presenting the calculated manufacturer recommended retail price to the customer; distributor selection means for presenting the plurality of distributors to the customer and allowing the customer to select, from the plurality of distributors, a distributor by which an estimated price of the selectively specified or configured vehicle is desired to be presented; estimated price setting means, used when an estimate request regarding the selectively specified or configured vehicle is received from the customer, for presenting the preferred specifications to the distributor selected by the customer, and allowing the selected distributor to input an estimated price of the selectively specified or configured vehicle; estimated price submit means for sending the estimated price input by the selected distributor to the customer having made the estimate request; and reference information providing means, used when the selected distributor inputs the estimated price, for presenting the reference information read from the reference information database to the selected distributor.

According to this embodiment of the invention, when a customer selects preferred specifications or configurations, the manufacturer recommended retail price of a selectively specified or configured vehicle having the preferred specifications or configurations is presented to the customer. When the customer selects a distributor by which an estimated price of the selectively specified or configured vehicle is desired to be presented and requests for an estimate of the selectively specified or configured vehicle, the preferred specifications or configurations are presented to the distributor selected by the customer. When the selected distributor inputs an estimated price of the selectively specified or configured vehicle, the input estimated price is sent to the customer having made the estimate request. When the selected distributor inputs the estimated price, the reference information to be used for examining an appropriate estimated price, such as an estimated price input by another distributor different from the selected distributor and market price information of vehicles of different brands from the vehicle whose specifications or configurations are to be selected by the present system, is read from the reference information database to be presented to the selected distributor as described previously.

According to a preferred embodiment of the invention, the estimated price setting means stores the estimated price input by the selected distributor in the reference information database correspondingly to the preferred specifications, and the reference information providing means reads, from the reference information database, an estimated price of a vehicle having the preferred specifications or configurations input by another distributor different from the selected distributor, and presents at least the read estimated price to the selected distributor as reference information.

Preferably, the reference information providing means is inhibited from presenting, to the selected distributor as reference information, an estimated price input by another distributor located to be away from the selected distributor by a given distance or more.

Further preferably, the reference information providing means allows the selected distributor to specify another distributor, and is inhibited from presenting, to the selected distributor as reference information, estimated prices input by the other distributors not specified by the selected distributor.

Still further preferably, the reference information providing means is inhibited from presenting, to the selected distributor as reference information, an estimated price input by another distributor in response to an estimate request made by a customer identical to the customer having selected the selected distributor.

According to a further preferred embodiment, the vehicle sales support or configuration system further includes negotiation application accepting means, used when a negotiation application regarding the selectively specified vehicle is received from the customer to which the estimated price has been sent, for sending negotiation application information corresponding to the negotiation application regarding the selectively specified or configured vehicle to the selected distributor, and storing the negotiation application information in the reference information database correspondingly to the preferred specifications or configurations and the estimated price related to the negotiation application, and the reference information providing means reads, from the reference information database, an estimated price and negotiation application information of another distributor regarding a vehicle having the preferred specifications or configurations, and presents, to the selected distributor as reference information, at least the read estimated price and a ratio of a number of times of receiving negotiation application to a total number of times of presenting the same estimated price.

Preferably, the reference information providing means reads, from the reference information database, an estimated price, input by another distributor, of a vehicle having specifications or configurations different from the preferred specifications or configurations to a given or smaller extent, and presents the read estimated price and specification or configuration difference to the selected distributor as reference information.

Preferably, the reference information database stores market price information of vehicles of brands different from the vehicle whose specifications or configurations are to be selected by the specification or configuration selection means, and the reference information providing means selects, from the market price information of the vehicles of different brands, market price information of a vehicle having specifications or configurations different from the preferred specifications or configurations to a given or smaller extent, and presents the selected market price information to the selected distributor as reference information.

Further preferably, the reference information providing means allows the selected distributor to specify a vehicle of different brand, and is inhibited from presenting, to the selected distributor as reference information, market price information of the vehicles of different brands not specified by the selected distributor.

Still further preferably, the market price information of vehicles of different brands is calculated on the basis of prices of used vehicles of different brands to be stored in the reference information database.

According toa further preferred embodiment of the invention, the vehicle sales support or configuration system further includes an estimated price database for storing estimated prices of vehicles having the plurality of specifications or configurations set by each of the plurality of distributors, and when an estimate request regarding the selectively specified or configured vehicle selected by the customer is received from the customer, the estimated price setting means presents, to the selected distributor selected by the customer, the preferred specifications or configurations and the estimated price of the selectively specified vehicle, set by the selected distributor, read from the estimated price database.

In this manner, the selected distributor can refer also to the estimated price previously set to be stored in the estimated price database in setting an estimated price, and therefore, an estimated price of the selectively specified or configured vehicle can be more easily set.

The invention is further directed to a vehicle sales support or configuration program for controlling a vehicle sales support or configuration apparatus for supporting vehicle sales to customers or vehicle configuration by customers online by allowing a customer to select, via communications lines, preferred specifications or configurations from a plurality of specifications previously set with respect to a vehicle and sending an estimated price of a selectively specified or configured vehicle having the preferred specifications or configurations to the customer in response to an estimate request from the customer.

In this embodiment, the vehicle sales support or configuration apparatus includes a manufacturer recommended retail price database for storing data for enabling calculation of manufacturer recommended retail prices of vehicles having the plurality of specifications or configurations; a reference information database for storing reference information to be used by each of a plurality of vehicle distributors in examining estimated prices of vehicles having the plurality of specifications or configurations; and an estimated price database for storing the estimated prices of vehicles having the plurality of specifications or configurations set by each of the plurality of distributors.

This vehicle sales support or configuration program makes the vehicle sales support or configuration apparatus execute specification or configuration selection processing for presenting the plurality of specifications or configurations of the vehicle to the customer, allowing the customer to select the preferred specifications or configurations from the plurality of specifications or configurations, calculating a manufacturer recommended retail price of the selectively specified or configured vehicle on the basis of the data stored in the manufacturer recommended retail price database and presenting the calculated manufacturer recommended retail price to the customer; distributor selection processing for presenting the plurality of distributors to the customer and allowing the customer to select, from the plurality of distributors, a distributor by which an estimated price of the selectively specified or configured vehicle is desired to be presented; estimated price submit processing, performed when an estimate request regarding the selectively specified vehicle is received from the customer, for reading an estimated price of the selectively specified or configured vehicle set by the distributor selected by the customer, and sending the read estimated price to the customer having made the estimate request; estimated price setting processing, performed in response to an estimated price update request from any of the plurality of distributors, for presenting, to the distributor, an estimated price, set by the distributor, of a vehicle having specifications or configurations related to the update request read from the estimated price database, allowing the distributor to input a new estimated price of the vehicle having the specifications or configurations related to the update request, and storing the new estimated price for updating the estimated price database as an estimated price to be sent to a customer by the estimated price submit processing when the distributor is selected by the customer; and reference information providing processing, performed when the distributor having made the update request inputs the new estimated price, for presenting the reference information read from the reference information database to the distributor having made the update request.

According to a preferred embodiment of the invention, in the estimated price setting processing, the new estimated price input by the distributor having made the update request is stored for updating the estimated price database and the new estimated price is stored in the reference information database correspondingly to the specifications related to the update request, and in the reference information providing processing, an estimated price of a vehicle having the specifications or configurations related to the update request input by a distributor other than the distributor having made update request is read from the reference information database, and at least the read estimated price is presented to the distributor having made the update request as reference information.

Preferably, the vehicle sales support or configuration apparatus is made to further execute negotiation application accepting processing, performed when a negotiation application regarding the selectively specified or configured vehicle is received from the customer to which the estimated price has been sent, for sending negotiation application information corresponding to the negotiation application regarding the selectively specified vehicle to the distributor selected by the customer, and storing the negotiation application information in the reference information database correspondingly to the preferred specifications or configurations and the estimated price related to the negotiation application, and in the reference information providing processing, an estimated price and negotiation application information of another distributor regarding a vehicle having the specifications or configurations related to the update request are read from the reference information database, and at least the estimated price and a ratio of a number of times of receiving negotiation applications to a total number of times of presenting the same estimated price are presented to the distributor having made the update request as reference information.

Further preferably, in the reference information providing processing, an estimated price, input by another distributor, of a vehicle having specifications or configurations different from the specifications or configurations related to the update request to a given or smaller extent is read from the reference information database, and the read estimated price and specification or configuration difference are presented to the distributor having made the update request as reference information.

Still further preferably, the reference information database stores market price information of vehicles of brands different from the vehicle whose specifications or configurations are to be selected by the specification or configuration selection processing, and in the reference information providing processing, market price information of a vehicle having specifications or configurations different from the specifications related to the update request to a given or smaller extent is selected from the market price information of the vehicles of different brands, and the selected market price information is presented to the distributor having made the update request as reference information.

The invention is further directed to a vehicle sales support or configuration program for controlling a vehicle sales support or configuration apparatus for supporting vehicle sales to customers or vehicle configuration by customers online by allowing a customer to select, via communications lines, preferred specifications or configurations from a plurality of specifications or configurations previously set with respect to a vehicle and sending an estimated price of a selectively specified or configured vehicle having the preferred specifications or configurations to the customer in response to an estimate request from the customer.

This vehicle sales support or configuration apparatus includes a manufacturer recommended retail price database for storing data for enabling calculation of manufacturer recommended retail prices of vehicles having the plurality of specifications or configurations; a reference information database for storing reference information to be used by each of a plurality of vehicle distributors in examining estimated prices of vehicles having the plurality of specifications or configurations; and an estimated price database for storing the estimated prices of the vehicles having the plurality of specifications or configurations set by each of the plurality of distributors.

This vehicle sales support or configuration program makes the vehicle sales support or configuration apparatus execute specification or configuration selection processing for presenting the plurality of specifications or configurations of the vehicle to the customer, allowing the customer to select the preferred specifications or configurations from the plurality of specifications or configurations, calculating a manufacturer recommended retail price of the selectively specified or configured vehicle on the basis of the data stored in the manufacturer recommended retail price database, and presenting the calculated manufacturer recommended retail price to the customer; distributor selection processing for presenting the plurality of distributors to the customer and allowing the customer to select, from the plurality of distributors, a distributor by which an estimated price of the selectively specified vehicle is desired to be presented; estimated price setting processing, performed when an estimate request regarding the selectively specified vehicle is received from the customer, for presenting, to the selected distributor, the preferred specifications or configurations and an estimated price of the selectively specified or configured vehicle, set by the selected distributor, read from the estimated price database, allowing the selected distributor to input a new estimated price of the selectively specified or configured vehicle, and storing the new estimated price as an estimated price of the selectively specified or configured vehicle set by the selected distributor for updating the estimated price database; estimated price submit processing for reading, from the estimated price database, the estimated price of the selectively specified vehicle, set by the selected distributor, that has been stored for update by the estimated price setting processing, and sending the read estimated price to the customer having made the estimate request; and reference information providing processing, performed when the selected distributor inputs the estimated price, for presenting the reference information read from the reference information database to the selected distributor.

According to a preferred embodiment of the invention, in the estimated price setting processing, the new estimated price input by the selected distributor is stored for updating the estimated price database, and the new estimated price is stored in the reference information database correspondingly to the preferred specifications or configurations, and in the reference information providing processing, an estimated price of a vehicle having the preferred specifications or configurations input by another distributor different from the selected distributor is read from the reference information database, and at least the read estimated price is presented to the selected distributor as reference information.

Preferably, in the reference information providing processing, an estimated price input by another distributor in response to an estimate request from a customer identical to the customer having selected the selected distributor is inhibited from being presented to the selected distributor as reference information.

Further preferably, the vehicle sales support or configuration apparatus is made to further execute negotiation application accepting processing, performed when a negotiation application regarding the selectively specified vehicle is received from the customer to which the estimated price has been sent, for sending negotiation application information corresponding to the negotiation application regarding the selectively specified vehicle to the selected distributor selected by the customer, and storing the negotiation application information in the reference information database correspondingly to the preferred specifications or configurations and the estimated price related to the negotiation application, and in the reference information providing processing, an estimated price and negotiation application information of another distributor regarding a vehicle having the preferred specifications or configurations are read from the reference information database, and at least the read estimated price and a ratio of a: number of times of receiving negotiation application to a total number of times of presenting the same estimated price are presented to the selected distributor as reference information.

Still further preferably, in the reference information providing processing, an estimated price, input by another distributor, of a vehicle having specifications or configurations different from the preferred specifications or configurations to a given or smaller extent is read from the reference information database, and the read estimated price and specification or configuration difference are presented to the selected distributor as reference information.

According to a further preferred embodiment, the reference information database stores market price information of vehicles of brands different from the vehicle whose specifications or configurations are to be selected by the specification or configuration selection processing, and in the reference information providing processing, market price information of a vehicle having specifications or configurations different from the preferred specifications or configurations to a given or smaller extent is selected from the market price information of the vehicles of different brands, and the selected market price information of the vehicle of different brand is presented to the selected distributor as reference information.

The invention is further directed to a vehicle sales support or configuration program for controlling a vehicle sales support or configuration apparatus for supporting vehicle sales to customers or vehicle configuration by customers online by allowing a customer to select, via communications lines, preferred specifications or configurations from a plurality of specifications or configurations previously set with respect to a vehicle and sending an estimated price of a selectively specified vehicle having the preferred specifications or configurations to the customer in response to an estimate request from the customer.

This vehicle sales support or configuration apparatus includes a manufacturer recommended retail price database for storing data for enabling calculation of manufacturer recommended retail prices of vehicles having the plurality of specifications or configurations; and a reference information database for storing reference information to be used by each of a plurality of vehicle distributors in examining estimated prices of vehicles having the plurality of specifications or configurations.

This vehicle sales support program makes the vehicle sales support or configuration apparatus execute specification selection processing for presenting the plurality of specifications or configurations of the vehicle to the customer, allowing the customer to select the preferred specifications or configurations from the plurality of specifications or configurations, calculating a manufacturer recommended retail price of the selectively specified or configured vehicle on the basis of the data stored in the manufacturer recommended retail price database, and presenting the calculated manufacturer recommended retail price to the customer; distributor selection processing for presenting the plurality of distributors to the customer and allowing the customer to select, from the plurality of distributors, a distributor by which an estimated price of the selectively specified or configured vehicle is desired to be presented; estimated price setting processing, performed when an estimate request regarding the selectively specified or configured vehicle is received from the customer, for presenting the preferred specifications or configurations to the distributor selected by the customer, and allowing the selected distributor to input an estimated price of the selectively specified or configured vehicle; estimated price submit processing for sending the estimated price input by the selected distributor to the customer having made the estimate request; and reference information providing processing, performed when the selected distributor inputs the estimated price, for presenting the reference information read from the reference information database to the selected distributor.

According to a preferred embodiment of the invention, in the estimated price setting processing, the estimated price input by the selected distributor is stored in the reference information database correspondingly to the preferred specifications or configurations, and in the reference information providing processing, an estimated price of a vehicle having the preferred specifications or configurations input by another distributor different from the selected distributor is read from the reference information database, and at least the read estimated price is presented to the selected distributor as reference information.

Preferably, in the reference information providing processing, an estimated price input by another distributor in response to an estimate request made by a customer identical to the customer having selected the selected distributor is inhibited from being presented to the selected distributor as reference information.

Further preferably, the vehicle sales support or configuration apparatus is made to further execute negotiation application accepting processing, performed when a negotiation application regarding the selectively specified or configured vehicle is received from the customer to which the estimated price has been sent, for sending negotiation application information corresponding to the negotiation application regarding the selectively specified or configured vehicle to the selected distributor, and storing the negotiation application information in the reference information database correspondingly to the preferred specifications or configurations and the estimated price related to the negotiation application, and in the reference information providing processing, an estimated price and negotiation application information of another distributor regarding a vehicle having the preferred specifications or configurations are read from the reference information database, and at least the read estimated price and a ratio of a: number of times of receiving negotiation applications to a total number of times of presenting the same estimated price are presented to the selected distributor as reference information.

Preferably, in the reference information providing processing, an estimated price, input by another distributor, of a vehicle having specifications or configurations different from the preferred specifications or configurations to a given or smaller extent is read from the reference information database, and the read estimated price and specification or configuration difference are presented to the selected distributor as reference information.

Still further preferably, the reference information database stores market price information of vehicles of brands different from the vehicle whose specifications or configurations are to be selected by the specification selection processing, and in the reference information providing processing, market price information of a vehicle having specifications or configurations different from the preferred specifications or configurations to a given or smaller extent is selected from the market price information of the vehicles of different brands, and the selected market price information is presented to the selected distributor as reference information.

Most preferably, the vehicle sales support apparatus further includes an estimated price database for storing estimated prices of vehicles having the plurality of specifications set by each of the plurality of distributors, and in the estimated price setting processing, when an estimate request regarding the selectively specified vehicle selected by the customer is received from the customer, the preferred specifications and the estimated price of the selectively specified vehicle, set by the selected distributor, read from the estimated price database are presented to the selected distributor selected by the customer.

The invention is further directed to a vehicle sales support or configuration method for supporting vehicle sales to customers or vehicle configuration by customers online by allowing a customer to select, via communications lines, preferred specifications or configurations from a plurality of specifications or configurations previously set with respect to a vehicle and sending an estimated price of a selectively specified or configured vehicle having the preferred specifications or configurations to the customer in response to an estimate request from the customer.

In this aspect, a manufacturer recommended retail price database for storing data for enabling calculation of manufacturer recommended retail prices of vehicles having the plurality of specifications or configurations, a reference information database for storing reference information to be used by each of a plurality of vehicle distributors in examining estimated prices of vehicles having the plurality of specifications or configurations and an estimated price database for storing the estimated prices of vehicles having the plurality of specifications set by each of the plurality of distributors are previously prepared, and the method includes a specification selection step of presenting the plurality of specifications or configurations of the vehicle to the customer, allowing the customer to select the preferred specifications or configurations from the plurality of specifications or configurations, calculating a manufacturer recommended retail price of the selectively specified or configured vehicle on the basis of the data stored in the manufacturer recommended retail price database and presenting the calculated manufacturer recommended retail price to the customer; a distributor selection step of presenting the plurality of distributors to the customer and allowing the customer to select, from the plurality of distributors, a distributor by which an estimated price of the selectively specified or configured vehicle is desired to be presented; an estimated price submitting step, performed when an estimate request regarding the selectively specified or configured vehicle is received from the customer, of reading an estimated price of the selectively specified or configured vehicle set by the distributor selected by the customer, and sending the read estimated price to the customer having made the estimate request; an estimated price setting step, performed in response to an estimated price update request from any of the plurality of distributors, of presenting, to the distributor, an estimated price, set by the distributor, of a vehicle having specifications or configurations related to the update request read from the estimated price database, allowing the distributor to input a new estimated price of the vehicle having the specifications or configurations related to the update request, and storing the new estimated price for updating the estimated price database as an estimated price to be sent to a customer in the estimated price submitting step when the distributor is selected by the customer; and a reference information providing step, performed when the distributor having made the update request inputs the new estimated price, of presenting the reference information read from the reference information database to the distributor having made the update request.

According toa preferred embodiment of the invention, in the estimated price setting step, the new estimated price input by the distributor having made the update request is stored for updating the estimated price database and the new estimated price is stored in the reference information database correspondingly to the specifications related to the update request, and in the reference information providing step, an estimated price of a vehicle having the specifications or configurations related to the update request input by a distributor other than the distributor having made update request is read from the reference information database, and at least the read estimated price is presented to the distributor having made the update request as reference information.

Preferably, the vehicle sales support or configuration method further includes a negotiation application accepting step, performed when a negotiation application regarding the selectively specified or configured vehicle is received from the customer to which the estimated price has been sent, of sending negotiation application information corresponding to the negotiation application regarding the selectively specified or configured vehicle to the distributor selected by the customer, and storing the negotiation application information in the reference information database correspondingly to the preferred specifications or configurations and the estimated price related to the negotiation application, and in the reference information providing step, an estimated price and negotiation application information of another distributor regarding a vehicle having the specifications or configurations related to the update request are read from the reference information database, and at least the estimated price and a ratio of a number of times of receiving negotiation applications to a total number of times of presenting the same estimated price are presented to the distributor having made the update request as reference information.

Preferably, in the reference information providing step, an estimated price, input by another distributor, of a vehicle having specifications or configurations different from the specifications or configurations related to the update request to a given or smaller extent is read from the reference information database, and the read estimated price and specification or configuration difference are presented to the distributor having made the update request as reference information.

According to a further preferred embodiment, the reference information database stores market price information of vehicles of brands different from the vehicle whose specifications or configurations are to be selected in the specification or configuration selection step, and in the reference information providing step, market price information of a vehicle having specifications or configurations different from the specifications or configurations related to the update request to a given or smaller extent is selected from the market price information of the vehicles of different brands, and the selected market price information is presented to the distributor having made the update request as reference information.

The the invention is further directed to a vehicle sales support or configuration method for supporting vehicle sales to customers or vehicle configuration by customers online by allowing a customer to select, via communications lines, preferred specifications or configurations from a plurality of specifications or configurations previously set with respect to a vehicle and sending an estimated price of a selectively specified or configured vehicle having the preferred specifications or configurations to the customer in response to an estimate request from the customer.

In this embodiment, a manufacturer recommended retail price database for storing data for enabling calculation of manufacturer recommended retail prices of vehicles having the plurality of specifications or configurations, a reference information database for storing reference information to be used by each of a plurality of vehicle distributors in examining estimated prices of vehicles having the plurality of specifications or configurations, and an estimated price database for storing the estimated prices of the vehicles having the plurality of specifications or configurations set by each of the plurality of distributors are previously prepared, and the method includes a specification or configuration selection step of presenting the plurality of specifications or configurations of the vehicle to the customer, allowing the customer to select the preferred specifications or configurations from the plurality of specifications or configurations, calculating a manufacturer recommended retail price of the selectively specified or configured vehicle on the basis of the data stored in the manufacturer recommended retail price database, and presenting the calculated manufacturer recommended retail price to the customer; a distributor selection step of presenting the plurality of distributors to the customer and allowing the customer to select, from the plurality of distributors, a distributor by which an estimated price of the selectively specified or configured vehicle is desired to be presented; an estimated price setting step, performed when an estimate request regarding the selectively specified or configured vehicle is received from the customer, of presenting, to the selected distributor, the preferred specifications or configurations and an estimated price of the selectively specified or configured vehicle, set by the selected distributor, read from the estimated price database, allowing the selected distributor to input a new estimated price of the selectively specified or configured vehicle, and storing the new estimated price as an estimated price of the selectively specified or configured vehicle set by the selected distributor for updating the estimated price database; an estimated price submitting step of reading, from the estimated price database, the estimated price of the selectively specified or configured vehicle, set by the selected distributor, that has been stored for update in the estimated price setting step, and sending the read estimated price to the customer having made the estimate request; and a reference information providing step, performed when the selected distributor inputs the estimated price, of presenting the reference information read from the reference information database to the selected distributor.

According to a preferred embodiment of the invention, in the estimated price setting step, the new estimated price input by the selected distributor is stored for updating the estimated price database, and the new estimated price is stored in the reference information database correspondingly to the preferred specifications or configurations, and in the reference information providing step, an estimated price of a vehicle having the preferred specifications or configurations input by another distributor different from the selected distributor is read from the reference information database, and at least the read estimated price is presented to the selected distributor as reference information.

Preferably, in the reference information providing step, an estimated price input by another distributor in response to an estimate request from a customer identical to the customer having selected the selected distributor is inhibited from being presented to the selected distributor as reference information.

Further preferably, the vehicle sales support or configuration method further includes a negotiation application accepting step, performed when a negotiation application regarding the selectively specified or configured vehicle is received from the customer to which the estimated price has been sent, of sending negotiation application information corresponding to the negotiation application regarding the selectively specified or configured vehicle to the selected distributor selected by the customer, and storing the negotiation application information in the reference information database correspondingly to the preferred specifications or configurations and the estimated price related to the negotiation application, and in the reference information providing step, an estimated price and negotiation application information of another distributor regarding a vehicle having the preferred specifications or configurations are read from the reference information database, and at least the read estimated price and a ratio of a number of times of receiving negotiation applications to a total number of times of presenting the same estimated price are presented to the selected distributor as reference information.

Preferably, in the reference information providing step, an estimated price, input by another distributor, of a vehicle having specifications different from the preferred specifications or configurations to a given or smaller extent is read from the reference information database, and the read estimated price and specification or configuration difference are presented to the selected distributor as reference information.

Most preferably, the reference information database stores market price information of vehicles of brands different from the vehicle whose specifications or configurations are to be selected in the specification or configuration selection step, and in the reference information providing step, market price information of a vehicle having specifications or configurations different from the preferred specifications or configurations to a given or smaller extent is selected from the market price information of the vehicle of different brands, and the selected market price information of the vehicle of different brand is presented to the selected distributor as reference information.

The invention is further directed to a vehicle sales support or configuration method for supporting vehicle sales to customers or vehicle configuration by customers online by allowing a customer to select, via communications lines, preferred specifications or configurations from a plurality of specifications or configurations previously set with respect to a vehicle and sending an estimated price of a selectively specified or configured vehicle having the preferred specifications or configurations to the customer in response to an estimate request from the customer.

In this embodiment, a manufacturer recommended retail price database for storing data for enabling calculation of manufacturer recommended retail prices of vehicles having the plurality of specifications or configurations, and a reference information database for storing reference information to be used by each of a plurality of vehicle distributors in examining estimated prices of vehicles having the plurality of specifications or configurations are previously prepared, and the method includes a specification or configuration selection step of presenting the plurality of specifications or configurations of the vehicle to the customer, allowing the customer to select the preferred specifications or configurations from the plurality of specifications or configurations, calculating a manufacturer recommended retail price of the selectively specified or configured vehicle on the basis of the data stored in the manufacturer recommended retail price database, and presenting the calculated manufacturer recommended retail price to the customer; a distributor selection step of presenting the plurality of distributors to the customer and allowing the customer to select, from the plurality of distributors, a distributor by which an estimated price of the selectively specified or configured vehicle is desired to be presented; an estimated price setting step, performed when an estimate request regarding the selectively specified or configured vehicle is received from the customer, of presenting the preferred specifications or configurations to the distributor selected by the customer, and allowing the selected distributor to input an estimated price of the selectively specified or configured vehicle; an estimated price submitting step of sending the estimated price input by the selected distributor to the customer having made the estimate request; and a reference information providing step, performed when the selected distributor inputs the estimated price, of presenting the reference information read from the reference information database to the selected distributor.

According to a preferred embodiment of the invention, in the estimated price setting step, the estimated price input by the selected distributor is stored in the reference information database correspondingly to the preferred specifications, and in the reference information providing step, an estimated price of a vehicle having the preferred specifications or configurations input by another distributor different from the selected distributor is read from the reference information database, and at least the read estimated price is presented to the selected distributor as reference information.

Preferably, in the reference information providing step, an estimated price input by another distributor in response to an estimate request made by a customer identical to the customer having selected the selected distributor is inhibited from being presented to the selected distributor as reference information.

Further preferably, the vehicle sales support or configuration method further includes a negotiation application accepting step, performed when a negotiation application regarding the selectively specified vehicle is received from the customer to which the estimated price has been sent, of sending negotiation application information corresponding to the negotiation application regarding the selectively specified vehicle to the selected distributor, and storing the negotiation application information in the reference information database correspondingly to the preferred specifications or configurations and the estimated price related to the negotiation application, and in the reference information providing step, an estimated price and negotiation application information of another distributor regarding a vehicle having the preferred specifications or configurations are read from the reference information database, and at least the read estimated price and a ratio of a number of times of receiving negotiation applications to a total number of times of presenting the same estimated price are presented to the selected distributor as reference information.

Further preferably, in the reference information providing step, an estimated price, input by another distributor, of a vehicle having specifications different from the preferred specifications to a given or smaller extent is read from the reference information database, and the read estimated price and specification or configuration difference are presented to the selected distributor as reference information.

Still further preferably, the reference information database stores market price information of vehicles of brands different from the vehicle whose specifications or configurations are to be selected in the specification or configuration selection step, and in the reference information providing step, market price information of a vehicle having specifications or configurations different from the preferred specifications or configurations to a given or smaller extent is selected from the market price information of the vehicles of different brands, and the selected market price information is presented to the selected distributor as reference information.

Most preferably, an estimated price database for storing estimated prices of vehicles having the plurality of specifications set by each of the plurality of distributors is previously prepared in addition to the manufacturer recommended retail price database and the reference information database, and in the estimated price setting step, when an estimate request regarding the selectively specified or configured vehicle selected by the customer is received from the customer, the preferred specifications or configurations and the estimated price of the selectively specified vehicle, set by the selected distributor, read from the estimated price database are presented to the selected distributor selected by the customer.

### BRIEF DESCRIPTION OF THE DRAWINGS

FIG **1** is a conceptual diagram for showing the whole structure of a customized vehicle estimate/order or configuration system according to Embodiment 1 of the invention;
FIG **2** is a block diagram for showing an exemplified internal structure of a manufacturer server, a dealer server, a dealer terminal or a user terminal;
FIG **3** is a diagram for showing a functional architecture of processing modules executed in the customized vehicle estimate/order or configuration system;
FIG **4** is a diagram for showing transition of display windows in initial processing (M1) and vehicle specification or configuration selection processing (M2);
FIG **5** is a diagram for showing transition of display windows in estimate/assessment request processing (M3) and an e-mail sending function involved in estimate/assessment request;
FIG **6** is a diagram for showing transition of display windows in estimate items confirmation processing (M4);
FIG **7** is a diagram for showing transition of display windows in negotiation application processing (M5) and an e-mail sending function involved in negotiation application;
FIG **8** is a flowchart for showing entire rough procedures executed by the manufacturer server;
FIG **9** is a flowchart of the vehicle specification or configuration selection processing (M2) executed by the manufacturer server;
FIG **10** is a flowchart of the estimate/assessment request processing (M3) executed by the manufacturer server;
FIG **11** is a flowchart of the estimate items confirmation processing (M4) executed by the manufacturer server;
FIG **12** is a diagram of an exemplified top window **A-1** corresponding to a homepage window;
FIG **13** is a diagram of an exemplified home window **A-2**;
FIG **14** is a diagram of an exemplified format of vehicle specification selection windows (**B-1** through **B-15**) displayed in the vehicle specification or configuration selection processing (M2);
FIG **15** is a diagram of an exemplified window of details of a manufacturer recommended retail price displayed when a "detail" button of FIG **14** is operated;
FIG **16** is a diagram of an exemplified selected specification display window **B-15** displayed in the vehicle specification or configuration selection processing (M2);
FIG **17** is a diagram of an exemplified estimate request top window **C-1**;
FIG **18** is a diagram of an exemplified assessment request input window **C-2**;
FIG **19** is a diagram of an exemplified ID/password input window **D-1**;
FIG **20** is a diagram of an exemplified purchase review information list window **D-2**;
FIG **21** is a diagram of an exemplified estimate items confirmation window **D-3**;
FIG **22** is a diagram of an exemplified negotiation application input window **F-1**;
FIG **23** is a diagram of an exemplified questionnaire input window;
FIG **24** is a diagram of an exemplified specification or configuration selection initial window;
FIG **25** is a diagram of an exemplified warning window;
FIG **26** is a flowchart of the estimate/assessment processing executed by the dealer server;
FIG **27** is a flowchart for showing a part of an estimate response input window display subroutine;
FIG **28** is a flowchart for showing another part of the estimate response input window display subroutine;
FIG **29** is a flowchart for showing still another part of the estimate response input window display subroutine;
FIG **30** is a flowchart for showing still another part of the estimate response input window display subroutine;
FIG **31** is a flowchart for showing a first half of a reference information display subroutine using access history;
FIG **32** is a flowchart for showing a second half of the reference information display subroutine using access history;
FIG **33** is a diagram of an exemplified estimate input window displayed on the dealer terminal;
FIG **34** is a graph for showing distribution of estimated prices;
FIG **35** is a rough diagram for showing principal points after an estimate request in Embodiment 1;
FIG **36** is a diagram for showing principal points after an estimate request in a modification of Embodiment 1;
FIG **37** is a conceptual diagram for showing the whole structure of a customized vehicle estimate/order or configuration system according to Embodiment 2 of the invention;
FIG **38** is a flowchart of estimated price providing processing executed by a manufacturer server;
FIG **39** is a flowchart of update processing for an estimated price DB executed by the manufacturer server;
FIG **40** is a flowchart for showing a part of an update subroutine;
FIG **41** is a flowchart for showing another part of the update subroutine;
FIG **42** is a flowchart for showing still another part of the update subroutine;
FIG **43** is a flowchart for showing a first half of an input reference information display subroutine;
FIG **44** is a flowchart for showing a second half of the input reference information display subroutine;
FIG **45** is a diagram of an exemplified estimated price list window;
FIG **46** is a rough diagram for showing principal points after an estimate request in Embodiment 2; and
FIG **47** is a diagram for showing principal points after an estimate request in a modification of Embodiment 2.

### DETAILED DESCRIPTION OF THE INVENTION

Now, preferred embodiments of the invention will be described with reference to the accompanying drawings. Herein, a customized vehicle means a vehicle having optional specifications or configurations determined, by utilizing a vehicle sales support system of the invention (which is designated as a customized vehicle estimate/order system in this embodiment), by a user (hereinafter sometimes referred to as a customer) selecting one of a plurality of optional specifications or configurations with respect to each of a plurality of items (such as an engine, transmission, tires, wheels and interior) on the basis of a standard vehicle (base vehicle) having predetermined specifications or configurations and equipment. In other words, different specifications or configurations in number corresponding to the number of combinations of the optional specifications or configurations of the plural items are set with respect to a vehicle sold by using the present system (namely, a vehicle whose specifications can be selected by using the present system), and a customized vehicle corresponds to a vehicle having optional specifications or configurations selected from the plural specifications or configurations by a user.

### EMBODIMENT 1

### - Whole structure of hardware -

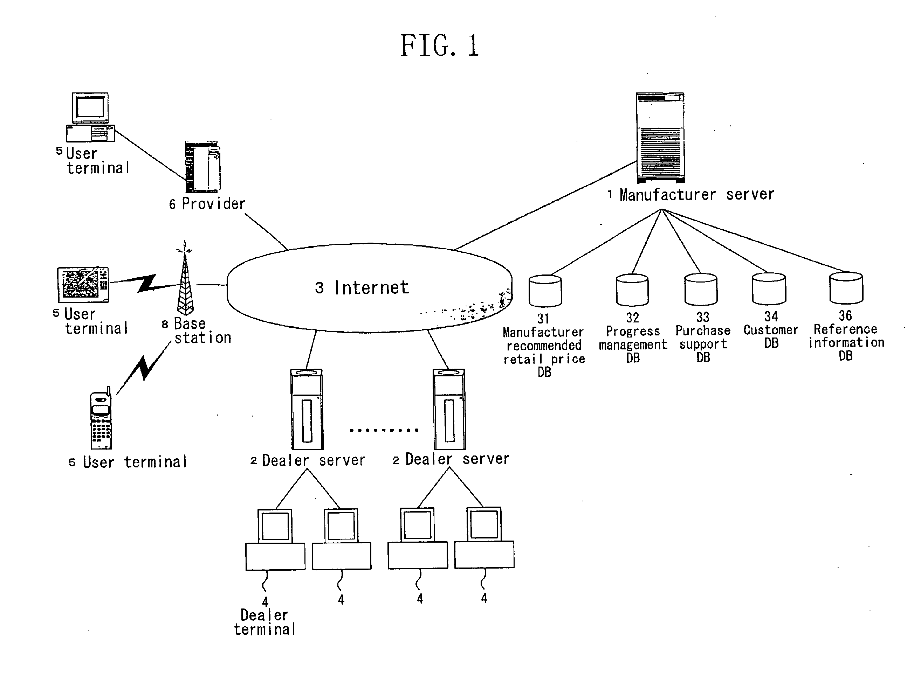

FIG **1** is a conceptual diagram for showing the whole structure of the customized vehicle estimate/order or configurations system used for supporting vehicle sales and/or configuration to customers online.

In FIG **1**, a reference numeral **1** denotes a server computer used by a manufacturer manufacturing a customized vehicle that is selected in specifications or configurations and is ordered by using the customized vehicle estimate/order or configuration system. This server computer **1** principally functions as an application server for a dealer terminal **4** or a user terminal **5** (that is a customer terminal operated by a customer) described below. This server computer may be installed in the manufacturer or operated outside the manufacturer by a third party for the manufacturer, and hereinafter, this server computer is designated as the manufacturer server.

The manufacturer server **1** includes a manufacturer recommended retail price database **31** (hereinafter, database is designated as DB for short), a progress management DB **32**, a purchase support DB **33**, a customer DB **34** and a reference information DB **36**, and can make an access by a general method to any of these DBs if necessary during its operation.

In the manufacturer recommended retail price DB **31**, data with which retail prices recommended by the manufacturer (namely, manufacture recommended retail prices) can be calculated are stored with respect to optional specifications or configurations selectable for a customized vehicle in association with identification information (customize numbers) for specifying the respective specifications or configurations.

In the progress management DB **32**, progress situations ranging from manufacture to delivery of customized vehicles ordered by using the present system, such as a stock situation, an assembly situation (manufacture situation) and a conveyance situation, are stored with respect to each customized vehicle. The contents of the progress management DB **32** are manually or automatically changed/updated in order.

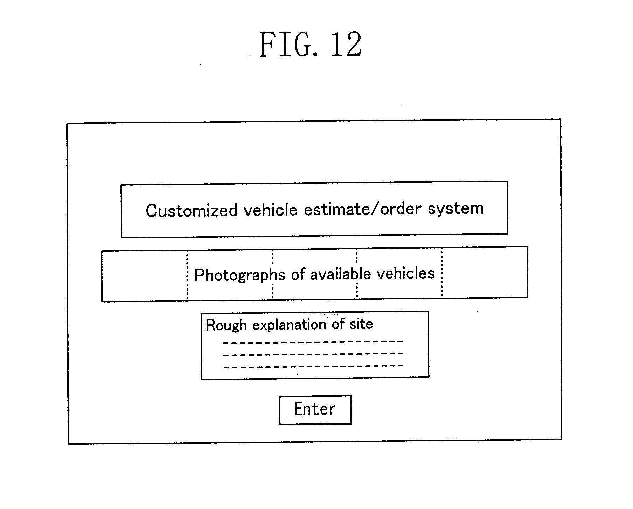

In the purchase support DB **33,** various windows (shown in FIGS. **12** through **25**) to be displayed on the user terminal **5** in the customized vehicle estimate/order system and information of vehicles having respective specifications or configurations (purchase support information) are stored.

In the customer DB **34,** information of a customized vehicle already selected by each user by using the present system, an estimated price of the customized vehicle presented to the user and assessment of a trade-in vehicle presented to the user are stored in association with a user ID issued to each user. Also, personal information (an address, an e-mail address and the like) input by each user in the present system, information obtained when the user previously purchased a vehicle (such as estimate information, time of purchase, a type of purchased vehicle and the like), information of onerous service provided to the user by a dealer described below, and access history information of accesses made by the user online to the manufacturer server **1** for specification or configuration selection or an estimate request described later are also stored in association with the user ID. The information regarding users stored in the customer DB **34** are provided to a dealer as reference information to be used by the dealer for setting an estimated price similarly to information stored in the reference information DB **36** described below, and hence, the customer DB **34** also plays a similar roll to the reference information DB **36**.

In the reference information DB **36**, market price information of vehicles of brands different from that of the vehicle whose specification or configurations s are to be selected by using the present system are stored. The market price information of the different brand vehicles are calculated on the basis of prices of used vehicles of the brands to be stored in the reference information DB **36**. Also, estimated prices input by each dealer are stored in the reference information DB **36** correspondingly to the specifications or configurations selected by a user as described below. Furthermore, when the user applies for negotiations, negotiation application information is stored in the reference information DB **36** correspondingly to the specifications and the estimated price related to the negotiation application. In addition, reference information other than those related to the user (that are stored in the customer DB **34**) are also stored in the reference information DB **36**. The negotiation application information and the specifications and the estimated price related to the negotiation application are also stored in the customer DB **34** correspondingly to the user ID.

In FIG **1**, a reference numeral **2** denotes a server computer installed in each of a plurality of dealers (distributors) for selling vehicles (hereinafter referred to as the dealer server). This server computer has a function as a server of a LAN (Local Area Network) constructed in each dealer, and the function as the server includes a function as a gateway for mutually connecting the LAN and internet **3** described below. Although the dealer is a distributor for selling vehicles in this embodiment, it may be a vehicle sales company, a shop of a vehicle sales company or a sales agent in private capacity.

Also, a reference numeral **4** denotes a client computer installed in each dealer (which is designated as the dealer terminal as described above) and operated by a person in charge of the dealer. The dealer terminal **4** and the dealer server **2** together construct what is called a server-client environment in the LAN constructed in the dealer.

The dealer terminal **4** can make an access to the manufacturer server 1 through the dealer server **2** and the internet **3** if necessary during the operation thereof as described below. With the dealer terminal **4** thus connected to (logged in) the manufacturer server **1**, the dealer terminal **4** and the manufacturer server **1** together construct the so-called server-client environment.

A reference numeral **3** denotes the internet, that is, typical communications lines. A reference numeral **5** denotes a user terminal such as a personal computer, a portable information terminal and a cellular phone. The user terminal **5** is operated by a user of the present system, and may be installed in the user's house, carried by the user or installed in each dealer.

In this structure, the manufacturer server **1**, the dealer server **2**, the dealer terminal **4** and the user terminal **5** can perform two-way communications via the internet **3** by a general communication scheme for sending/receiving information on the estimate/order of a customized vehicle. At this point, in the case where the user terminal **5** is a personal computer, telephone lines and the like are also used via a provider (internet provider) **6**. Alternatively, in the case where the user terminal **5** is a portable information terminal or a cellular phone, public radio telephone lines and the like are also used via a base station **8**. Such communication means may adopt general arrangements and is herein not described in detail.

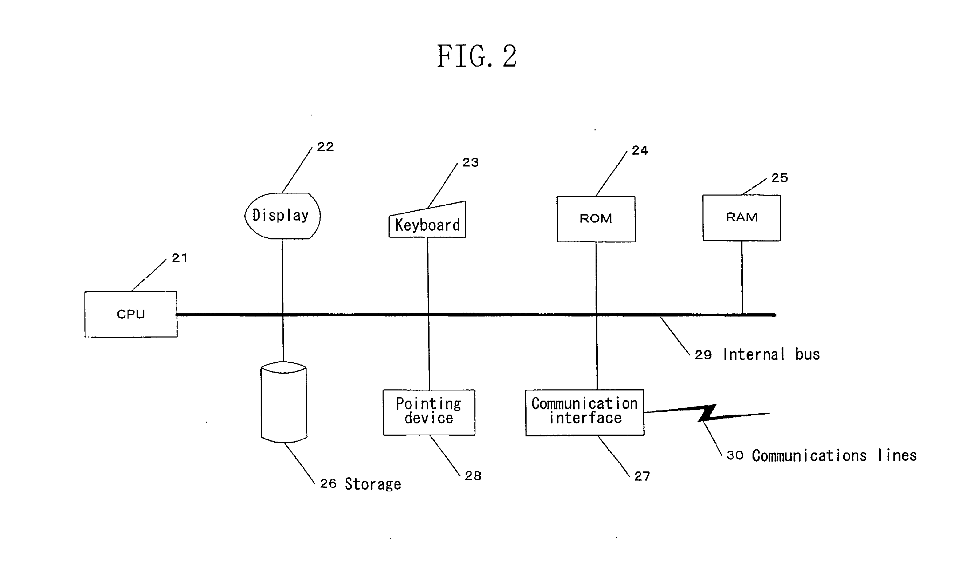

FIG **2** is a block diagram for showing an exemplified internal structure of the manufacturer server **1**, the dealer server **2**, the dealer terminal **4** or the user terminal **5**.

In FIG **2**, a reference numeral **22** denotes a display for displaying various windows such as a liquid crystal display device, and a reference numeral **23** denotes a keyboard, that is, input means. A reference numeral **24** denotes a ROM in which a boot program and the like are stored. A reference numeral **25** denotes a RAM for temporarily storing results of various processing. A reference numeral **26** denotes a storage, such as a hard disk drive (HDD), in which an information processing program and the like including the vehicle sales support program for operating the present system are stored. A reference numeral **27** denotes a communication interface used for communication with an external device via communications lines **30** (corresponding to the internet **3** and the like in this embodiment), which is a modem or a TA when the user terminal **5** is a personal computer and is a radio transmitter-receiver when the user terminal **5** is a portable information terminal or a cellular phone. A reference numeral **28** denotes a pointing device such as a mouse. These internal elements are connected to one another through an internal bus **29,** and a CPU (central processing unit) **21** controls the entire apparatus in accordance with the information processing program stored in the storage **26.** In this embodiment, the display **22**, the keyboard **23** and the pointing device **28** together provide what is called a man-machine interface to a user in each display window described later.

In this embodiment, each of the manufacturer server **1**, the dealer server **2**, the dealer terminal **4** and the user terminal **5** has software (a software program) of a general communication protocol capable of internet communications, an internet browsing function and a mailing function for sending/receiving data via the internet 3 in accordance with the software and general software for rendering a browser.

The CPU **21** appropriately executes these software, so that the manufacturer server **1** and the user terminal **5** or the dealer terminal **4** can together construct the so-called server-client environment with the user terminal **5** or the dealer terminal **4** connected to (logged in) the manufacturer server **1** via the internet **3**.

### - Functional architecture of customized vehicle estimate/order system -

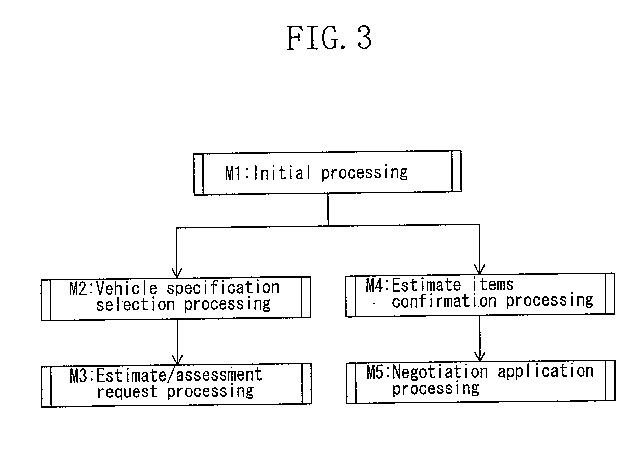

FIG **3** is a diagram for showing the functional architecture of processing modules executed in the customized vehicle estimate/order system. Each block shown in this drawing corresponds to a unit of software (a software program) roughly divided depending upon a function described in detail below, executed by the CPU **21** of the manufacturer server **1**, and these functional units are designated as processing modules in this embodiment. These processing modules are previously stored in the storage **26** of the manufacturer server **1**. In other words, the storage **26** of the manufacturer server **1** is a recording medium in which the vehicle sales support program for operating the present system is recorded.

Now, the function of each processing module will be roughly described.
1. Initial processing (M1): A top window (homepage) of the customized vehicle estimate/order system is displayed in the user terminal **5**, and the top window can be transit to another window for selecting specifications or configurations of a customized vehicle or requesting for an estimate.
2. Vehicle specification or configuration selection processing (M2): An environment is provided to the user terminal **5**, in which a preferably customized vehicle (preferred specifications or configurations) can be selected by the user operating the user terminal **5** by repeatedly selecting a desired one of choices previously prepared with respect to each of a plurality of items regarding a type of vehicle to be purchased. Furthermore, when the customized vehicle (selected specifications or configurations) is determined, this processing can transit to estimate/assessment request processing (M3).
3. Estimate/assessment request processing (M3): If the user having determined the customized vehicle desires to get an estimated price of the customized vehicle, the user selects a preferred distributor to ask for estimate. The selected distributor is informed that it has been selected by the user and is provided with an environment in which estimate of the price of the customized vehicle and assessment of a trade-in vehicle can be requested.
4. Estimate items confirmation processing (M4): When the user operating the user terminal **5** has already been presented an estimated price of the customized vehicle whose specifications or configurations have been determined, the user is provided with information such as change course of the estimated price up to the present time and a specification or configuration list. This processing can transit to a window for allowing the user to apply for negotiations.
5. Negotiation application processing (M5): When the user wants to enter into negotiations for actual purchase of the customized vehicle whose specifications or configurations have been determined, this is informed of the dealer selected by the user.

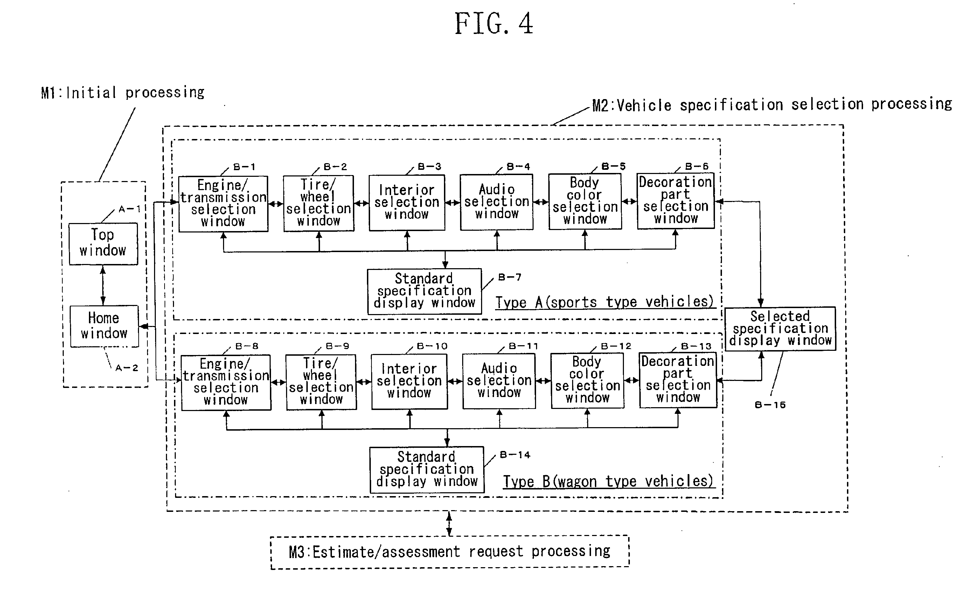

In the customized vehicle estimate/order system of this embodiment, when the processing modules described above are executed by the manufacturer server **1** with the browser program executed by the user terminal **5**, the user terminal **5** is linked to the customized vehicle estimate/order system as a client, so as to provide the man-machine interface by using display of a variety of windows as shown in FIGS. **4** through **7** (and FIGS. **12** through **25**) on the display **22** of the user terminal **5**. The user utilizes this man-machine interface, so as to select specifications or configurations and make an estimate request or an order of a desired customized vehicle by operating the user terminal **5.**

### - Software executed by manufacturer server 1 -

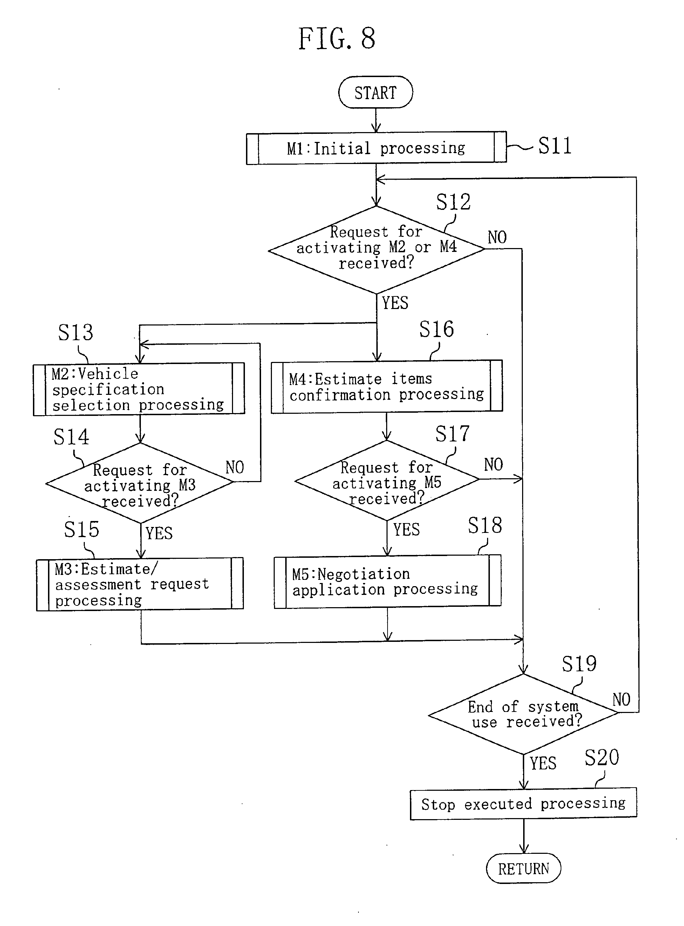

Now, the software executed by the CPU **21** of the manufacturer server **1** will be described. In the following, state transition between the respective processing modules will be first described with reference to a flowchart of FIG **8** and transition of display windows in the respective processing modules will be described with reference to FIGS. **4** through **7**.

### (1) State transition between modules:

FIG **8** is a flowchart for roughly showing the whole processing executed by the manufacturer server **1** in this embodiment.

Each of the processing modules M1 through M5 executed by the manufacturer server **1** has a function to display a variety of window windows described below on the display **22** of the user terminal **5** and to realize an input operation in each displayed window, and the transition of the display windows in the respective processing modules will be described later with reference to FIGS. **4** through **7**.

Referring to FIG **8**, the processing modules are executed as follows:

Steps S11 and S12: When the user terminal **5** is linked to a Web site of the present system via the internet **3,** the initial processing (M1) is executed (step S11). During the execution, it is determined whether or not data for requesting activation of the vehicle specification or configurations selection processing (M2) or the estimate items confirmation processing (M4) is received from the user terminal **5** (step S12). When the data is received, the flow proceeds to step S13 or step S16 in accordance with the content of the data, and when not, the flow proceeds to step S19.

Steps S13 through S15: The vehicle specification selection or configuration processing (M2) is executed (step S13), and during the execution, it is determined whether or not data for requesting activation of the estimate/assessment request processing (M3) is received from the user terminal **5** (step S14). When the data is received, the estimate/assessment request processing (M3) is executed (step S15).

Steps S16 through S18: The estimate items confirmation processing (M4) is executed (step S16), and during the execution, it is determined whether or not data for requesting activation of the negotiation application processing (M5) is received from the user terminal **5** (step S17). When the data is received, the negotiation application processing (M5) is executed (Step S18).

Steps S19 and S20: During the execution of each processing module, it is determined whether or not data corresponding to the end of use of the present system is received from the user terminal **5** (step S19). When the data is received, the processing of the processing module currently executed is stopped (step S20), and when not, the flow returns to step S12.

### (2) Transition of display windows in each processing module:

Now, the transition of the display windows in each of the roughly divided five processing modules described above will be described with reference to FIGS. **4** through **7**. The relationship in the state transition between the processing modules each surrounded with a broken line block in FIGS. **4** through **7** accords with the functional architecture described with reference to FIG **3**.

### <Initial processing (M1) and vehicle specification or configuration selection processing (M2)>

FIG. **4** is a diagram for showing the transition of the display windows in the initial processing (M1) and the vehicle specification selection or configuration processing (M2).

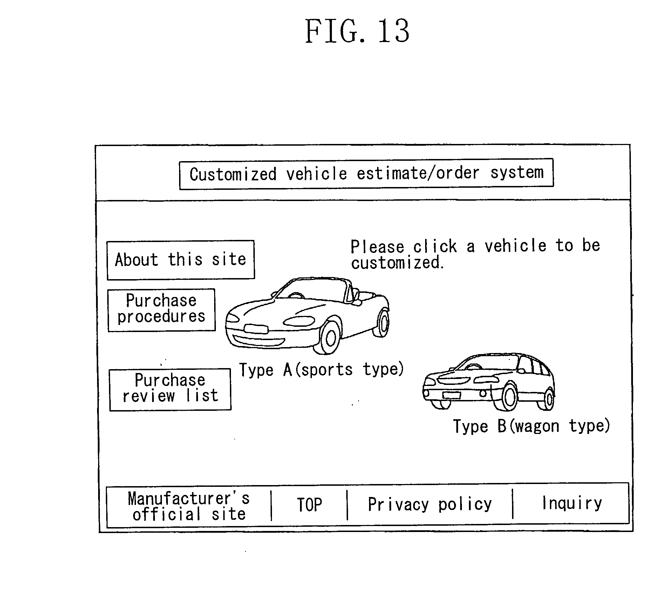

In FIG **4**, the initial processing (M1) displays a top window **A-1** (shown in FIG **12**) corresponding to the homepage window of the present system. The top window **A-1** exemplified in FIG **12** includes an "enter" button to be operated by a user who desires to utilize the present system capable of specification or configuration selection, an estimate request and an order of a customized vehicle (namely, a user of the user terminal 5 linked to the manufacturer server **1** via the internet **3**). When the "enter" button is operated, the initial processing (M1) displays a home window **A-2** (shown in FIG **13**) of the present system on the user terminal **5**.

FIG **13** is a diagram for showing an example of the home window **A-2** displayed by the initial processing (M1).

The display window shown in FIG **13** includes a plurality of operation buttons, and when an operation button of "about this site" or "purchase procedures" is operated, a predetermined explanatory window is displayed on the user terminal **5**. Alternatively, when an operation button of "purchase review list" is operated, the function of the estimate items confirmation processing (M4) described later is provided to the user terminal **5**.

Also, in the home window **A-2**, a photograph of a type A, that is, sports type vehicles or a type B, that is, wagon type vehicles is clicked, the function of the vehicle specification or configuration selection processing (M2) is provided to the user terminal **5**. In this embodiment, specifications or configurations preferable for a user can be selected with respect to the type A of sports type vehicles and the type B of wagon type vehicles exemplified for the sake of simplification.

When a desired vehicle type is selected in the home window **A-2**, the user is allowed to select preferred specifications or configurations on the basis of a standard vehicle (base vehicle) of the selected vehicle type through the function of the vehicle specification selection or configuration processing (M2). In other words, specifications previously set as the standard vehicle in the present system can be replaced with other specifications or configurations, or new equipment (optional equipment) not set in the standard vehicle can be added through the specification or configuration selection operation by the user.

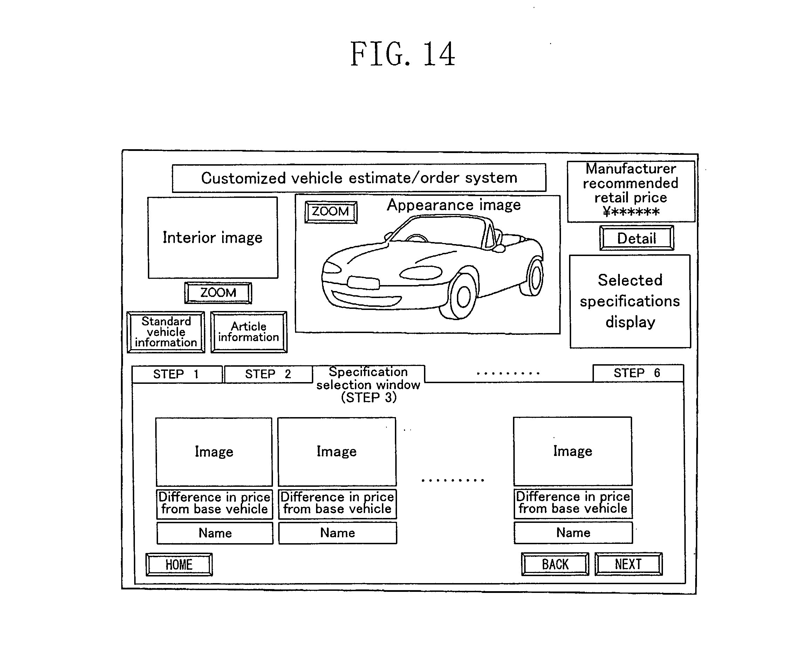

FIG **14** is a diagram for showing an exemplified format of vehicle specification or configuration selection windows (**B-1** through **B-15**) to be displayed on the user terminal **5** by the vehicle specification selection or configuration processing (M2). The basic format of these windows is basically common to engine/transmission selection windows **B-1** and **B-8**, tire/wheel selection windows **B-2** and **B-9**, interior selection windows **B-3** and **B-10**, audio selection windows **B-4** and **B-11**, body color selection windows **B-5** and **B-12** and decoration part selection windows **B-6** and **B-13**.

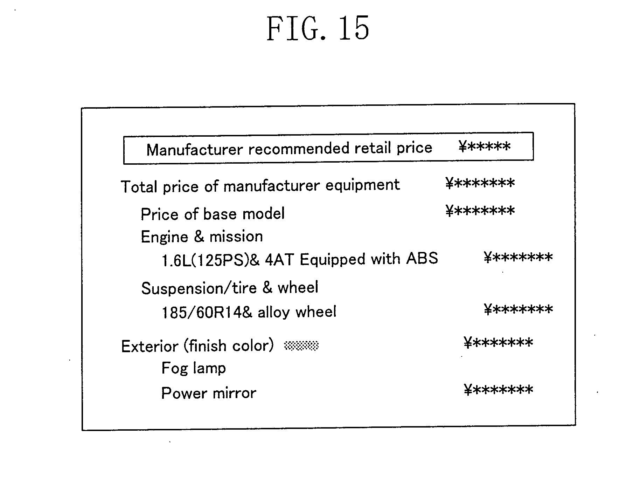

In an upper half area of each vehicle specification selection window, the followings are displayed: Photographs of appearance and interior of the customized vehicle selected by the user (purchase support information); a "ZOOM" button for expanding the photograph; an "article information" button for displaying various information (purchase support information) regarding the customized vehicle; a "standard vehicle information" button for displaying standard specification display window **B-7** or **B-14** including the specifications and items of the standard vehicle corresponding to the base of the customized vehicle; a manufacturer recommended retail price of the customized vehicle (calculated on the basis of the data stored in the manufacturer recommended retail price DB **31**); a "detail" button for displaying the details of the manufacturer recommended retail price as exemplified in FIG. **15**; and details of the selected specifications.

The purchase support information are selected from the data stored in the purchase support DB **33** correspondingly to the respective specifications and sent to the user terminal **5** by the manufacturer server **1**.

FIG **15** is a diagram for showing an exemplified detail window of the manufacturer recommended retail price displayed when the "detail" button of FIG **14** is operated. Thus, the manufacturer recommended retail price and prices of optional specifications selected in the respective items based on which the manufacturer recommended retail price is set are displayed.

Furthermore, in the vehicle specification or configuration selection processing (M2), the selection windows from **B-1** to **B-6** in this order, when the type A is selected, and the selection windows from **B-8** to **B-13** in this order, when the type B is selected, are displayed on the user terminal **5**. Therefore, the user is restricted to make selection in this order of display windows.

In a lower half area of each vehicle specification selection window, the selecting steps respectively corresponding to the windows **B-1** through **B-6** or **B-8** through **B-13** are displayed, for example, in the form of a plurality of overlapped folders.

In the exemplified window of FIG **14**, the folder of the third step (namely, the interior selecting step) is selected to be displayed. In the selected folder (in an active state), selectable plural choices of the item to be selected by the user in the step are displayed in the forms of an image like a photograph, a price difference from that of the standard vehicle and a name (so that when an image of a preferred choice is clicked, the choice can be selected).

In a lowermost area of each vehicle specification selection window, a "HOME" button for jumping to the home window **A-2** (of FIG **13**) and "BACK" and "NEXT" buttons for transiting to display windows before and behind are displayed.

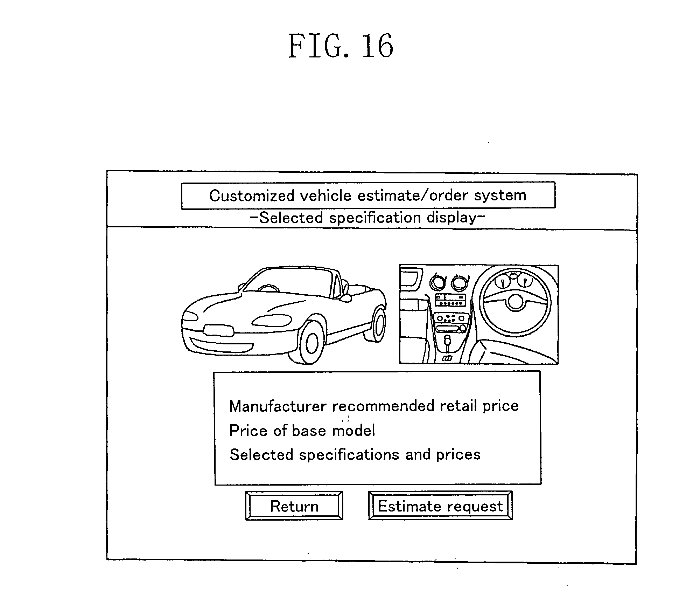

When the selection is completed about all the items (steps) in the vehicle specification or configuration selection processing (M2), a selected specification display window **B-15** of FIG **16** is displayed on the user terminal **5**. When the selection is thus completed, identification information (customize number) of the customized vehicle of the user is determined.

FIG **16** is a diagram for showing an example of the selected specification or configuration display window **B-15** displayed on the user terminal **5** in the vehicle specification or configuration selection processing (M2). In this selected specification display window **B-15**, for example, photograph images of the appearance and the interior of the customized vehicle whose specifications or configurations have been selected, the manufacturer recommended retail price, the price of the standard vehicle, the selected specifications and the prices thereof are displayed. Also, an "estimate request" button for requesting for an estimate of the customized vehicle of one dealer selected by the user from a plurality of dealers (namely, a dealer of which the user desires to request for an estimate of the customized vehicle) is displayed.

When the "estimate request" button is operated for requesting for an estimate of the dealer in the selected specification or configuration display window **B-15**, the processing can transit to the estimate/assessment request processing (M3) described later. On the other hand, when a "return" button of the selected specification display window **B-15** is operated, the specifications can be changed by successively returning to the vehicle specification selection windows respectively corresponding to the aforementioned steps.

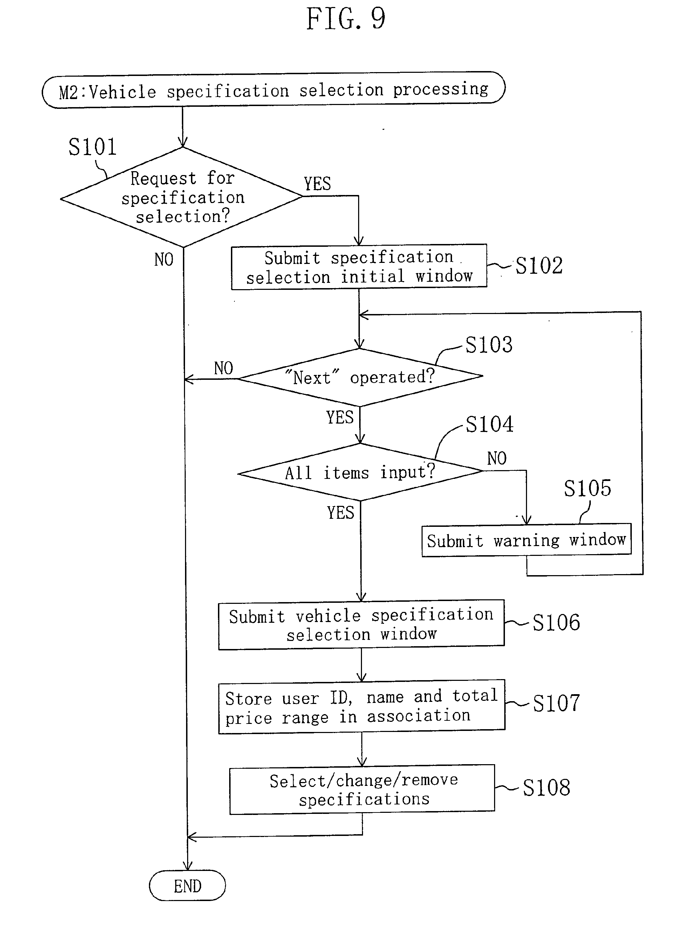

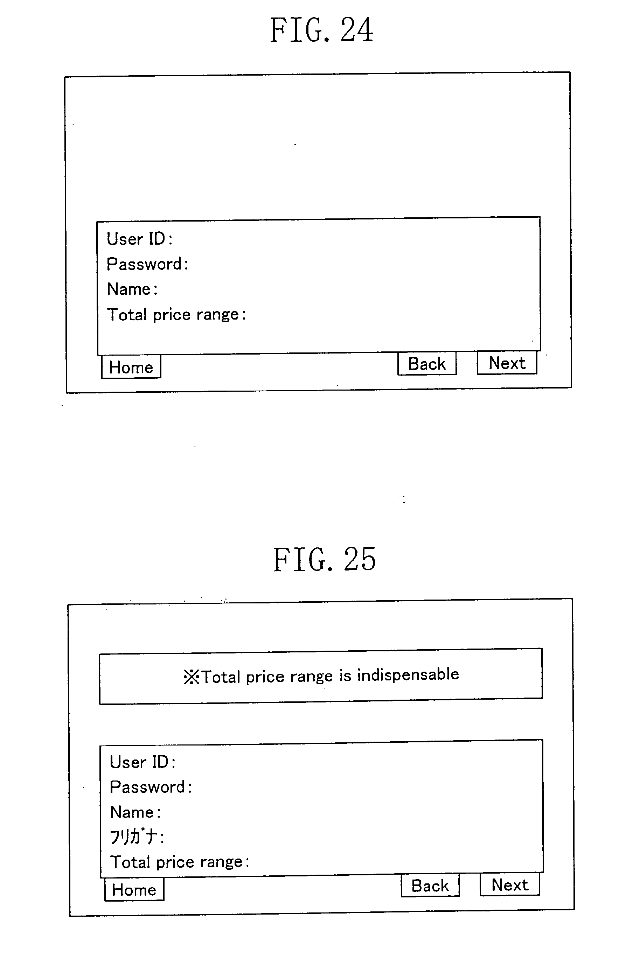

The vehicle specification or configuration selection processing (M2) will now be described with reference to a flowchart of FIG **9**. First, in step S101, it is determined whether or not there is a specification selection request from the user terminal **5** (namely, whether or not a desired type (the type A or the type B) is selected in the home window **A-2**). When NO, namely, when there is not a specification selection request, the processing is ended. When YES, namely, when there is a specification selection request, the flow proceeds to step S102, where a specification or configuration selection initial window (which is omitted in FIG **4**) as shown in FIG **24** is sent to be displayed on the user terminal **5**. In the specification or configuration selection initial window, items to be input by the user, such as a user ID, a password, the name of the user and a total price range (preferable consumption price) planned for payment of the purchase are displayed.

Next, in step S103, it is determined whether or not a "Next" button of the specification selection initial window is operated. When NO, namely, when the "Next" button is not operated, the processing is ended. When YES, namely, when the "Next" button is operated, the flow proceeds to step S104, where it is determined whether or not all input items have been input in the specification selection initial window.

When NO in step S104, namely, when not all the input items have been input, the flow proceeds to step S105, where a warning window as shown in FIG **25** is sent to be displayed on the user terminal **5** and then the flow returns to step S103. In this warning window, a warning that the item not input (that is, the "total price range" in FIG **25**) is an indispensable item and the same input items as those of the specification or configuration selection initial window are displayed.

On the other hand, when YES in step S104, namely, when all the items have been input, the flow proceeds to step S106, where the vehicle specification or configuration selection window **B-1** or **B-8** is sent to be displayed on the user terminal **5.** In next step S107, the user ID, the name and the total price range input in the specification or configuration selection initial window are stored correspondingly to one another in the customer DB **34**. As described later, customer information in more detail is input by the user at the time of an estimate/assessment request, and these information are together stored in the customer DB **34**.

In next step S108, specifications or configurations are selected, changed or removed in accordance with the operation performed by the user thereafter, and then the processing is ended.

During the specification or configuration selection made by the user, a specification or configuration change history, an access history, a Web connecting time, the number of Web pages browsed and the like are stored in the customer DB **34** in association with the user ID and the like (to be provided to a person in charge of the dealer as reference information in setting an estimated price as described later).

### <Estimate/assessment request processing (M3)>

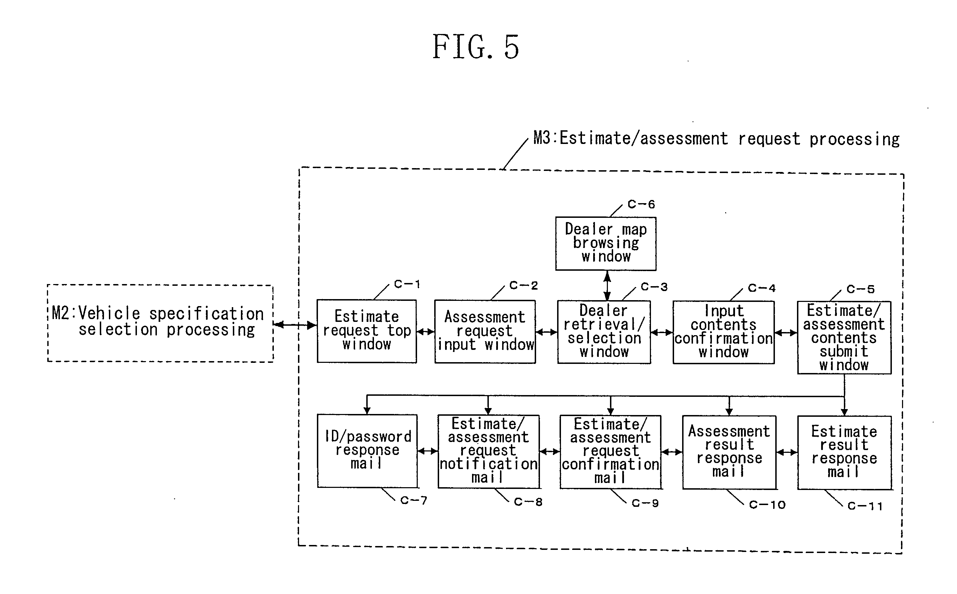

FIG **5** is a diagram for showing the transition of display windows in the estimate/assessment request processing (M3) and an e-mail sending function involved in an estimate/assessment request. This processing is activated by operating the "estimate request" button after the specification selection of the customized vehicle in the vehicle specification or configuration selection processing (M2). The estimate/assessment request processing (M3) can be transit to the vehicle specification or configuration selection processing (M2) in accordance with the operation performed by the user.

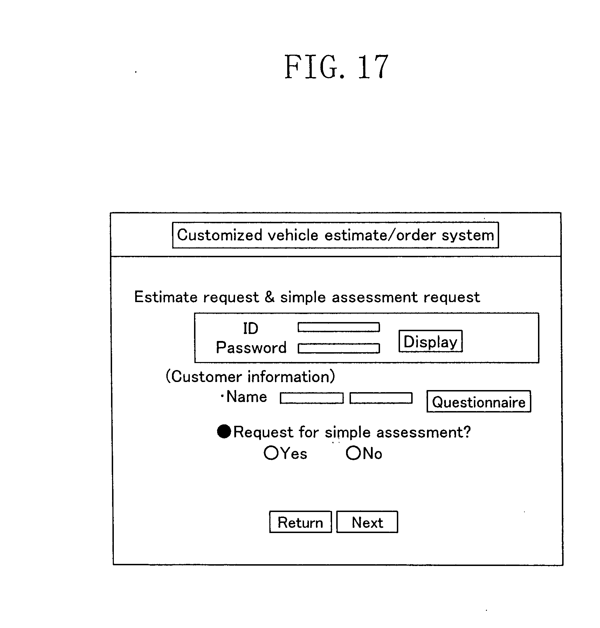

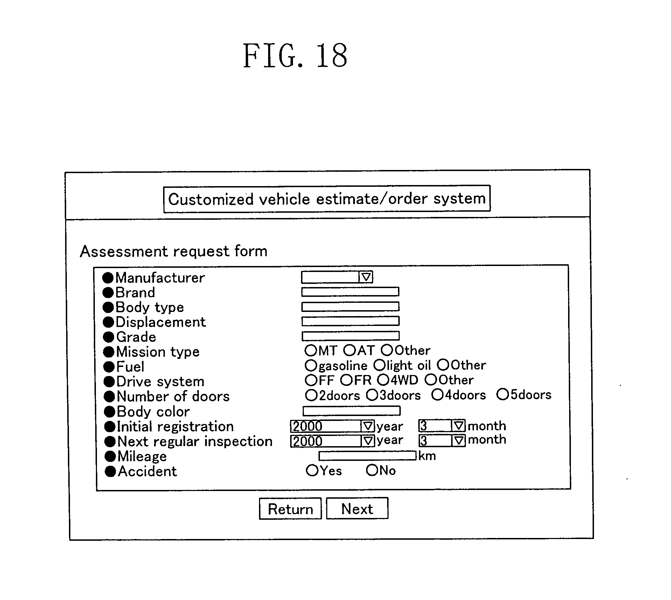

As shown in FIG **5,** as display windows transit in the estimate/assessment request processing (M3), an estimate request top window **C-1** (shown in FIG **17**), an assessment request input window **C-2** (shown in FIG. **18**), a dealer retrieval/selection window **C-3**, an input contents confirmation window **C-4**, an estimate/assessment contents submit window **C-5** and a dealer map browsing window **C-6** can be displayed on the user terminal **5.**

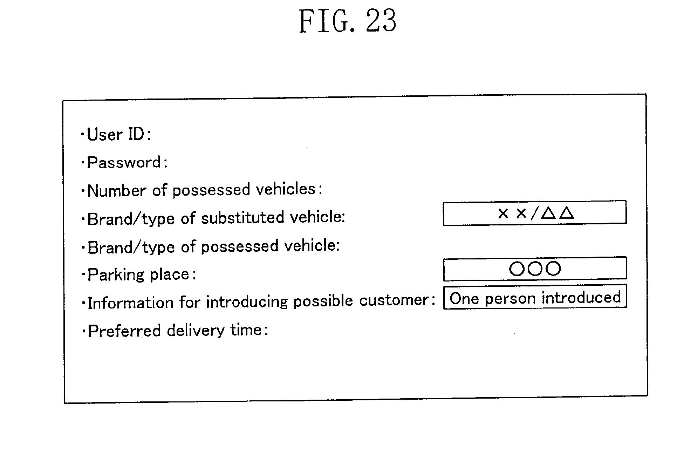

Estimate request top window **C-1** (shown in FIG. **17**): In this window, the user of the user terminal **5** inputs the following: The name of the user (the user ID and the password when already issued); and items of a questionnaire displayed in a questionnaire input window (shown in FIG. **23**) by operating a "questionnaire" button (which items include the number of vehicles possessed, a preferred brand of substituted vehicle, a type of possessed vehicle, a type of parking place, information for introducing a possible customer, and a desired delivery time, and although not shown in FIG. **23**, a customer group of the user (selected from previously set groups such as a young family group) and a competitive vehicle the user regards competitive with the vehicle to be purchased). Thus, the user can request (demand) for an estimate of the customized vehicle previously determined in the vehicle specification or configuration selection processing (M2) of the dealer selected in the dealer retrieval/selection window **C-3** and for assessment of a trade-in vehicle if desired. In other words, after inputting the information related to the user in the estimate request top window **C-1**, when "YES" is selected with respect to an assessment request in the same window, the assessment request input window **C-2** is displayed, and when "NO" is selected, the dealer retrieval/selection window **C-3** is displayed.

Assessment request input window **C-2** (shown in FIG **18**): In this window, the user of the user terminal **5** inputs predetermined specification or configuration items (such as the name of the manufacturer, the brand of the vehicle, the displacement and the mileage) of a vehicle to be trade-in (a trade-in vehicle), and when a "Next" button is selected, the dealer retrieval/selection window **C-3** is displayed.

Dealer retrieval/selection window **C-3** (not shown in any drawing): In this window, the user of the user terminal **5** can select and specify a dealer of which the user desires to request for an estimate of the customized vehicle and assessment of the trade-in vehicle by using the user terminal **5**. For specifying a dealer, for example, dealers in the neighborhood of the address of the user previously input in the estimate request top window **C-1** may be automatically presented, or a list of all the dealers may be displayed so that the user can select a desired one in the list. In either case, it is convenient for the user if the dealer map browsing window **C-6** in which the location of each dealer can be found on a map can be expanded from the dealer retrieval/selection window **C-3**.

When the dealer for asking for the estimate and the assessment of the trade-in vehicle is selected in the dealer retrieval/selection window **C-3** by the user, the input contents confirmation window **C-4** is displayed on the user terminal **5** of the user.

Input contents confirmation window **C-4** (not shown in any drawing): In this window, the following information are displayed in the form of a list: The contents of the specifications or configurations of the customized vehicle previously determined in the vehicle specification or configuration selection processing (M2); the manufacturer recommended retail price; the contents of the items input by the user in the assessment request input window **C-2** if the assessment of a trade-in vehicle is selected; and information related to the dealer specified in the dealer retrieval/selection window **C-3** for requesting for the estimate/assessment. After the user confirms the contents of the information displayed in the input contents confirmation window **C-4,** when the user actually requests for the estimate/assessment through a predetermined operation, the operation signal is sent to the manufacturer server **1**, and the estimate/assessment contents submit window **C-5** is displayed on the user terminal **5**.

Estimate/assessment contents submit window **C-5** (not shown in any drawing): In this window, information that the estimate/assessment request is accepted by the manufacturer server **1** having received the estimate/assessment request (the operation signal) and that an e-mail regarding the request will be sent to the user from the dealer selected by the user are displayed. Thus, the estimate/assessment request processing (M3) includes a function to send/receive e-mails in response to the estimate/assessment request sent from the user terminal **5**.

ID/password reply mail **C-7**: When the estimate request thus sent from the user is the first request, an e-mail including issued ID and password is sent to the mail address previously input by the user.

Estimate/assessment request notification mail **C-8**: An e-mail is sent from the manufacturer server **1** to the dealer server **2** of the selected dealer to notify that the dealer is requested for the estimate of the customized vehicle (and the assessment of the trade-in vehicle) by the user. This e-mail includes, for example, information for specifying the user (such as the address, the name and the mail address) input in the estimate request top window **C-1**, the specifications or configurations of the customized vehicle to be estimated, and the specification or configuration items of the trade-in vehicle input in the assessment request input window **C-2**.

Estimate/assessment request confirmation mail **C-9**: An e-mail is sent to the mail address previously input by the user from the dealer selected by the user for confirming the estimate/assessment request.

Assessment result response mail **C-10**: An e-mail for informing an assessment result is sent to the mail address previously input by the user from the dealer requested for the assessment of the trade-in vehicle by the user.

Estimate result response mail **C-11**: An e-mail for informing an estimate result (estimated price) is sent to the mail address previously input by the user from the dealer requested for the estimate by the user.

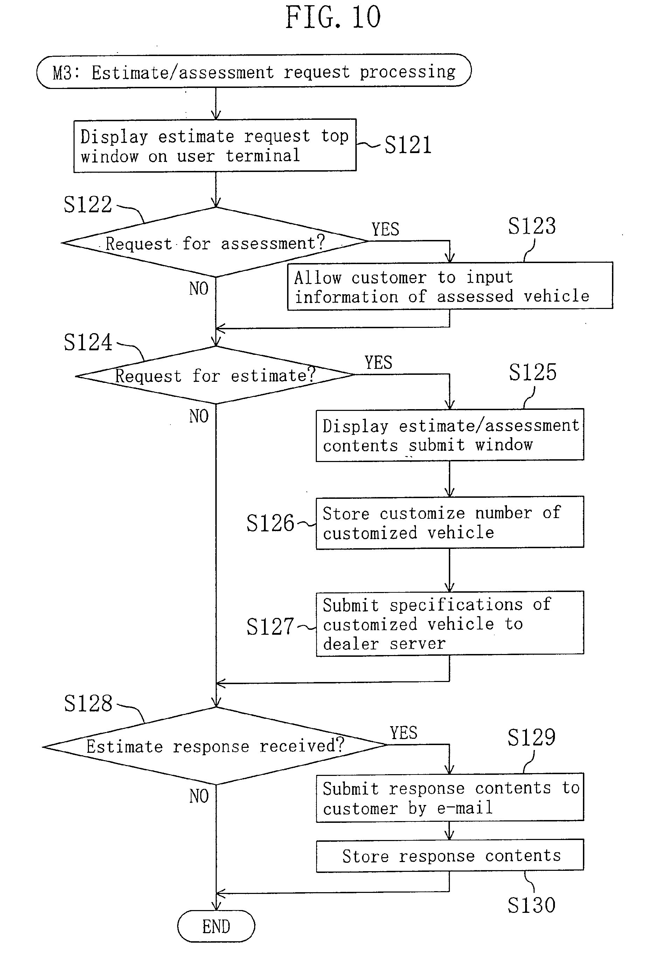

FIG **10** is a flowchart of the estimate/assessment request processing (M3) executed by the manufacturer server **1.**

Referring to FIG **10,** in step S121, the estimate request top window **C-1** (shown in FIG **17**) is displayed on the user terminal **5,** and validity of the user ID, the password and the other customer information input in this window is checked.

In next step S122, it is determined whether or not there is an assessment request. When NO, namely, when there is not an assessment request, the flow proceeds to step S124. When YES, namely, when there is an assessment request, the flow proceeds to step S123, where the assessment request input window **C-2** (shown in FIG **18**) is displayed on the user terminal **5** for allowing the user to input the information of the trade-in vehicle desired to be assessed, and then the flow proceeds to step S124.

In step S124, it is determined whether or not an estimate request has been received. When NO, namely, when an estimate request has not been received, the flow proceeds to step S128. When YES, namely, when an estimate request has been received, the flow proceeds to step S125, where the estimate/assessment contents submit window **C-5** is displayed on the user terminal **5**. In next step S126, the customize number of the customized vehicle is stored in the customer DB **34** together with the input customer information (including the user ID, the name, the contents of the questionnaire items and the preferred price range), and the data input in step S123 when the assessment is requested for. Thereafter, in step S127, the specifications or configurations of the customized vehicle together with the customer information and the manufacturer recommended retail price are sent by e-mail (namely, the estimate/assessment request notification mail **C-8**) as an estimate request to the dealer server **2** of the selected dealer, and then the flow proceeds to step S128.

In step S128, it is determined whether or not an estimate response (including an assessment response when the assessment is requested for) has been received via the Web or by e-mail from the dealer server **2**. When NO, namely, when an estimate response has not been received, the processing is ended. When YES, namely, when an estimate response has been received, the flow proceeds to step S129, where the content (estimated price) of the response is sent, by e-mail, to the customer having requested for the estimate. In next step S130, the content (estimated price) of the response is stored in association with the specifications or configurations of the customized vehicle (the specifications selected by the customer) in the customer DB **34** and the reference information DB **36**. Thereafter, the processing is ended.

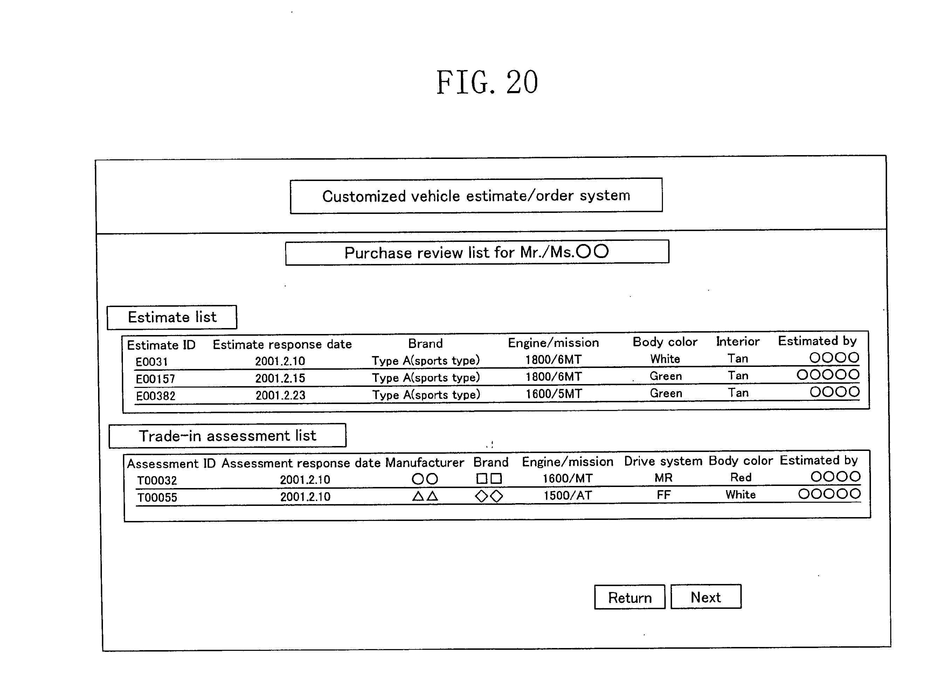

On the basis of the content of the response stored in step S130, the detailed content of the response is presented to the customer in a purchase review information list window **D-2** (shown in FIG **20**) by accessing a URL added to the e-mail sent to the user terminal **5** in step S129 or by operating the operation button of the "purchase review list" in the home window **A-2**.

### <Estimate items confirmation processing (M4)>

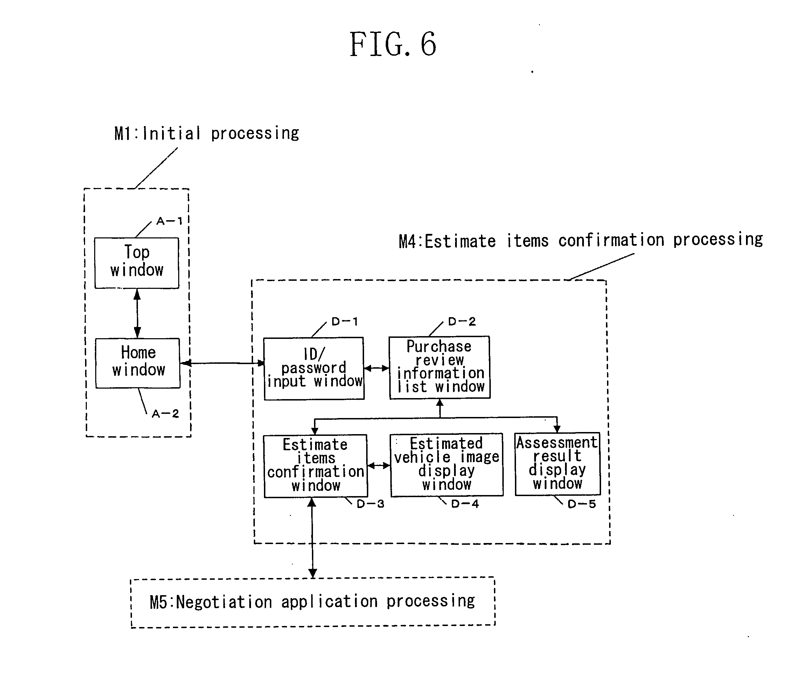

FIG **6** is a diagram for showing transition of display windows in the estimate items confirmation processing (M4). This window is activated by operating the operation button of the "purchase review list" in the home window **A-2** displayed in the initial processing (M1). The estimate items confirmation processing (M4) can be transit to the initial processing (M1) or the negotiation application processing (M5) in accordance with the operation performed by the user.

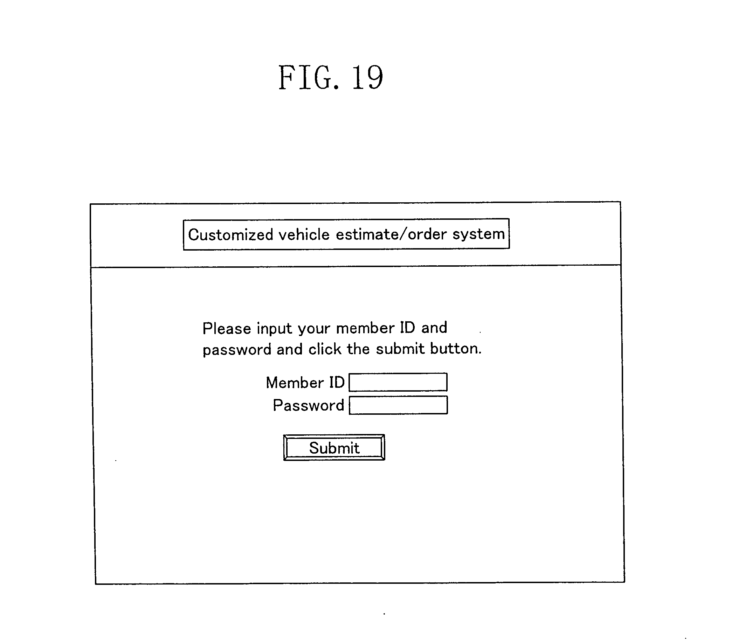

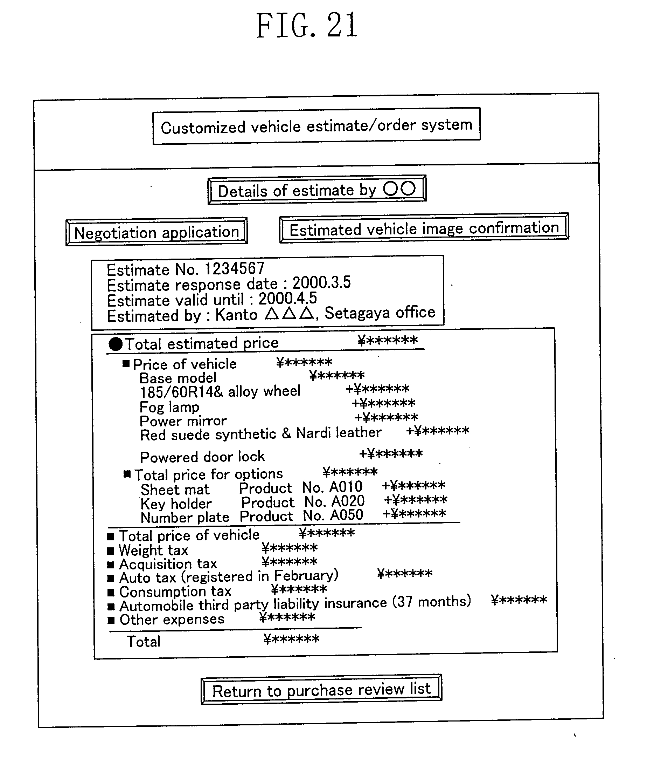

As shown in FIG **6**, as display windows transit in the estimate items confirmation processing (M4), an ID/password input window **D-1** (shown in FIG **19**), the purchase review information list window **D-2** (shown in FIG **20**), an estimate items confirmation window **D-3** (shown in FIG **21**), an estimated vehicle image display window **D-4** and a trade-in assessment result display window **D-5** can be displayed on the user terminal **5**.

ID/password input window **D-1** (shown in FIG **19**): In this window, the user inputs the user ID (member ID) and the password previously issued to the user and operates a "submit" button, so as to log in the present system (the vehicle manufacture server **1**). After completing logging in, the purchase review information list window **D-2** (shown in FIG **20**) is displayed on the user terminal.

Purchase review information list window **D-2** (shown in FIG **20**): In this window, a list of estimated prices of all vehicles selected in the specifications by the user and the assessment result is displayed. When the user selects a desired item by clicking or the like, a window including the detailed contents of the selected item is displayed on the user terminal **5** of the user.

Estimate items confirmation window **D-3** (shown in FIG **21**): In this window, the user can confirm the detailed contents of the estimate previously presented to the user. When a "negotiation application" button is operated, the processing can be transit to the negotiation application processing (M5). When an "estimated vehicle image confirmation" button is operated, the image of a vehicle corresponding to the currently displayed customized vehicle can be confirmed in the estimated vehicle image display window **D-4** (not shown in any drawing). When a "return to purchase review list" button is operated, the window can be transit to the purchase review information list window **D-2** (shown in FIG **20**).

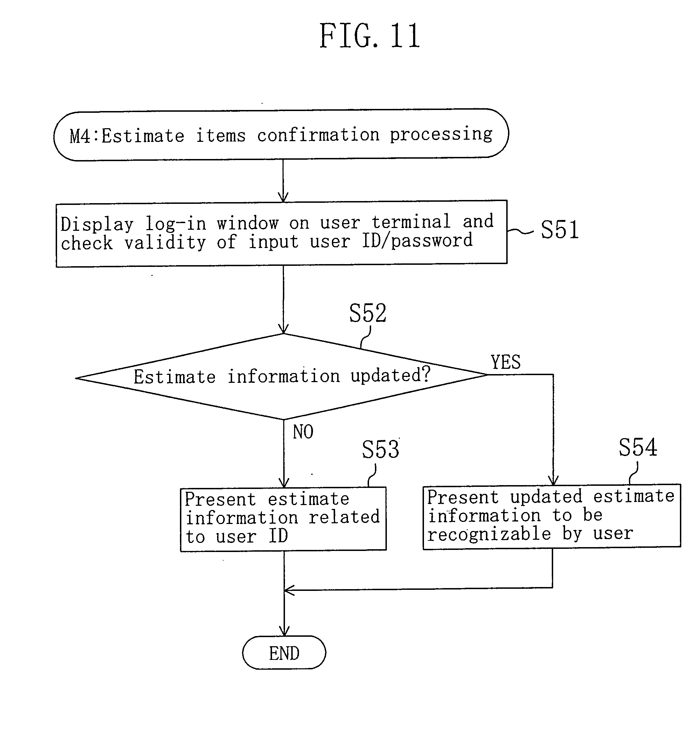

FIG **11** is a flowchart for showing the estimate items confirmation processing (M4) executed by the manufacturer server **1**.

Step S51 of FIG **11**: The log-in window, namely, the ID/password input window **D-1** (shown in FIG **19**) is displayed on the user terminal **5**, and the validity of the user ID and the password input in the window is checked.

Step S52: Referring to the customer DB **34**, it is determined whether or not the estimate information related to the user ID has been updated.

Step S53: The estimate information related to the user ID stored in the customer DB **34** is fetched, and the fetched estimate information is displayed on the user terminal **5** of the user in the form of the purchase review information list window **D-2** (shown in FIG **20**) or the estimate items confirmation window **D-3** (shown in FIG **21**) in accordance with an operation performed in the purchase review information list window **D-2**.

Step S54: The updated estimate information related to the user ID stored in the customer DB **34** is displayed on the user terminal **5** of the user in the form of the purchase review information list window **D-2** (shown in FIG **20**) or the estimate items confirmation window **D-3** (shown in FIG **21**) in accordance with an operation performed in the purchase review information list window **D-2,** with the update recognizable by the user.

### <Negotiation application processing (M5)>

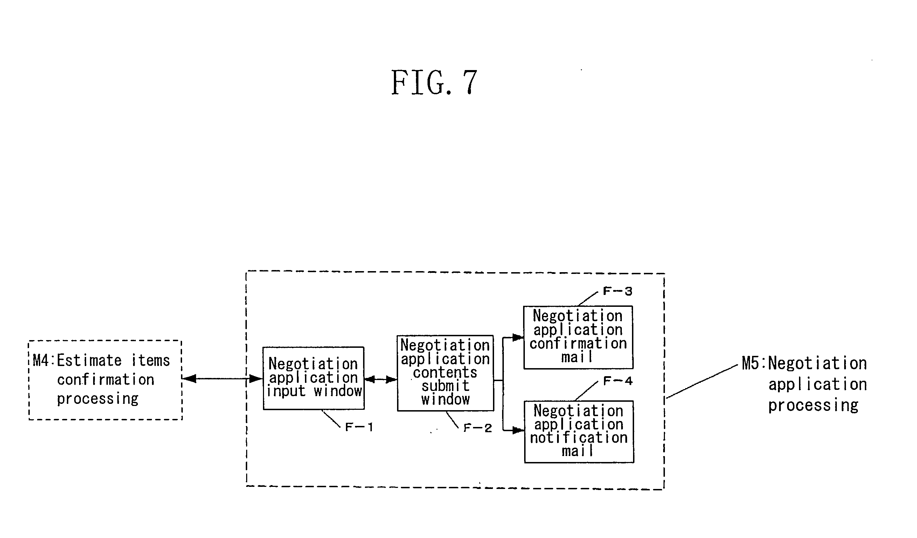

FIG **7** is a diagram for showing transition of display windows in the negotiation application processing (M5) and an e-mail sending function involved in a negotiation application. The negotiation application processing (M5) is activated by operating the "negotiation application" button in the estimate items confirmation window **D-3** (shown in FIG **21**). The negotiation application processing (M5) can be transit to the estimate items confirmation processing (M4).

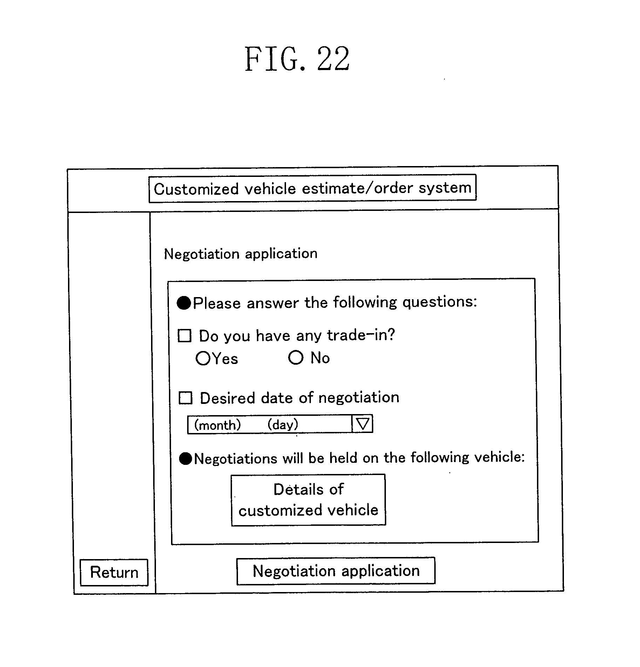

As display windows transit in the negotiation application processing (M5), a negotiation application input window **F-1** (shown in FIG **22**) and a negotiation application contents submit window **F-2** can be displayed on the user terminal **5** of the user.

Negotiation application input window **F-1** (shown in FIG **22**): In this window, the user can input various items (including whether or not the user has a trade-in vehicle and a desired date for the negotiations) for entering into negotiations with the dealer having presented the estimate of the customized vehicle displayed in the estimate items confirmation window **D-3** (namely, the dealer selected by the user). After inputting the items, when a "negotiation application" button is operated, the negotiation application contents submit window **F-2** is displayed on the user terminal **5**.

Negotiation application contents submit window **F-2** (not shown in any drawing): In this window, information that the request contents input in the negotiation application input window **F-1** has been sent and accepted by the manufacturer server **1** and that the selected dealer will contact the user about the negotiations by e-mail or telephone are displayed.

The negotiation application processing (M5) includes a function to send/receive e-mails in response to the negotiation application information sent in the negotiation application contents submit window **F-2** from the user terminal **5**.

Negotiation application confirmation mail **F-3**: An e-mail is sent from the manufacturer server **1** to the mail address previously input by the user for confirming that the negotiation application has been made.

Negotiation application notification mail **F-4**: An e-mail is sent from the manufacturer server **1** to the selected dealer for notifying that the negotiation application has been made by the user (negotiation application information). This e-mail includes the contents displayed in the negotiation application input window **F-1** and the information related to the user.

When the manufacturer server **1** receives the negotiation application regarding the customized vehicle from the user, it sends the negotiation application information of this negotiation application to the dealer selected by the user and stores the negotiation application information in the reference information DB **36** correspondingly to the selected specifications and the estimated price related to the negotiation application.

After the negotiations with the dealer, the customized vehicle can be actually ordered to the manufacturer by, for example, making an access to the manufacturer server **1** by using the dealer terminal **4** through the dealer server **2**, or by using separate dedicated communications lines from a dealer terminal different from that of the present system.

### - Software executed by dealer server 2 -

Now, the software executed by the CPU **21** of the dealer server **2** (namely, estimate/assessment processing corresponding to the estimate/assessment request processing (M3) executed by the manufacturer server 1) will be described.

The dealer server **2**, which has received the estimate request including the specifications of the customized vehicle sent from the manufacturer server **1**, sends the specifications or configurations of the customized vehicle to the dealer terminal **4** operated by a person in charge of the selected dealer.

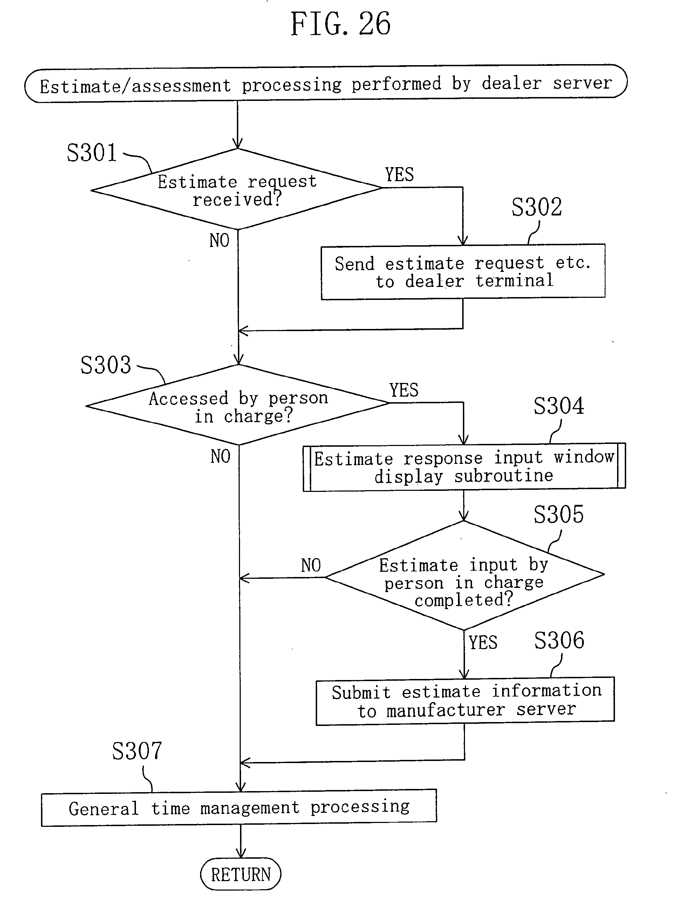

The processing (estimate/assessment processing) performed by the dealer server **2** will be specifically described with reference to a flowchart of FIG **26.**

In step S301, it is determined whether or not an estimate request (including an assessment request) has been received from the manufacturer server **1**. When NO, namely, when an estimate request has not been received, the flow proceeds to step S303. When YES, namely when an estimate request has been received, the flow proceeds to step S302, where the estimate request, the specifications of the customized vehicle and the customer information sent from the manufacturer server **1** are sent to the dealer terminal **4** operated by the person in charge, and then, the flow proceeds to step S303.

In step S303, it is determined whether or not an access for inputting an estimated price has been made from the dealer terminal **4** operated by the person in charge. When NO, namely, when the access has not been made, the flow proceeds to step S307. When YES, namely, when the access has been made, the flow proceeds to step S304, where an estimate response input window display subroutine described below is executed so as to allow the person in charge to input an estimated price. In next step S305, it is determined whether or not the person in charge has completed inputting the estimated price. When NO, namely, when the input of the estimated price has not been completed, the flow proceeds to step S307. When YES, namely, when the input of the estimated price has been completed, the flow proceeds to step S306, where the input estimated price information is sent to the manufacturer server **1**, and then, the flow proceeds to step S307. The manufacturer server **1** having received the estimated price information stores the estimated price information in the customer DB **34** in association with the user ID.

In step S307, general time management processing is executed, and thereafter, the flow returns.

When an assessment request is also received together with the estimate request, the person in charge assesses the trade-in vehicle in accordance with the specification items of the trade-in vehicle received by the estimate/assessment request notification mail **C-8**.

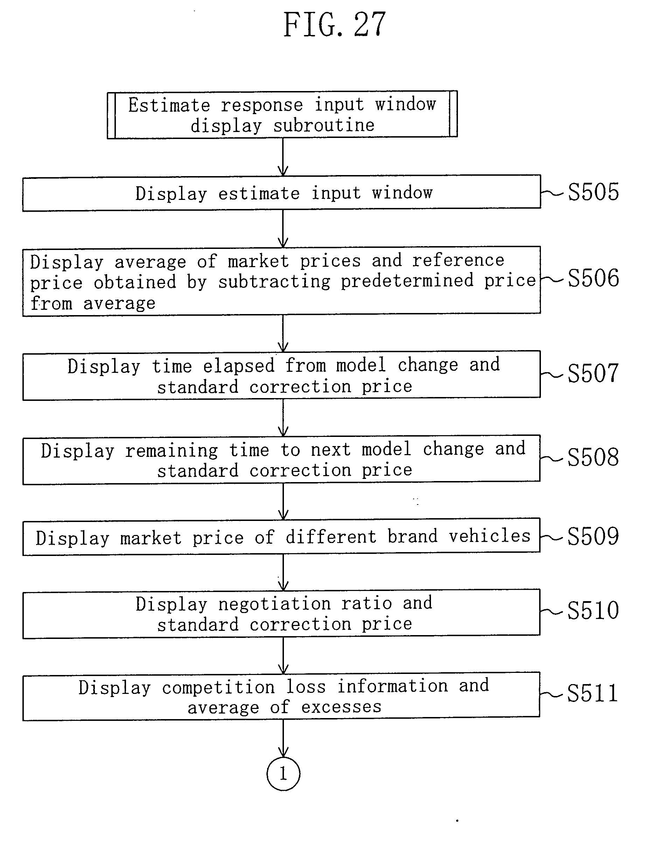

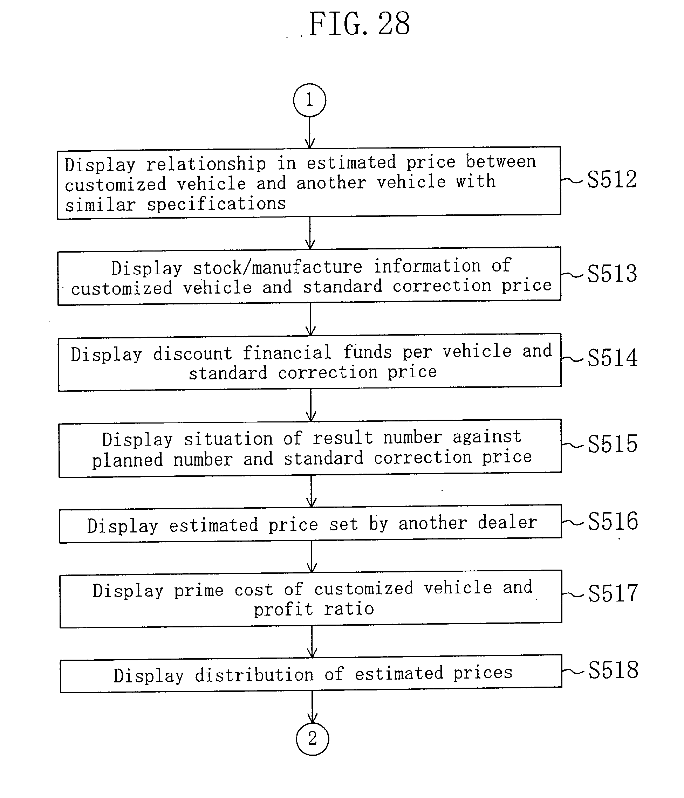

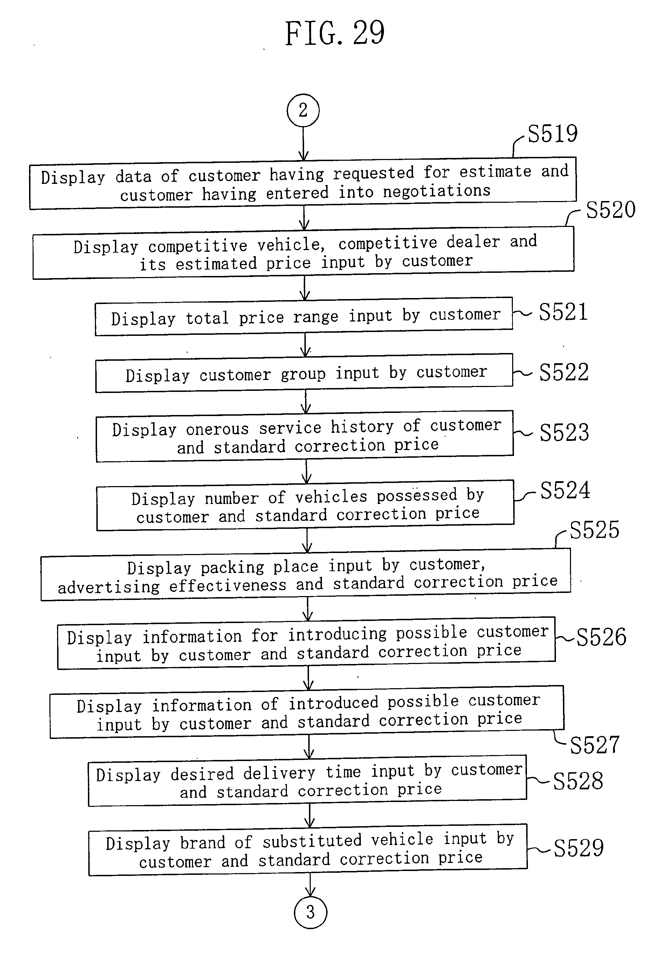

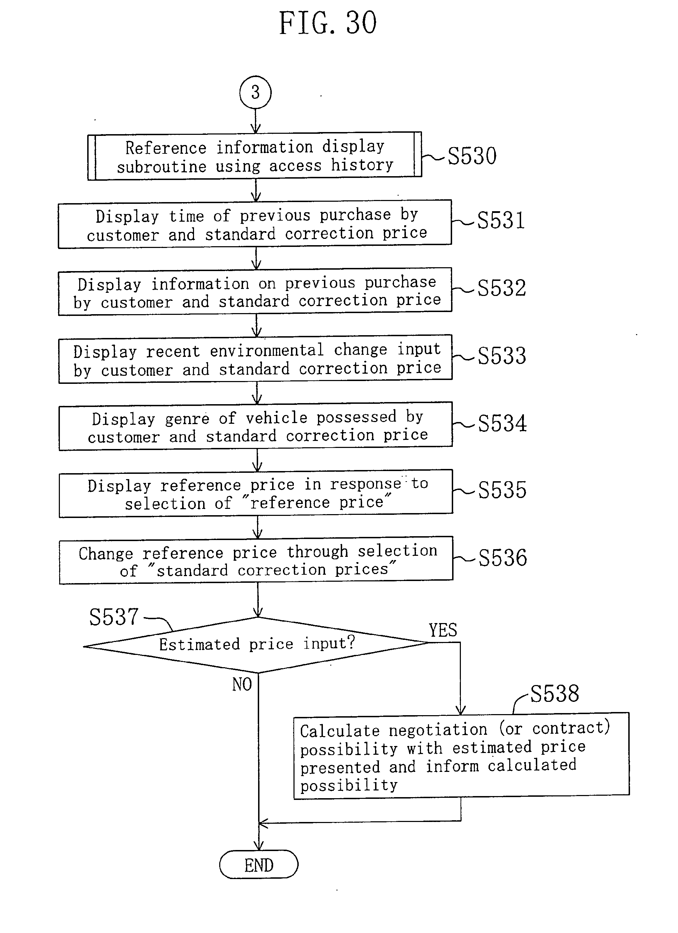

Now, the estimate response input window display subroutine performed in step S304 will be specifically described with reference to FIGS. **27** through **30.** In the estimate response input window display subroutine, reference information to be used by the person in charge for deciding the estimated price of the customized vehicle are displayed on the dealer terminal **4** operated by the person in charge.

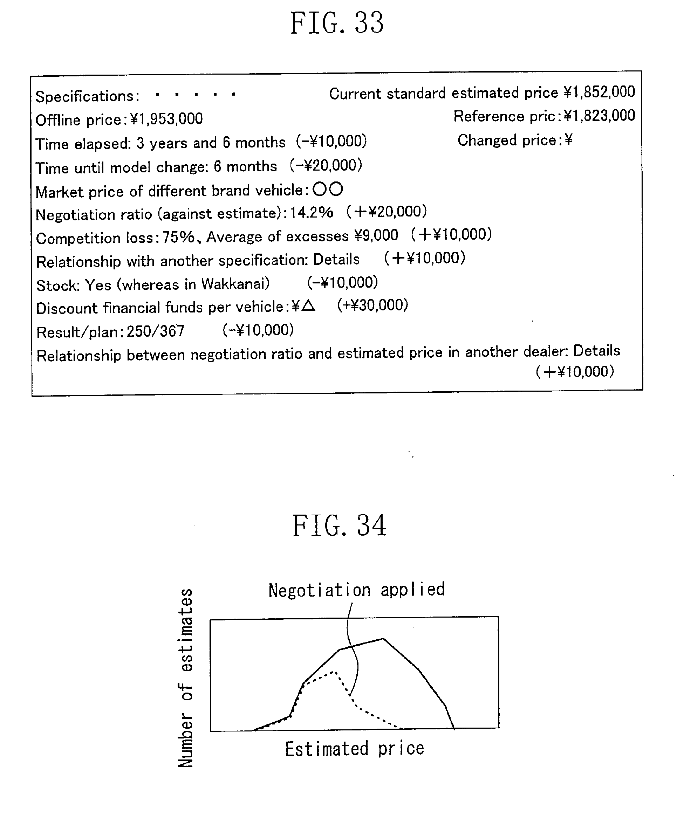

In step S505, an estimate input window as shown in FIG **33** is displayed. In next step S506, an average of market prices (namely, prices at which vehicles are sold offline without using the present system) set by the dealer with respect to vehicles having specifications equivalent to those of the customized vehicle (related to the estimate request) or similar to them (namely, specifications different from those of the customized vehicle to a given or smaller extent) is calculated so as to display the average as an offline price in the estimate input window, and a price obtained by subtracting a predetermined price (that corresponds to, for example, business effort and can be optionally set) from the offline price is displayed as a reference price (lowered as the offline price is lowered) in the estimate input window.

In the calculation of the average, the price of a specified vehicle sold (such as a vehicle sold at a special price) is excluded, the price of a vehicle with similar specifications is corrected to a price of a vehicle with equivalent specifications, and the price of a vehicle of the same type as the customized vehicle is increased in weighting. Also, the price of a vehicle recently sold is increased in weighting and the price of a vehicle sold a rather long time ago is reduced in weighting. Furthermore, the price of a vehicle sold in the same or near month is given predetermined weight (which is larger when a vehicle was sold in the same month than when it was sold in a near month), and the prices of vehicles sold in the other months are excluded.

In next step S507, the time elapsed from model change time (start of selling) of the vehicle type including the customized vehicle (which is 3 years and 6 months in FIG **33**) and a standard correction price based on the elapsed time (which is -10,000 yen as displayed in parentheses following "3 years and 6 months" in FIG **33**) are displayed. This standard correction price is shifted in the minas direction as the elapsed time is longer.

In next step S508, the remaining time up to the next model change of the vehicle type including the customized vehicle (which is 6 months in FIG **33**) and a standard correction price based on the remaining time (which is -20,000 yen in FIG **33**) are displayed. This standard correction price is shifted in the minas direction as the remaining time is shorter.

In next step S509, vehicles of different brands having specifications or configurations equivalent or similar to those of the customized vehicle are selected from the market price information of vehicles of different brands stored in the reference information DB **36**, and the market price information of the selected vehicles of different brands are displayed. In this case, competitive vehicles of different brands alone may be specified without displaying the market price information of vehicles of different brands not specified. Also, with respect to a vehicle of different brand having specifications or configurations similar to those of the customized vehicle, a difference in the specifications or configurations from the customized vehicle is preferably displayed.

In next step S510, a negotiation ratio against the number of estimates presented with respect to vehicles with specifications equivalent to (that may be similar to) those of the customized vehicle by the dealer (namely, a ratio of the number of cases of entering into negotiations to the total number of estimate requests received by the dealer) and a standard correction price based on the negotiation ratio are displayed. This standard correction price is shifted in the minas direction as the negotiation ratio is lower. Furthermore, in the calculation of the negotiation ratio, data of a specified vehicle sold (for example, a vehicle sold at a special price) is excluded, data of a vehicle with similar specifications is corrected to that of a vehicle with equivalent specifications to those of the customized vehicle, and the same type of vehicle as the customized vehicle is increased in weighting. Also, the data of a vehicle recently sold is increased in weighting and the data of a vehicle sold a rather long time ago is reduced in weighting. Furthermore, the data of a vehicle sold in the same or near month is given predetermined weight, and the data of vehicles sold in the other months is excluded. The negotiation ratio may be replaced with a contract ratio against the number of estimate requests (namely, a ratio of the number of cases of reaching contract to the total number of estimate requests received by the dealer).

In next step S511, competition loss information regarding vehicles with specifications equivalent to (that may be similar to) those of the customized vehicle in competition with another dealer (namely, a ratio that an estimated price presented by the dealer is too high as compared with one presented by another dealer to reach negotiations (or a contract)) and an average of excesses beyond estimated prices presented by the other dealers are displayed.

In next step S512, in the case where the estimated price of the customized vehicle has been input by the person in charge, the relationship between the input estimated price and an estimated price of another vehicle with similar specifications or configurations that has been already presented by the dealer to the customer is displayed. This relationship includes, for example, inconsistency between a difference in the specifications or configurations and a difference in the estimated price (namely, inconsistency that an estimated price of a vehicle having equivalent specifications or configurations to the customized vehicle that should be higher (or lower) than an estimated price of another vehicle with similar specifications or configurations is lower (or higher)), and a too large difference between the estimated prices as compared with a difference between the specifications or configurations (namely, inconsistency that an estimated price of a vehicle having equivalent specifications or configurations to the customized vehicle is too high (or low) as compared with an estimated price of another vehicle with similar specifications or configurations).

In next step S513, the stock situation (which is the stock situation in the dealer in particular but may be the stock situation in another dealer or the manufacturer) and the manufacture situation of vehicles having equivalent specifications or configurations to the customized vehicle and a standard correction price based on these situations are displayed. This standard correction price is shifted in the minas direction when the stock is comparatively large, and is set in consideration of cost of transport to the dealer if the stock is in another dealer.

In next step S514, discount financial funds per vehicle of the dealer and a standard correction price based on the discount financial funds are displayed. The discount financial funds per vehicle correspond to a value obtained by dividing the total discount financial funds of the dealer by the number of vehicles sold in the same month of the previous year or in the previous month. The number of sold vehicles may be replaced with the number of presented estimates, and the total discount financial funds may be displayed instead of the discount financial funds per vehicle.

In next step S515, the situation of the number of vehicles actually sold against the number of vehicles planned to be sold in the current month by the dealer and a standard correction price based on the situation are displayed. This standard correction price is shifted in the minas direction when the number of actually sold vehicles is comparatively small as compared with the planned number. The situation of the number of actually sold vehicles against the planned number may be replaced with the situation of the result number of estimates against the planned number of estimates or the situation of the result number of negotiations against the planned number of negotiations.

In next step S516, an estimated price of a vehicle having equivalent specifications to the customized vehicle input by another dealer (preferably input within a predetermined period) is read from the reference information DB **36** to be displayed. In this case, an estimated price input by another dealer away from the selected dealer by a predetermined distance or more (namely, another dealer not located within the sales area of the selected dealer) is preferably not displayed. Also, another dealer may be specified by the selected dealer so that estimated prices input by dealers not specified may not be displayed. Furthermore, an estimated price presented by another dealer at the request from the same customer is preferably not displayed. In addition, estimated prices of not only a vehicle having equivalent specifications to the customized vehicle but also a vehicle having similar specifications input by another dealer are preferably displayed. In this case, a difference in the specifications or configurations from those of the customized vehicle is preferably displayed together. In the case where there are a large number of estimated prices of such vehicles with similar specifications or configurations, data of a predetermined number of vehicles with a smaller difference in the specifications or configurations are preferably extracted. Alternatively, a ranking of the estimated price may be displayed so that it can be understood which position in the ranking can be get at what estimated price.

In next step S517, the prime cost of the customized vehicle and the profit rate of the dealer or the manufacturer are displayed.

In next step S518, an estimated price presented by another dealer with respect to a vehicle having equivalent specifications or configurations to the customized vehicle and the negotiation application information related to this estimated price are read from the reference information DB **36** so that the estimated price and a ratio of the total number of cases of presenting the same estimated price to the number of cases of entering into negotiations (negotiation ratio) can be displayed. Specifically, when a "detail" button in the lowermost item, "Relationship between negotiation ratio and estimated price", in the estimate input window is operated, a graph for showing distribution of estimated prices (the relationship between an estimated price and the number of times of presenting the estimated price) as shown in FIG **34** is displayed. This graph also shows the relationship between the estimated price and the number of cases of reaching negotiations with the estimated price presented (shown with a broken line) so that it can be easily grasped how the negotiation ratio is changed in accordance with the estimated price.

In next step S519, with respect to vehicles each having equivalent specifications or configurations to the customized vehicle, data of customers having requested for an estimate and data of customers having entered into negotiations with the dealer (or another dealer located within a predetermined distance from the dealer or all the dealers) are displayed.

In next step S520, competitive vehicles having equivalent specifications or configurations to the customized vehicle (including those available in the dealer), a competitive dealer and an estimated price having been presented by the competitive dealer, which are all input by the customer, are displayed.

In next step S521, the total price range (preferable consumption price) input by the customer in the specification or configuration selection initial window before inputting preferred specifications is displayed, and in step S522, the customer group input by the customer is displayed.

In next step S523, the onerous service history-of the customer and a standard correction price based on the history are displayed. This standard correction price is shifted more largely in the minas direction as a sum of the onerous services received within a predetermined period is larger, is shifted in the minus direction when a periodical inspection service was provided and is shifted in the plus direction when a service for unexpectedly repairing an old model vehicle was provided.

In next step S524, the number of vehicles possessed by the customer and a standard correction price based on the number are displayed. This standard correction price is shifted more largely in the minus direction as the number of possessed vehicles is larger, and is largely shifted in the minus direction when the customer possesses an old model vehicle.

In next step S525, the type of parking place input by the customer, advertising effectiveness of the parking place and a standard correction price based on the effectiveness are displayed. This standard correction price is shifted in the minus direction when the parking place is a conspicuous place and is highly effective for advertising. This shift in the minus direction is born by the manufacturer (because the manufacturer is thus advertised).

In next step S526, the information for introducing a possible customer input by the customer and a standard correction price based on the information are displayed. This standard correction price is shifted in the minus direction when a larger number of possible customers are introduced, and is shifted in the minus direction more largely when the introduced possible customer possesses a type of vehicle sold by another dealer different from the selected dealer than when the introduced possible customer possesses a type of vehicle sold by the dealer. A sales promotion e-mail is sent to a possible customer thus introduced, and information of the possible customer is stored in association with the current customer in the customer DB **34** so that, in the case where the possible customer actually makes a contract, the customer having introduced the possible customer can be provided with a predetermined restoration service (such as cash back and a gratuitous service).

In next step S527, information of an introduced possible customer input by the customer (namely, information that the customer is introduced as a possible customer by another customer) and a standard correction price based on the information are displayed. This standard correction price is shifted in the minus direction when the current customer is introduced by another customer. However, it should be confirmed that the customer is actually introduced by another customer on the basis of the past data. An e-mail that the introduced customer has requested for an estimate is sent to the customer having introduced the current customer.

In next step S528, the desired delivery time input by the customer and a standard correction price based on the desired delivery time are displayed. This standard correction price is more largely shifted in the minus direction as the desired delivery time is earlier, and much more largely shifted in the minus direction when the desired delivery time is before the end of the term.

In next step S529, the desired brand (type) of substituted vehicle input by the customer and a standard correction price based on the desired brand are displayed. This standard correction price is shifted in the minus direction when the desired brand is a vehicle type sold by another dealer and when there is no desired brand of substituted vehicle.

In next step S530, a reference information display subroutine using an access history is executed, so that the history of accesses made by the customer to the manufacturer server **1** (including information capable of being introduced from the access history) and a standard correction price based on the access history can be displayed. The reference information display subroutine using the access history will be described in detail later.

In next step S531, the time when the customer previously purchased a vehicle and a standard correction price based on the time are displayed. This standard correction price is shifted in the minus direction when the time of the previous purchase is before a predetermined period or when time until the next regular inspection of the previously purchased vehicle is shorter than a predetermined period (and the standard correction price may be more largely shifted in the minus direction as the time after the previous purchase is longer or as the time until the next inspection is shorter).

In next step S532, information of the previous vehicle purchase by the customer (such as the estimated price) and a standard correction price based on the information are displayed. This standard correction price is shifted in the minus direction when the estimated price presented at the previous purchase is rather low (namely, the discount ratio is rather high as compared with the average discount ratio at that time).

In next step S533, recent environmental change input by the customer and a standard correction price based on the environmental change are displayed. This standard correction price is shifted in the minus direction when any environmental change such as a change of occupation, a change of address and the increase of the size of family has recently occurred to the customer. Also, the standard correction price is shifted in the minus direction when the specifications of the customized vehicle accord with the environmental change (for example, a minivan is selected when the size of family is increased).

In next step S534, the genre of the type of vehicle possessed by the customer (which may be that stored in the association with the user ID in the customer DB **34** when the customer purchased the vehicle or may be input by the customer) and a standard correction price based on the genre are displayed. This standard correction price is shifted in the minus direction when the genre of the vehicle type including the customized vehicle is completely different from the genre of the type of the possessed vehicle.

In next step S535, a "reference price" button is clicked in the estimate input window, so as to display the reference price in a reference price column.

In next step S536, the reference price displayed in the reference price column of the estimate input window is changed through selection of the respective standard correction prices displayed as described above.

In next step S537, it is determined whether or not an estimated price has been input in a changed price column. When NO, namely, when the estimated price has not been input, the processing is ended. When YES, namely, when the estimated price has been input, the flow proceeds to step S538, where the possibility of negotiations (or a contract) reached with the estimated price presented is calculated and informed, and then, the processing is ended.

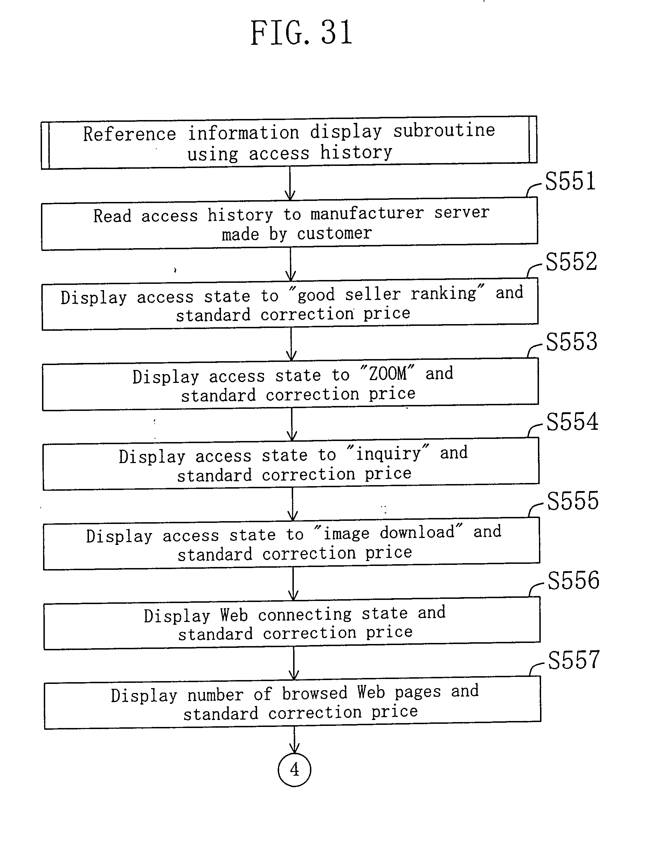

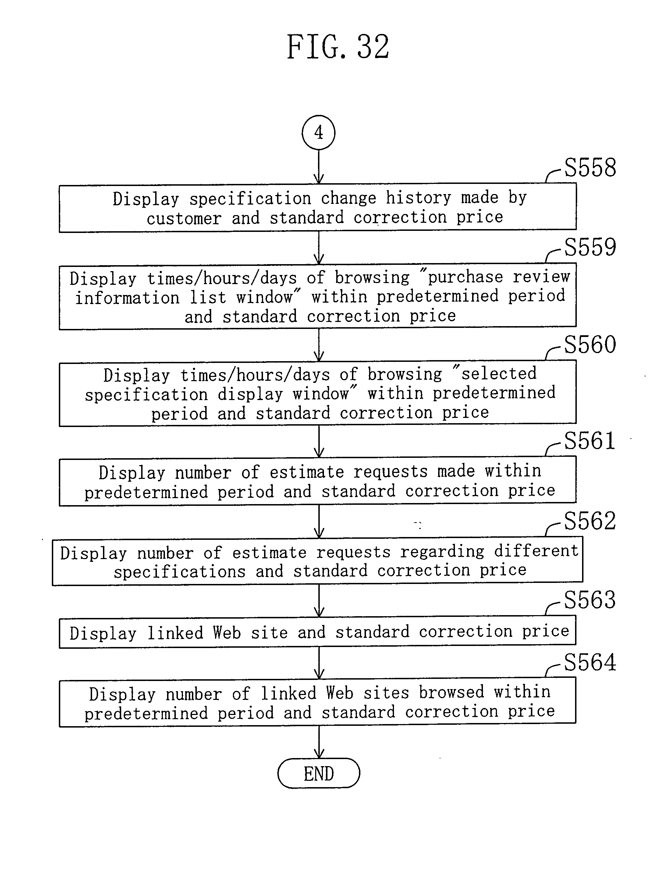

Now, the reference information display subroutine by using the access history performed in step S530 will be described in detail with reference to FIGS. **31** and **32.**

In first step S551, the access history made by the customer to the manufacturer server **1** is read from the customer DB **34.** In step S552, the state of access made by the customer to "good seller ranking" (which is an operation button (not shown) provided in the selected specification display window (of FIG **16**) or the like by which the sales ranking of the customized vehicle is displayed on the user terminal **5**) and a standard correction price based on the access state are displayed. This standard correction price is shifted in the minas direction when the number of accesses made to the "good seller ranking" within a predetermined period (of, for example, 1 through 3 months, which is necessary for a customer to consider the purchase; the same applies to the predetermined period mentioned below in the description of this subroutine) is larger than a predetermined number (and may be shifted more largely in the minas direction as the number of accesses is larger).

In next step S553, the state of access to "ZOOM" made by the customer with respect to the customized vehicle (namely, the operation of the "ZOOM" button in the vehicle specification selection window (shown in FIG **14**)) and a standard correction price based on the access state are displayed. This standard correction price is shifted in the minas direction when an access is made to the "ZOOM" within the predetermined period (and may be shifted more largely in the minas direction as the number of accesses is larger).

In next step S554, the state of access to "inquiry" made by the customer (which can be made by operating an "inquiry" button at the lowermost column in the home window **A-2** (shown in FIG **13**)), the contents of the inquiry and a standard correction price based on the access state are displayed. This standard correction price is shifted in the minas direction when an access to the "inquiry" is made within the predetermined period. The contents of the inquiry may or may not relate to the customized vehicle.

In next step S555, the state of access to "image download" made by the customer with respect to the customized vehicle (in which the appearance image of the customized vehicle can be downloaded by clicking the image thereof in the vehicle specification or configuration selection window (shown in FIG **14**)) and a standard correction price based on the access state are displayed. This standard correction price is shifted in the minas direction when an access is made to the "image download" within the predetermined period (and may be more largely shifted in the minus direction as the number of accesses is larger).

In next step S556, the Web connecting time when the customer is staying at the Web site of the present system with respect to the customized vehicle and a standard correction price based on the connecting time are displayed. This standard correction price is shifted in the minas direction when the connecting time (namely, the access time to the manufacturer server **1**) is longer than a predetermined time within the predetermined period (and may be more largely shifted in the minus direction as the connecting time is longer).

In next step S557, the number of pages browsed by the customer by using the browser program during the stay in the Web site of the present system (namely, during the access to the manufacturer server **1**) and a standard correction price based on the number of browsed pages are displayed. This standard correction price is shifted in the minas direction when the number of pages browsed within the predetermined period is larger than a predetermined number (and may be more largely shifted in the minus direction as the number of browsed pages is larger).

In next step S558, the history of specification change of the customized vehicle made by the customer and a standard correction price based on the specification change history are displayed. This standard correction price is shifted in the minus direction when the time spent on the specification selection is longer than a predetermined time (and may be shifted more largely in the minus direction as the time spent on the specification selection is longer).

In next step S559, the number of times of browsing the "purchase review information list window" (shown in FIG **20**) by the customer within the predetermined period, the number of hours and days spent on browsing it and a standard correction price based on them are displayed. This standard correction price is shifted in the minus direction when the number of browsing times, browsing hours or browsing days is larger than a predetermined number (and may be shifted in the minas direction more largely when the number of browsing times, browsing hours or browsing days is larger).

In next step S560, the numbers of times of browsing and the numbers of hours and days spent on browsing the "selected specification display window" (shown in FIG **16**) of the customized vehicle by the customer within the predetermined period and a standard correction price based on them are displayed. This standard correction price is shifted in the minas direction when the number of browsing times, hours or days is larger than a predetermined number of times, hours or days (and may be more largely shifted in the minas direction as the number of browsing times, hours or days is larger).

In next step S561, the number of estimate requests regarding the customized vehicle and another customized vehicle having different specifications made by the customer of the dealer and other dealers within the predetermined period (or the number of estimate requests regarding the customized vehicle made by the customer of other dealers within the predetermined period) and a standard correction price based on the number are displayed. This standard correction price is shifted in the minas direction when the number of estimate requests is larger than a predetermined number (of, for example, 10) (and may be more largely shifted in the minas direction as the number is larger).

In next step S562, the number of estimate requests regarding another customized vehicle having different specifications from the current customized vehicle made by the customer of the dealer within the predetermined period and a standard correction price based on the number are displayed. This standard correction price is shifted in the minas direction when the number of estimate requests is larger than a predetermined number (of, for example, 5) (and may be more largely shifted in the minus direction as the number is larger).

In next step S563, a Web site linked to the present site and browsed by the customer before the access to the present Web site and a standard correction price based on the linked site are displayed. This standard correction price is shifted in the minas direction when the linked site is a Web site of the manufacturer.

In next step S564, the number of Web sites linked to the present site and browsed by the customer before the access to the present Web site and a standard correction price based on the number are displayed. This standard correction price is shifted in the minas direction when the number of linked Web sites is larger than a predetermined number (and may be more largely shifted in the minus direction as the number is larger).

The number of options selected by the customer with respect to the customized vehicle and a standard correction price based on the number of selected options may be also displayed. In this case, the standard correction price is shifted in the minus direction when the number of selected options is 0 or 4 through 9 (which is because there is statistical tendency that it is difficult to enter into negotiations when the number of selected options is 1 through 3).

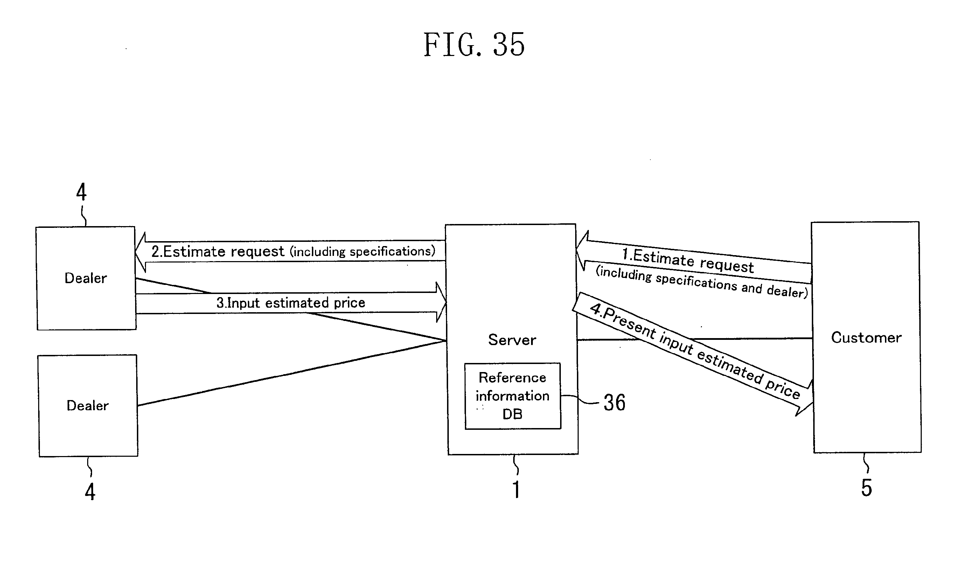

The principal points of Embodiment 1 after an estimate request are summarized in FIG **35**. Specifically, the customer (the user terminal **5**) requests for an estimate (including specifications and a dealer selected by the customer) of the manufacturer server **1**. When the manufacturer server **1** receives the estimate request, it sends the estimate request (including the selected specifications) to the dealer selected by the customer (the dealer terminal **4** through the dealer server **2**), so that a person in charge of the dealer can input an estimated price. When the person in charge of the dealer inputs the estimated price, reference information, such as an estimated price input by another dealer and market price information of another brand vehicle, read from the reference information DB **36** is displayed on the dealer terminal **4**. When the person in charge of the dealer has input the estimated price determined based on the reference information in the dealer terminal **4**, the estimated price is sent to the manufacturer server **1** through the dealer server **2**. The manufacturer server **1** sends the estimated price to the customer (the user terminal **5**) having made the estimate request.

In Embodiment 1, the estimated price may be any of a price obtained by subtracting a discount price from the manufacturer recommended retail price, a price obtained by subtracting a discount price from a sum of the manufacturer recommended retail price and various expenses necessary for the purchase, a price obtained by subtracting an assessed price of a trade-in vehicle (determined in consideration of a discount) from the manufacturer recommended retail price, and a price obtained by subtracting an assessed price of a trade-in vehicle (determined in consideration of a discount) from a sum of the manufacturer recommended retail price and various necessary expenses.

Accordingly, when a dealer inputs an estimated price in Embodiment 1, reference information to be considered in deciding the estimated price is provided to the dealer, and hence, the dealer can grasp an appropriate estimated price on the basis of the reference information. Therefore, the dealer can easily set an estimated price that is not much higher than an estimated price set by another dealer and can satisfy the customer. As a result, the opportunity of negotiations can be minimally lost against the intention of the dealer.

Although the dealer server **2** is installed in the dealer in Embodiment 1, if the dealer terminal **4** can make an access to the manufacturer server **1** without the dealer server **2**, the dealer server **2** can be omitted. In this case, the manufacturer server **1** executes also the estimate/assessment processing (shown in FIG **26**) performed by the dealer server **2** in the above description (which also applies to a modification, Embodiment 2 and its modification described below). Thus, the manufacturer server **1** can construct a vehicle sales support apparatus for supporting vehicle sales to customers online (although the manufacturer server **1** and the dealer server **2** together construct the vehicle sales support apparatus in Embodiment 1).

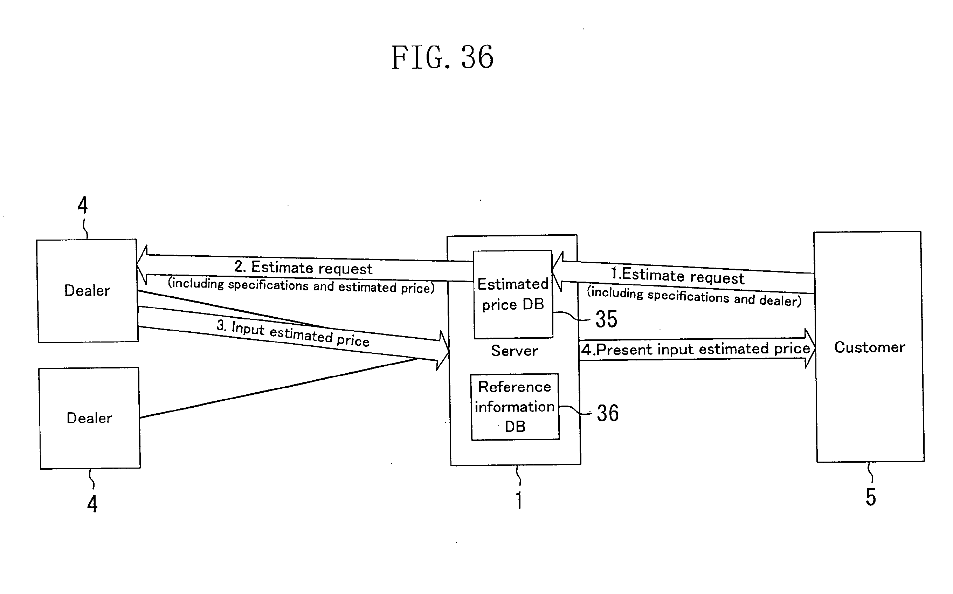

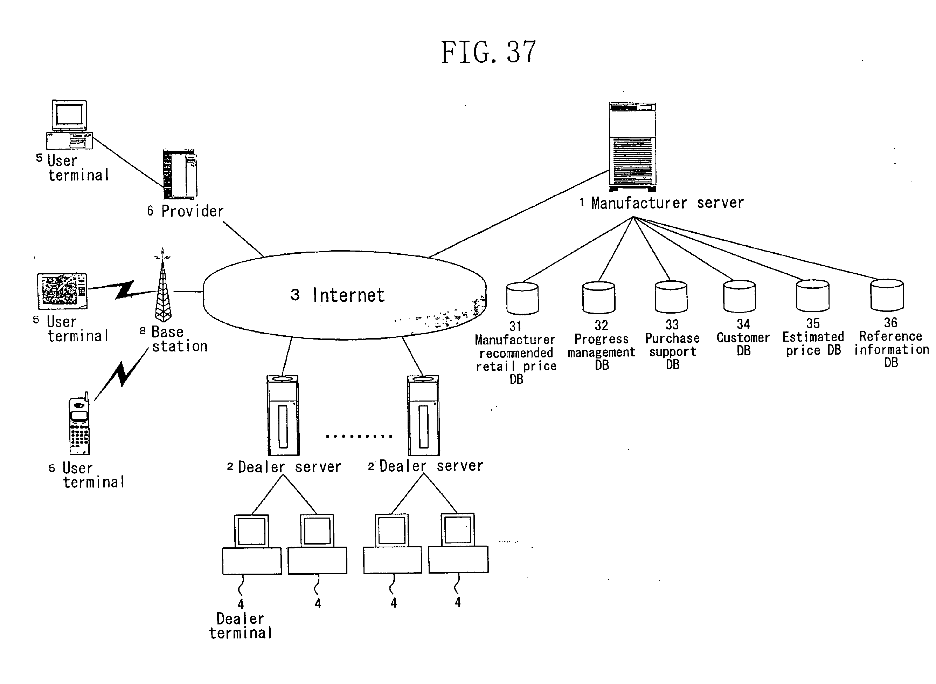

FIG **36** shows a modification of Embodiment 1. Specifically, in this modification, a manufacturer server **1** has an estimated price DB **35** in which estimated prices of vehicles having different specifications or configurations set by each dealer are stored as in Embodiment 2 (shown in FIG **37**) described below. When an estimate request regarding a vehicle with specifications or configurations selected by a customer (namely, a customized vehicle) is received from the customer, the selected specifications or configurations and the estimated price of a vehicle with the selected specifications or configurations set by a dealer selected by the customer, which is read from the estimated price DB **35**, are presented to the selected dealer (selected distributor), so that the dealer can input a new estimated price of the vehicle with the selected specifications or configurations. When the dealer inputs the new estimated price, reference information is presented to the dealer in the same manner as in Embodiment 1. After the dealer inputs the new estimated price (if the presented estimated price is approved, the same price is input or the approval is input), the manufacturer server **1** sends the input estimated price (if the approval is input, it is regarded that the same estimated price has been input) to the customer having made the estimate request. In the case where an estimated price is thus presented to a dealer by providing the estimated price DB **35**, the dealer can refer to the previously set estimated price stored in the estimated price DB **35** in deciding a new estimated price, and hence, an estimated price can be more easily set. In the case where the dealer inputs an estimated price different from the presented estimated price, the estimated price stored in the estimated price DB **35** may be updated to the new estimated price, but the update is performed after presenting the new estimated price to the customer. Also, in this modification, the estimated price is a price obtained by subtracting a discount price from the manufacturer recommended retail price or a price obtained by subtracting a discount price from a sum of the manufacturer recommended retail price and necessary expenses (which applies to Embodiment 2 and its modification described below).

### EMBODIMENT 2

FIG **37** is a conceptual diagram for showing the whole structure of a customized vehicle estimate/order or configuration system according to Embodiment 2 of the invention (in which like reference numerals are used to refer to like elements shown in FIG **1** and the detailed description is omitted). In Embodiment 2, an estimate request is automatically replied differently from Embodiment 1 in which an estimated price is input in the dealer terminal **4** in response to an estimate request from a customer.

Specifically, the manufacturer server **1** of this embodiment has an estimated price DB **35** similar to that described in the modification of Embodiment 1. When an estimate is requested by the user terminal **5**, in the estimate/assessment request processing (M3), without sending the estimate request (and the specifications or configurations of the customized vehicle) to the dealer server **2** as in Embodiment 1, estimated price providing processing for providing, to the customer, an estimated price obtained by accessing the estimated price DB **35** is performed. Also, apart from the processing modules described in Embodiment 1, update processing for updating estimated prices stored in the estimated price DB **35** through access to the estimated price DB **35** by the dealer is executed. In other words, when the dealer terminal **4** is operated for requesting the update, the estimated prices of the respective specifications or configurations set by the dealer and stored in the estimated price DB **35** can be updated through the manufacturer server **1**.

When the dealer makes an update request by specifying specifications or configurations related to the estimated price update, the estimated price of a vehicle with the specified specifications or configurations set by the dealer and stored in the estimated price DB **35** is presented to the dealer, and the dealer is allowed to input a new estimated price of the vehicle with the specified specifications or configurations. This input estimated price is stored in the estimated price DB **35** as an updated estimated price to be sent to a customer when the dealer is selected.

Furthermore, when the dealer inputs the estimated price, the reference information, such as an estimated price input by another dealer and market price information of another brand vehicle, read from the reference information DB **36** is presented to the dealer in the same manner as in Embodiment 1.

Although every dealer can update the estimated prices set by itself and stored in the estimated price DB **35**, the estimated price DB **35** is constructed so that estimated prices set by another dealer cannot be updated by using a general security function for guaranteeing the autonomy and independency in the sales business operations of respective dealers.

The reference information DB **36** stores, similarly to that of Embodiment 1, the market price information of other brand vehicles different from vehicles whose specifications or configurations are to be selected by using the present system. The market price information of the other brand vehicles is calculated on the basis of used vehicle prices of these brand vehicles to be stored in the reference information DB **36**. Also, the reference information DB **36** stores an estimated price input by the dealer correspondingly to the specifications or configurations specified for the update request. Furthermore, the reference information DB **36** stores negotiation application information that a customer has requested negotiations correspondingly to selected specifications and an estimated price related to the negotiations.

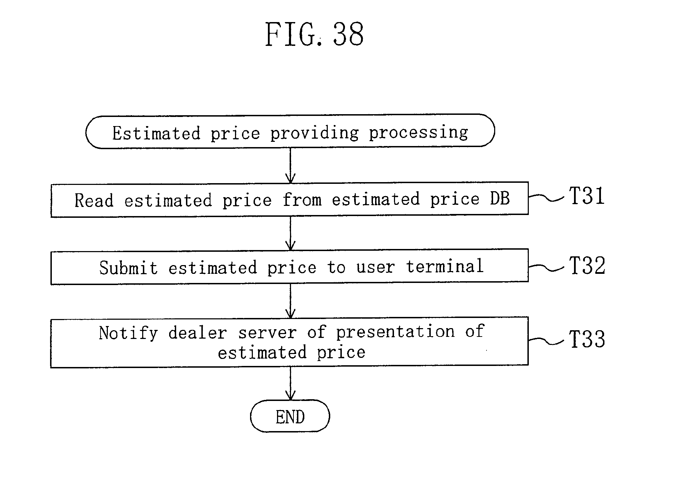

Now, the estimated price providing processing executed by the CPU **21** of the manufacturer server **1** will be described with reference to FIG **38**. FIG **38** is a flowchart for showing basic procedures in the estimated price providing processing, in which an estimated price of the customized vehicle set by the dealer selected by the customer is read from the estimated price DB **35** in response to the estimate request from the customer and the estimated price is sent to the customer.

Step T31: An estimated price set by the dealer selected by the customer corresponding to the customize number of the customized vehicle selected in the vehicle specification or configuration selection processing (M2) described in Embodiment 1 is read from the estimated price DB **35**.

Step T32: The read estimated price is sent to the mail address (the user terminal 5) previously input by the customer by e-mail and is stored in the customer DB **34** in association with the user ID. This e-mail includes a URL, and when a Web page specified by the URL is opened on the user terminal **5**, details of the estimated price can be confirmed in a window for displaying the estimate result. If the estimated price is lower or around a reference lowest price, the e-mail has contents for appealing this estimated price.

Step T33: The dealer server **2** is notified of the presentation of the estimated price to the customer by e-mail.

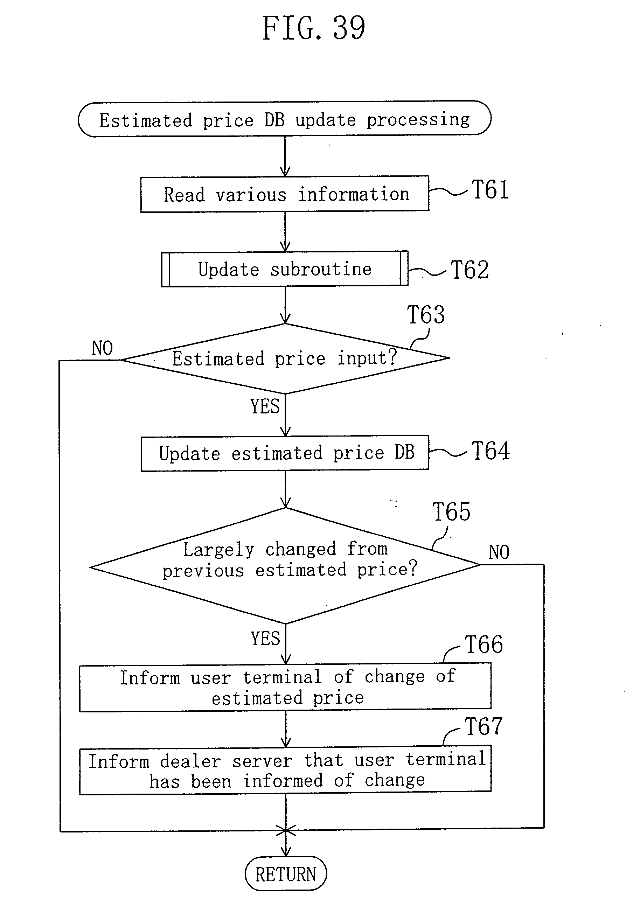

Next, the update processing for the estimated price DB **35** executed by the manufacturer server **1** will be described with reference to FIG **39**. The update processing for the estimated price DB **35** is performed with respect to each dealer.

Step T61: Various information necessary in an update subroutine described later read from the customer DB **34** and the reference information DB **36** are previously stored in the storage 26 of the manufacturer server **1**.

Step T62: The update subroutine for updating the contents of the estimated price DB **35** when an update request operation is performed by a person in charge of each dealer on the dealer terminal **4** is executed. The update subroutine will be described in detail later.

Step T63: It is determined whether or not an estimated price has been input by the person in charge of the dealer in an estimate input window described later with respect to the update subroutine, and when the estimated price has been input, the flow proceeds to step T64, and when not, the flow returns.

Step T64: The input estimated price is stored for updating the estimated price DB **35.**

Steps T65 through T67: With respect to a customer who has requested for an estimate of a customized vehicle having specifications or configurations equivalent to the specifications or configurations related to the update (within the predetermined period) and to whom the estimated price of the customized vehicle has been presented, it is determined whether or not the estimated price presented before is largely changed to a predetermined extent or more through the update by referring to the customer DB **34** (step T65). When the estimated price is not largely changed, the flow returns. When the estimated price is largely changed, an e-mail describing the change of the estimated price of the customized vehicle and the changed estimated price is sent to the user terminal **5** (step T66). Also, an e-mail describing that the e-mail regarding the change of the estimated price has been sent to the user terminal **5** is sent to the dealer terminal **2** (step T67). In this manner, the estimated price of a customized vehicle can be efficiently provided without manual assistance, which can contribute to reduction of the estimated price.

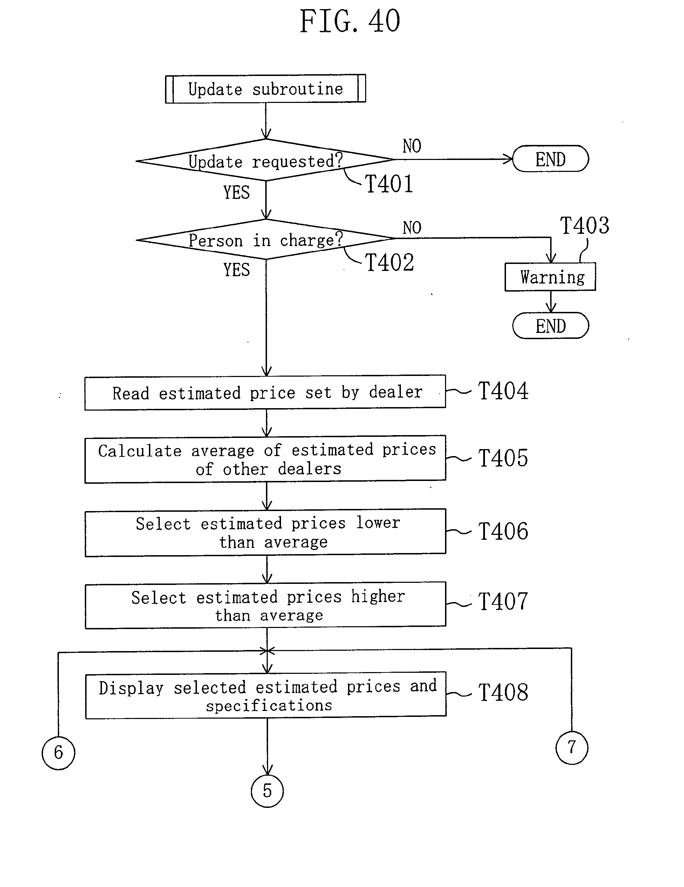

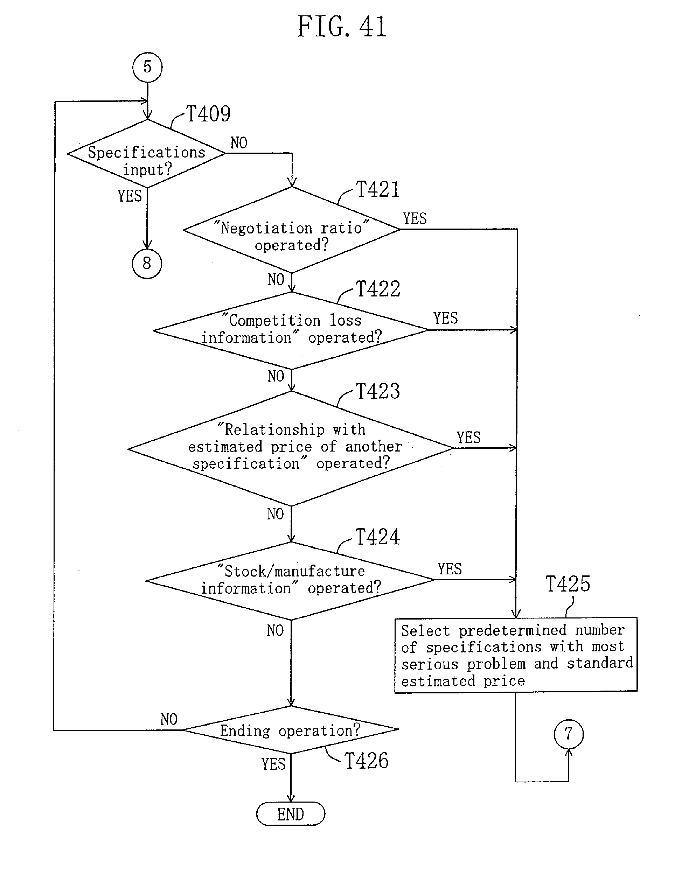

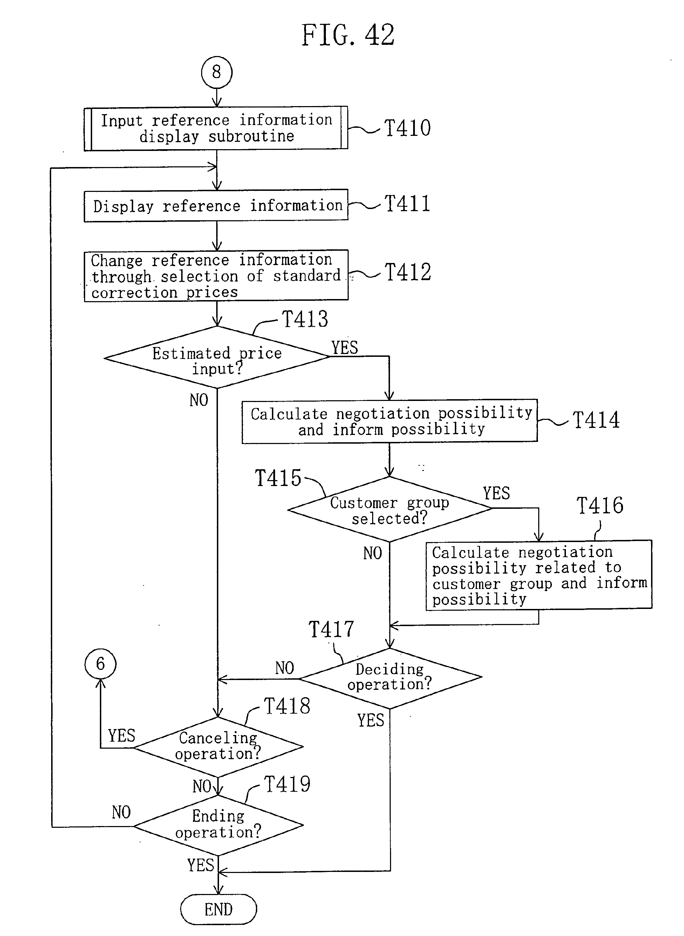

Now, the update subroutine performed in step T62 will be specifically described with reference to FIGS. **40** through **42**.

Step T401: It is determined whether or not an update request of the estimated price DB **35** sent from the dealer terminal **4** through the dealer server **2** has been received. When the request has been received, the flow proceeds to step T402, and when not, the subroutine is ended.

Steps T402 and T403: In response to the update request of the estimated price DB **35**, the validity of a user ID and a password input in the dealer terminal **4** is checked (step T402). When the update request is determined to have been made by a predetermined person in charge of the dealer (namely, when YES), the flow proceeds to step T404. When the update request is not made by the predetermined person in charge, the flow proceeds to step T403, where a warning is issued, and the subroutine is ended.

Step T404: The estimated prices of vehicles having the respective specifications or configurations set by the dealer are read from the estimated price DB **35**.

Step T405: The estimated prices of vehicles having the respective specifications or configurations set by all the other dealers are read from the estimated price DB **35**, and an average estimated price of each specification or configuration is calculated.

Steps T406 and T407: Among the estimated prices of the respective specifications or configurations set by the dealer having made the update request of the estimated price DB **35**, a predetermined number of estimated prices lower than the average estimated price are selected in the ascending order (step T406). Also, among the estimated prices of the respective specifications or configurations set by the dealer having made the update request of the estimated price DB **35**, a predetermined number of estimated prices higher than the average estimated price are selected in the descending order (step T407).

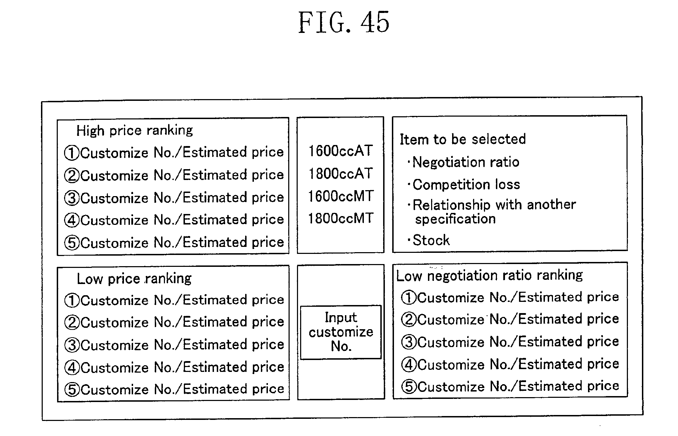

Step T408: The estimated prices selected in steps T406 and T407 and the customize numbers corresponding to these estimated prices are displayed on the dealer terminal **4** as a high price ranking and a low price ranking in the form of an estimated price list window as shown in FIG **45**. Also, customize numbers selected in step T425 described below are displayed on the dealer terminal **4** as a low negotiation ratio ranking or the like.

Step T409: It is determined whether or not a specification or configuration input operation for inputting a customize number in a customize number input column in the estimated price list window has been performed. When the operation has been performed, the flow proceeds to step T410, and when not, the flow proceeds to step T421.

Step T410: A subroutine for displaying, on the dealer terminal **4**, the reference information used by the person in charge of the dealer for setting an estimated price (an input reference information display subroutine) is executed. As described later, the input reference information display subroutine is substantially the same as a part of the estimate response input window display subroutine described in Embodiment 1, and an estimate input window similar to the estimate input window (shown in FIG **33**) of Embodiment 1 is displayed on the dealer terminal **4**.

Steps T411 and T412: In the estimate input window, a reference price of the specification or configuration input by the specification or configuration input operation (namely, the specification or configuration related to the update request) is displayed (step T411) and the reference price is changed in the same manner as in Embodiment 1 in accordance with the selection of standard correction prices in the estimate input window (step T412).

Steps T413 and T414: It is determined whether or not an estimated price has been input in an estimated price input column in the estimate input window by operating the dealer terminal 4 (step T413). When the estimated price has been input, the flow proceeds to step T414, where the possibility of entering into negotiations with the input estimated price presented is calculated by using a predetermined calculation formula and the possibility is notified. On the other hand, when the estimated price has not been input, the flow proceeds to step:T418.

Steps T415 and T416: It is determined whether or not a selecting operation for selecting one of a plurality of predetermined customer groups has been performed in the estimate input window. When the selecting operation has been performed, the flow proceeds to step T416, and when not, the flow proceeds to step T417. In step T416, the possibility of entering into negotiations with the input estimated price presented is calculated by using a predetermined calculation formula, and the dealer terminal **4** is notified of the calculated possibility and sales amount data of the selected customer group.

Steps T417 and T418: It is determined whether or not a deciding operation for deciding to store the input estimated price for updating the estimated price DB has been performed by operating the dealer terminal **4** (step T417). When the deciding operation has been performed, the subroutine is ended. When not, the flow proceeds to step T418.

Step T418: It is determined whether or not a canceling operation for canceling the input estimated price has been performed by operating the dealer terminal **4**. When the canceling operation has been performed, the flow returns to step T408, and when not, the flow proceeds to step T419.

Step T419: It is determined whether or not an ending operation for the update processing of the estimated price has been performed by operating the dealer terminal **4**. When the ending operation has been performed, the subroutine is ended, and when not, the flow returns to step T411.

Steps T421 through T425: It is determined whether or not "negotiation ratio" in an "item selecting column" in the estimated price list window has been selected (step T421). When YES, the flow proceeds to step T425, and when NO, the flow proceeds to step T422. Also, it is determined whether or not "competition loss information" has been selected (step T422). When YES, the flow proceeds to step T425, and when NO, the flow proceeds to step T424. Furthermore, it is determined whether or not "relationship with estimated price of another specification or configuration" has been selected (step T423). When YES, the flow proceeds to step T425, and when NO, the flow proceeds to step T424. In addition, it is determined whether or not "stock/manufacture information" has been selected (step T424). When YES, the flow proceeds to step T425, and when NO, the flow proceeds to step T426.

In step T425, a predetermined number of customize numbers having most serious problems (such as a very low negotiation ratio) with respect to the various factors corresponding to the aforementioned steps T421 through T424 and the estimated prices corresponding to these customize numbers are selected, and the flow returns to step T408.

Step T426: It is determined whether or not the ending operation for the update processing of the estimated price has been performed by operating the dealer terminal 4. When the ending operation has been performed, the subroutine is ended, and when not, the flow returns to step T409.

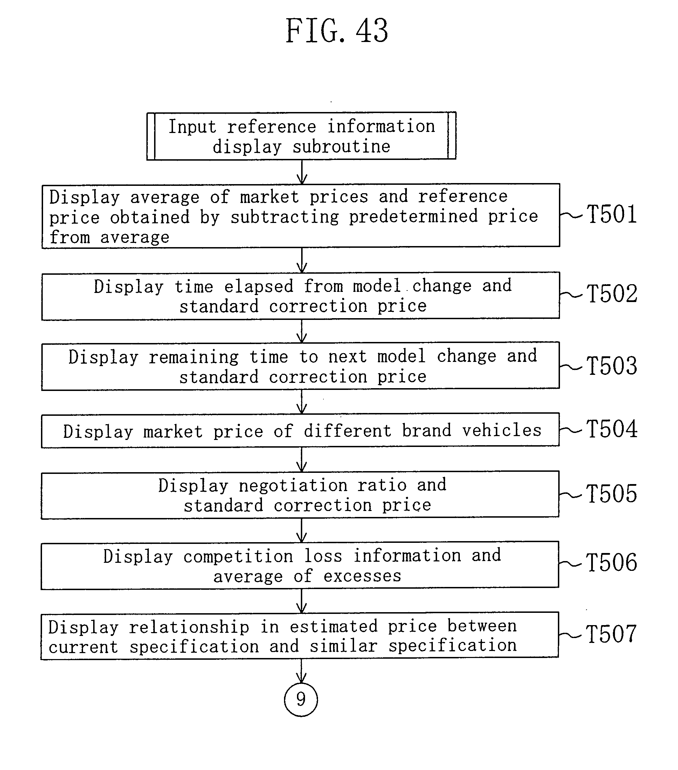

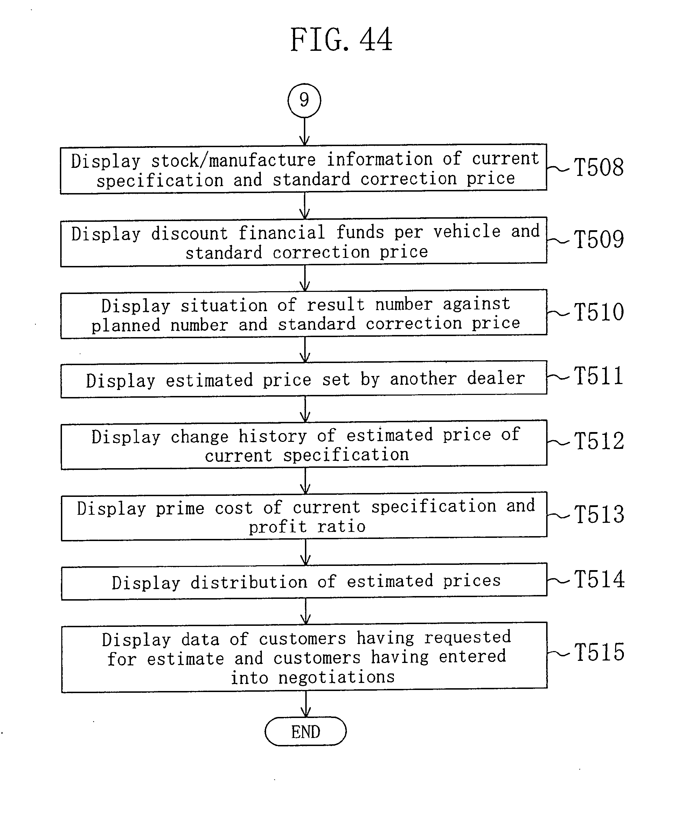

Now, the input reference information display subroutine performed in step T410 will be specifically described with reference to FIGS. **43** and **44**.

Step T501: An average of market prices (offline prices) of vehicles having specifications or configurations equivalent to or similar to the specifications related to the update request of the dealer (the specifications specified by the person in charge for the update of the estimated price) is calculated. The average is displayed as the offline price in the estimate input window, and a price obtained by subtracting a predetermined price (that corresponds to business effort and can be optionally set) from the offline price is displayed as the reference price (lowered as the offline price is lowered) in the estimate input window.

In the calculation of the average, the price of a specified vehicle sold (such as a vehicle sold at a special price) is excluded, the price of a vehicle with similar specifications is corrected to the price of a vehicle with equivalent specifications, and the price of a vehicle of the same type is increased in weighting. Also, the price of a vehicle recently sold is increased in weighting and the price of a vehicle sold a rather long time ago is reduced in weighting. Furthermore, the price of a vehicle sold in the same or near month is given predetermined weight (which is larger when a vehicle was sold in the same month than when it was sold in a near month), and the prices of vehicles sold in the other months are excluded.

Step T502: The time elapsed from model change time (start of selling) of the vehicle type including the vehicle having the specifications related to the update request and a standard correction price based on the elapsed time are displayed. This standard correction price is shifted in the minus direction as the elapsed time is longer.

Step T503: The remaining time up to the next model change of the vehicle type including the vehicle having the specifications related to the update request and a standard correction price based on the remaining time are displayed. This standard correction price is shifted in the minus direction as the remaining time is shorter.

Step T504: Vehicles of different brands having specifications equivalent or similar to the specifications relates to the update request are selected from the market price information of vehicles of different brands stored in the reference information DB **36**, and the market price information of the selected vehicles of different brands are displayed. In this case, competitive vehicles of different brands alone may be specified without displaying the market price information of vehicles of different brands not specified. Also, with respect to a vehicle of different brand having specifications or configurations similar to the specifications or configurations related to the update request, a difference in the specifications is preferably displayed.

Step T505: A negotiation ratio against the number of estimates presented with respect to vehicles with specifications or configurations equivalent to (that may be similar to) the specifications or configurations relates to the update request in the dealer (namely, a ratio of the number of cases of entering into negotiations to the total number of estimate requests received by the dealer) and a standard correction price based on the negotiation ratio are displayed. This standard correction price is shifted in the minas direction as the negotiation ratio is lower. Furthermore, in the calculation of the negotiation ratio, data of a specified vehicle sold (for example, a vehicle sold at a special price) is excluded, data of a vehicle with similar specifications or configurations is corrected to that of a vehicle with equivalent specifications to the specifications related to the update request, and the same type of vehicle is increased in weighting. Also, the data of a vehicle recently sold is increased in weighting and the data of a vehicle sold a rather long time ago is reduced in weighting. Furthermore, the data of a vehicle sold in the same or near month is given predetermined weight, and the data of vehicles sold in the other months are excluded.

Step T506: With respect to a vehicle with specifications or configurations equivalent to (that may be similar to) the specifications or configurations related to the update request, competition win information in competition with another dealer (namely, information of a case where an estimated price was sufficiently low for entering into negotiations) and competition loss information (namely, information of a case where an estimated price was too high as compared with one presented by another dealer to enter into negotiations) and a standard correction price based on these information are displayed. This standard correction price is shifted in the minas direction when the number of competition loss within a predetermined period is larger than a predetermined number and shifted largely in the minas direction when the number of competition loss is smaller than a predetermined number. Also, in the case of competition loss, the standard correction price is shifted more largely in the minas direction as a difference from the estimated price presented by the win dealer is larger, and the standard correction price is less shifted as the number of competing estimates is larger (by dividing a predetermined correction extent by the number of estimates). Furthermore, data of a vehicle with similar specifications is corrected to that of a vehicle with equivalent specifications or configurations, and the same type of vehicle is increased in weighting. Also, the data of a vehicle recently sold is given predetermined weight and the data of a vehicle sold a rather long time ago is excluded.

Step T507: The relationship between the estimated price of a vehicle having the same specifications as those related to the update request and the estimated price of another vehicle with similar specifications to that related to the update request set by the dealer and a standard correction price based on the relationship are displayed. This relationship includes, for example, inconsistency between a difference in the specifications and a difference in the estimated price (namely, inconsistency that the estimated price of a vehicle having equivalent specifications or configurations to the specifications or configurations related to the update request that should be higher (or lower) than the estimated price of another vehicle with similar specifications or configurations is lower (or higher)), and a too large difference between the estimated prices as compared with a difference between the specifications or configurations (namely, inconsistency that the estimated price of a vehicle having equivalent specifications or configurations is too high (or low) as compared with the estimated price of another vehicle with similar specifications). This standard correction price is set to a value for eliminating the inconsistency and the too large difference.

Step T508: The stock situation (which is the stock situation in the dealer in particular but may be the stock situation in another dealer or the manufacturer) and the manufacture situation of vehicles having the specifications or configurations related to the update request and a standard correction price based on these situations are displayed. This standard correction price is shifted in the minas direction as the stock is comparatively larger, and is set in consideration of cost of transport to the dealer if the stock is in another dealer.

Step T509: Discount financial funds per vehicle of the dealer and a standard correction price based on the discount financial funds are displayed. The discount financial funds per vehicle corresponds to a value obtained by dividing the total discount financial funds of the dealer by the number of vehicles sold in the same month of the previous year or in the previous month. (The number of sold vehicles may be replaced with the number of presented estimates). The standard correction price is shifted more largely in the minas direction as the discount financial funds per vehicle is larger.

Step T510: The situation of the number of vehicles actually sold against the number of vehicles planned to be sold in the current month by the dealer and a standard correction price based on the situation are displayed. This standard correction price is shifted in the minas direction when the number of actually sold vehicles is comparatively small as compared with the planned number. The situation of the number of actually sold vehicles against the planned number may be replaced with the situation of the result number of estimates against the planned number of estimates or the situation of the result number of negotiations against the planned number of negotiations.

Step T511: An estimated price of a vehicle having the specifications related to the update request input by another dealer (preferably input within a predetermined period) is read from the reference information DB **36** to be displayed. In this case, an estimated price input by another dealer located away from the dealer related to the update request by a predetermined distance or more (namely, another dealer not located within the sales area of the dealer related to the update request) is preferably not displayed. Also, another dealer may be specified by the dealer so that estimated prices input by dealers not specified may not be displayed. Furthermore, an estimated price presented by another dealer at the request from the same customer is preferably not displayed. In addition, an estimated price of not only a vehicle having the specifications related to the update request but also a vehicle having similar specifications input by another dealer is preferably displayed. In this case, a difference in the specifications is preferably displayed together. In the case where there are a large number of estimated prices of such vehicles with similar specifications, data of a predetermined number of vehicles with a smaller difference in the specifications is preferably extracted. Alternatively, a ranking of the estimated price may be displayed so that it can be understood which position in the ranking can be get at what estimated price.

Step T512: A change history of the estimated price of a vehicle with the specifications related to the update request made by the dealer is displayed. Also, the factor of the change may be displayed together.

Step T513: The prime cost of a vehicle with the specifications related to the update request and a profit ratio of the dealer or the manufacturer are displayed.

Step T514: An estimated price input by another dealer and the negotiation application information with respect to a vehicle having the same specifications as those related to the update request are read from the reference information DB **36** so that the estimated price and the ratio of the total number of times of presenting the same estimated price to the number of times of entering into negotiations (negotiation ratio) can be displayed. Specifically, a graph for showing the distribution of estimated prices is displayed in the same manner as in Embodiment 1. This graph also shows the relationship between the estimated price and the number of cases of entering into negotiations with the estimated price presented so that it can be easily grasped how the negotiation ratio is changed in accordance with the estimated price (as shown in FIG **34**).

Step T515: With respect to a vehicle having the same specifications or configurations as the specifications or configurations related to the update request, data of customers having requested for an estimate and data of customers having entered into negotiations (or reached a contract) in the dealer (or another dealer located within a predetermined distance from the dealer or all the dealers) are displayed.

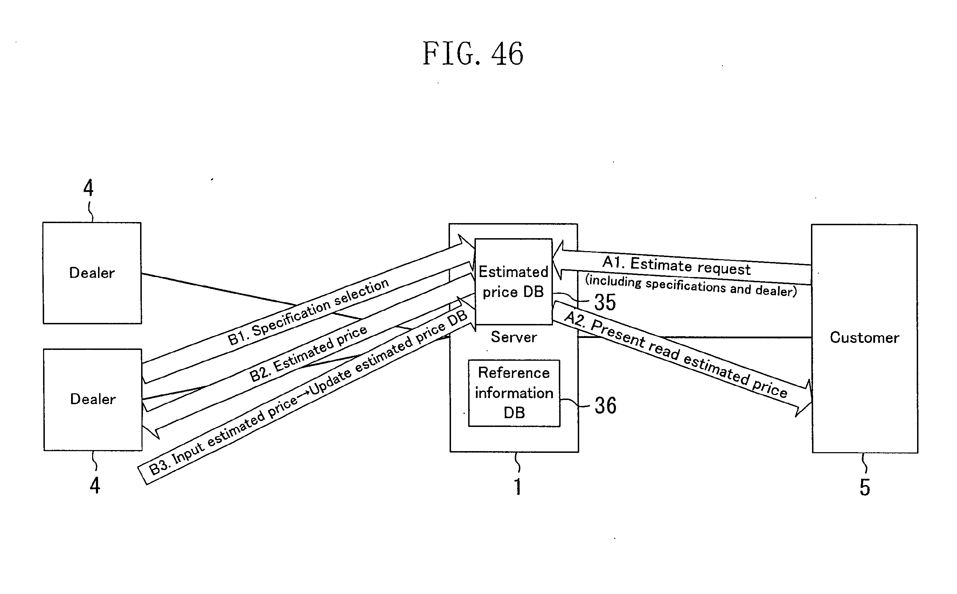

The principal points of Embodiment 2 after an estimate request are summarized in FIG **46**. Specifically, when a customer (the user terminal **5**) makes a request for an estimate (including specifications and a dealer selected by the customer) to the manufacturer server **1** and the manufacturer server **1** receives the estimate request, it reads the estimated price of a vehicle with the selected specifications or configurations set by the dealer selected by the customer from the estimated price DB **35** and automatically sends the estimated price to the customer (the user terminal **5**) having made the estimate request.

On the other hand, when a dealer (the dealer terminal **4**) makes a request for updating an estimated price with specifications or configurations specified to the manufacturer server **1**, the manufacturer server **1** reads the estimated price of a vehicle with the specifications or configurations related to the update request from the estimated price DB **35** to be presented to the dealer, so that a new estimated price of the vehicle with the specifications or configurations can be input by the dealer. When the dealer inputs the new estimated price, the reference information such as an estimated price input by another dealer and market price information of other brand vehicles read from the reference information DB **36** is displayed in the same manner as in Embodiment 1. When the dealer has input the new estimated price, the input new estimated price is stored in the estimated price DB **35** as an updated estimated price to be sent to a customer who selects the dealer.

Accordingly, also in Embodiment 2, since the reference information to be considered in setting an estimated price are provided to a dealer when the dealer inputs the estimated price in the same manner as in Embodiment 1, an appropriate estimated price that is not much higher than an estimated price set by another dealer and that can satisfy a customer can be easily set.

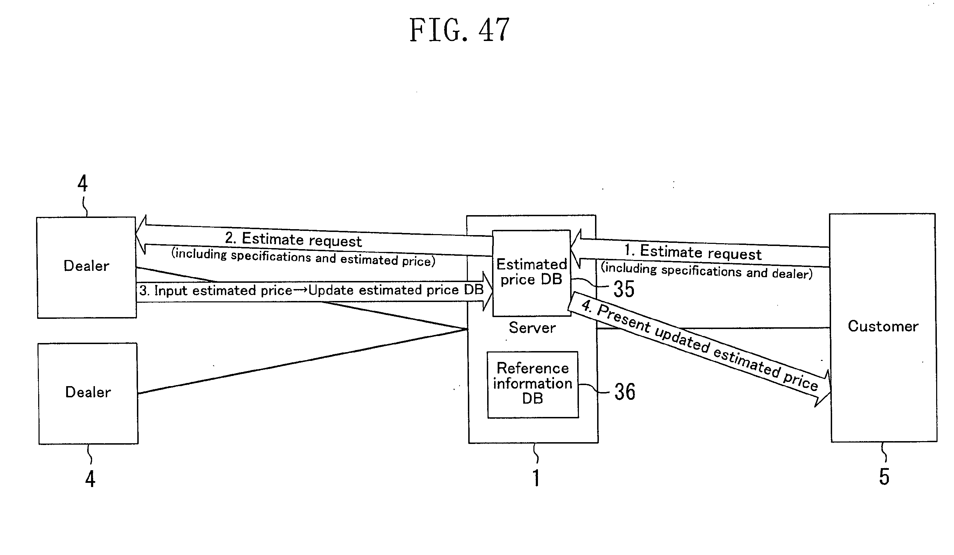

FIG **47** shows a modification of Embodiment 2. When a request for an estimate of a customized vehicle is received from a customer, differently from Embodiment 2 where an estimated price read from the estimated price DB **35** is directly presented to the customer, the selected dealer is given an opportunity to update the estimated price before presenting it to the customer in this modification. Specifically, when an estimate request is received, the selected specifications or configurations and the estimated price of a vehicle with the selected specifications or configurations set by a dealer selected by the customer is read from the estimated price DB **35** to be presented to the selected dealer (selected distributor), so that the dealer can input a new estimated price of a vehicle with the selected specifications. When the dealer inputs the new estimated price, the reference information is presented to the dealer in the same manner as in Embodiment 2. When the dealer has input the new estimated price (if the presented estimated price is approved, the same estimated price is input or approval of the estimated price is input), the manufacturer server 1 stores the input estimated price (if the approval is input, it is regarded as the same estimated price as the presented one being input) as an updated estimated price in the estimated price DB **35**. Thereafter, the updated estimated price is read from the estimated price DB **35** and sent to the customer having made the estimate request. In this manner, since the dealer is given an opportunity to update an estimated price, an appropriate estimated price can be always presented to a customer.

In each of Embodiments 1 and 2 (including their modifications), a manufacturer does not force dealers to employ the present system but the dealers spontaneously employ the present system to their mind, and there may be some dealers for selling vehicles offline without employing the present system.

## Claims

1. A vehicle sales support system for supporting vehicle sales to customers online by allowing a customer to select, via communications lines, preferred specifications from a plurality of specifications previously set with respect to a vehicle and sending an estimated price of a selectively specified vehicle having said preferred specifications to said customer in response to an estimate request from said customer, comprising:
a manufacturer recommended retail price database for storing data for enabling calculation of manufacturer recommended retail prices of vehicles having said plurality of specifications;
a reference information database for storing reference information to be used by each of a plurality of vehicle distributors in examining estimated prices of vehicles having said plurality of specifications;
an estimated price database for storing said estimated prices of vehicles having said plurality of specifications set by each of said plurality of distributors;
specification selection means for presenting said plurality of specifications of the vehicle to said customer, allowing said customer to select said preferred specifications from said plurality of specifications, calculating a manufacturer recommended retail price of said selectively specified vehicle on the basis of said data stored in said manufacturer recommended retail price database and presenting said calculated manufacturer recommended retail price to said customer;
distributor selection means for presenting said plurality of distributors to said customer and allowing said customer to select, from said plurality of distributors, a distributor by which an estimated price of said selectively specified vehicle is desired to be presented;
estimated price submit means, used when an estimate request regarding said selectively specified vehicle is received from said customer, for reading an estimated price of said selectively specified vehicle set by said distributor selected by said customer, and sending said read estimated price to said customer having made said estimate request;
estimated price setting means, used in response to an estimated price update request from any of said plurality of distributors, for presenting, to said distributor, an estimated price, set by said distributor, of a vehicle having specifications related to said update request read from said estimated price database, allowing said distributor to input a new estimated price of said vehicle having said specifications related to said update request, and storing said new estimated price for updating said estimated price database as an estimated price to be sent to a customer by said estimated price submit means when said distributor is selected by said customer; and
reference information providing means, used when said distributor having made said update request inputs said new estimated price, for presenting said reference information read from said reference information database to said distributor having made said update request.

2. The vehicle sales support system of Claim 1,
wherein said estimated price setting means stores said new estimated price input by said distributor having made said update request for updating said estimated price database and stores said new estimated price in said reference information database correspondingly to said specifications related to said update request, and
said reference information providing means reads, from said reference information database, an estimated price of a vehicle having said specifications related to said update request input by a distributor other than said distributor having made update request, and presents at least said read estimated price to said distributor having made said update request as reference information.

3. The vehicle sales support system of Claim 1 or 2,
wherein said reference information providing means is inhibited from presenting, to said distributor having made said update request as reference information, an estimated price input by a distributor located to be away from said distributor having made said update request by a given distance or more.

4. The vehicle sales support system of one of the preceding claims,
wherein said reference information providing means allows said distributor having made said update request to specify another distributor and is inhibited from presenting, to said distributor having made said update request as reference information, estimated prices input by the other distributors not specified by said distributor having made said update request.

5. The vehicle sales support system of one of the preceding claims, further comprising:
negotiation application accepting means, used when a negotiation application regarding said selectively specified vehicle is received from said customer to which said estimated price has been sent, for sending negotiation application information corresponding to said negotiation application regarding said selectively specified vehicle to said distributor selected by said customer, and storing said negotiation application information in said reference information database correspondingly to said preferred specifications and said estimated price related to said negotiation application,
wherein said reference information providing means reads, from said reference information database, an estimated price and negotiation application information of another distributor regarding a vehicle having said specifications related to said update request, and presents, to said distributor having made said update request as reference information, at least said estimated price and a ratio of a number of times of receiving negotiation applications to a total number of times of presenting the same estimated price.

6. The vehicle sales support system of one of the preceding claims,
wherein said reference information providing means reads, from said reference information database, an estimated price, input by another distributor, of a vehicle having specifications different from said specifications related to said update request to a given or smaller extent, and presents said read estimated price and specification difference to said distributor having made said update request as reference information.

7. The vehicle sales support system of one of the preceding claims,
wherein said reference information database stores market price information of vehicles of brands different from the vehicle whose specifications are to be selected by said specification selection means, and
said reference information providing means selects, from said market price information of the vehicles of different brands, market price information of a vehicle having specifications different from said specifications related to said update request to a given or smaller extent, and presents said selected market price information to said distributor having made said update request as reference information.

8. The vehicle sales support system of Claim 7,
wherein said reference information providing means allows said distributor having made said update request to specify a vehicle of different brand and is inhibited from presenting, to said distributor having made said update request as reference information, the market price information of other vehicles of different brands not specified by said distributor having made said update request.

9. The vehicle sales support system of Claim 7 or 8,
wherein said market price information of vehicles of different brands is calculated on the basis of prices of used vehicles of different brands and stored in said reference information database.

10. A vehicle sales support system for supporting vehicle sales to customers online by allowing a customer to select, via communications lines, preferred specifications from a plurality of specifications previously set with respect to a vehicle and sending an estimated price of a selectively specified vehicle having said preferred specifications to said customer in response to an estimate request from said customer, comprising:
a manufacturer recommended retail price database for storing data for enabling calculation of manufacturer recommended retail prices of vehicles having said plurality of specifications;
a reference information database for storing reference information to be used by each of a plurality of vehicle distributors in examining estimated prices of vehicles having said plurality of specifications;
an estimated price database for storing said estimated prices of the vehicles having said plurality of specifications set by each of said plurality of distributors;
specification selection means for presenting said plurality of specifications of the vehicle to said customer, allowing said customer to select said preferred specifications from said plurality of specifications, calculating a manufacturer recommended retail price of said selectively specified vehicle on the basis of said data stored in said manufacturer recommended retail price database, and presenting said calculated manufacturer recommended retail price to said customer;
distributor selection means for presenting said plurality of distributors to said customer and allowing said customer to select, from said plurality of distributors, a distributor by which an estimated price of said selectively specified vehicle is desired to be presented;
estimated price setting means, used when an estimate request regarding said selectively specified vehicle is received from said customer, for presenting, to said selected distributor, said preferred specifications and an estimated price of said selectively specified vehicle, set by said selected distributor, read from said estimated price database, allowing said selected distributor to input a new estimated price of said selectively specified vehicle, and storing said new estimated price as an estimated price of said selectively specified vehicle set by said selected distributor for updating said estimated price database;
estimated price submit means for reading, from said estimated price database, said estimated price of said selectively specified vehicle, set by said selected distributor, that has been stored for update by said estimated price setting means, and sending said read estimated price to said customer having made said estimate request; and
reference information providing means, used when said selected distributor inputs said estimated price, for presenting said reference information read from said reference information database to said selected distributor.

11. The vehicle sales support system of Claim 10,
wherein said estimated price setting means stores said new estimated price input by said selected distributor for updating said estimated price database, and stores said new estimated price in said reference information database correspondingly to said preferred specifications, and
said reference information providing means reads, from said reference information database, an estimated price of a vehicle having said preferred specifications input by another distributor different from said selected distributor, and presents at least said read estimated price to said selected distributor as reference information.

12. The vehicle sales support system of Claim 10 or 11,
wherein said reference information providing means is inhibited from presenting, to said selected distributor as reference information, an estimated price input by another distributor located to be away from said selected distributor by a given distance or more.

13. The vehicle sales support system of one of the preceding claims 10 to 12,
wherein said reference information providing means allows said selected distributor to specify another distributor, and is inhibited from presenting, to said selected distributor as reference information, estimated prices input by the other distributors not specified by said selected distributor.

14. The vehicle sales support system of one of the preceding claims 10 to 13,
wherein said reference information providing means is inhibited from presenting, to said selected distributor as reference information, an estimated price input by another distributor in response to an estimate request from a customer identical to said customer having selected said selected distributor.

15. The vehicle sales support system of one of the preceding claims 10 to 14, further comprising negotiation application accepting means, used when a negotiation application regarding said selectively specified vehicle is received from said customer to which said estimated price has been sent, for sending negotiation application information corresponding to said negotiation application regarding said selectively specified vehicle to said selected distributor selected by said customer, and storing said negotiation application information in said reference information database correspondingly to said preferred specifications and said estimated price related to said negotiation application,
wherein said reference information providing means reads, from said reference information database, an estimated price and negotiation application information of another distributor regarding a vehicle having said preferred specifications, and presents, to said selected distributor as reference information, at least said read estimated price and a ratio of a number of times of receiving negotiation application to a total number of times of presenting the same estimated price.

16. The vehicle sales support system of one of the preceding claims 10 to 15,
wherein said reference information providing means reads, from said reference information database, an estimated price, input by another distributor, of a vehicle having specifications different from said preferred specifications to a given or smaller extent, and presents said read estimated price and specification difference to said selected distributor as reference information.

17. The vehicle sales support system of one of the preceding claims 10 to 16,
wherein said reference information database stores market price information of vehicles of brands different from the vehicle whose specifications are to be selected by said specification selection means, and
said reference information providing means selects, from said market price information of the vehicles of different brands, market price information of a vehicle having specifications different from said preferred specifications to a given or smaller extent, and presents said selected market price informations of the vehicle of different brand to said selected distributor as reference information.

18. The vehicle sales support system of Claim 17,
wherein said reference information providing means allows said selected distributor to specify a vehicle of different brand, and is inhibited from presenting, to said selected distributor as reference information, the market price information of vehicles of different brands not specified by said selected distributor.

19. The vehicle sales support system of Claim 17 or 18,
wherein said market price information of vehicles of different brands is calculated on the basis of prices of used vehicles of different brands to be stored in said reference information database.

20. A vehicle sales support system for supporting vehicle sales to customers online by allowing a customer to select, via communications lines, preferred specifications from a plurality of specifications previously set with respect to a vehicle and sending an estimated price of a selectively specified vehicle having said preferred specifications to said customer in response to an estimate request from said customer, comprising:
a manufacturer recommended retail price database for storing data for enabling calculation of manufacturer recommended retail prices of vehicles having said plurality of specifications;
a reference information database for storing reference information to be used by each of a plurality of vehicle distributors in examining estimated prices of vehicles having said plurality of specifications;
specification selection means for presenting said plurality of specifications of the vehicle to said customer, allowing said customer to select said preferred specifications from said plurality of specifications, calculating a manufacturer recommended retail price of said selectively specified vehicle on the basis of said data stored in said manufacturer recommended retail price database, and presenting said calculated manufacturer recommended retail price to said customer;
distributor selection means for presenting said plurality of distributors to said customer and allowing said customer to select, from said plurality of distributors, a distributor by which an estimated price of said selectively specified vehicle is desired to be presented;
estimated price setting means, used when an estimate request regarding said selectively specified vehicle is received from said customer, for presenting said preferred specifications to said distributor selected by said customer, and allowing said selected distributor to input an estimated price of said selectively specified vehicle;
estimated price submit means for sending said estimated price input by said selected distributor to said customer having made said estimate request; and
reference information providing means, used when said selected distributor inputs said estimated price, for presenting said reference information read from said reference information database to said selected distributor.

21. The vehicle sales support system of Claim 20,
wherein said estimated price setting means stores said estimated price input by said selected distributor in said reference information database correspondingly to said preferred specifications, and
said reference information providing means reads, from said reference information database, an estimated price of a vehicle having said preferred specifications input by another distributor different from said selected distributor, and presents at least said read estimated price to said selected distributor as reference information.

22. The vehicle sales support system of Claim 20 or 21,
wherein said reference information providing means is inhibited from presenting, to said selected distributor as reference information, an estimated price input by another distributor located to be away from said selected distributor by a given distance or more.

23. The vehicle sales support system of Claim 20, 21 or 22,
wherein said reference information providing means allows said selected distributor to specify another distributor, and is inhibited from presenting, to said selected distributor as reference information, estimated prices input by the other distributors not specified by said selected distributor.

24. The vehicle sales support system of one of the preceding claims 20 to 23,
wherein said reference information providing means is inhibited from presenting, to said selected distributor as reference information, an estimated price input by another distributor in response to an estimate request made by a customer identical to said customer having selected said selected distributor.

25. The vehicle sales support system of one of the preceding claims 20 to 24, further comprising negotiation application accepting means, used when a negotiation application regarding said selectively specified vehicle is received from said customer to which said estimated price has been sent, for sending negotiation application information corresponding to said negotiation application regarding said selectively specified vehicle to said selected distributor, and storing said negotiation application information in said reference information database correspondingly to said preferred specifications and said estimated price related to said negotiation application,
wherein said reference information providing means reads, from said reference information database, an estimated price and negotiation application information of another distributor regarding a vehicle having said preferred specifications, and presents, to said selected distributor as reference information, at least said read estimated price and a ratio of a number of times of receiving negotiation applications to a total number of times of presenting the same estimated price.

26. The vehicle sales support system of one of the preceding claims 20 to 25,
wherein said reference information providing means reads, from said reference information database, an estimated price, input by another distributor, of a vehicle having specifications different from said preferred specifications to a given or smaller extent, and presents said read estimated price and specification difference to said selected distributor as reference information.

27. The vehicle sales support system of one of the preceding claims 20 to 26,
wherein said reference information database stores market price information of vehicles of brands different from the vehicle whose specifications are to be selected by said specification selection means, and
said reference information providing means selects, from said market price information of the vehicles of different brands, market price information of a vehicle having specifications different from said preferred specifications to a given or smaller extent, and presents said selected market price information to said selected distributor as reference information.

28. The vehicle sales support system of Claim 27,
wherein said reference information providing means allows said selected distributor to specify a vehicle of different brand, and is inhibited from presenting, to said selected distributor as reference information, market price information of the vehicles of different brands not specified by said selected distributor.

29. The vehicle sales support system of Claim 27 or 28,
wherein said market price information of vehicles of different brands is calculated on the basis of prices of used vehicles of different brands to be stored in said reference information database.

30. The vehicle sales support system of one of the preceding claims 20 to 29, further comprising an estimated price database for storing estimated prices of vehicles having said plurality of specifications set by each of said plurality of distributors,
wherein when an estimate request regarding said selectively specified vehicle selected by said customer is received from said customer, said estimated price setting means presents, to said selected distributor selected by said customer, said preferred specifications and said estimated price of said selectively specified vehicle, set by said selected distributor, read from said estimated price database.

31. A vehicle sales support program for controlling a vehicle sales support apparatus for supporting vehicle sales to customers online by allowing a customer to select, via communications lines, preferred specifications from a plurality of specifications previously set with respect to a vehicle and sending an estimated price of a selectively specified vehicle having said preferred specifications to said customer in response to an estimate request from said customer,
said vehicle sales support apparatus including:
a manufacturer recommended retail price database for storing data for enabling calculation of manufacturer recommended retail prices of vehicles having said plurality of specifications;
a reference information database for storing reference information to be used by each of a plurality of vehicle distributors in examining estimated prices of vehicles having said plurality of specifications; and
an estimated price database for storing said estimated prices of vehicles having said plurality of specifications set by each of said plurality of distributors,
said vehicle sales support program making said vehicle sales support apparatus execute:
specification selection processing for presenting said plurality of specifications of the vehicle to said customer, allowing said customer to select said preferred specifications from said plurality of specifications, calculating a manufacturer recommended retail price of said selectively specified vehicle on the basis of said data stored in said manufacturer recommended retail price database and presenting said calculated manufacturer recommended retail price to said customer;
distributor selection processing for presenting said plurality of distributors to said customer and allowing said customer to select, from said plurality of distributors, a distributor by which an estimated price of said selectively specified vehicle is desired to be presented;
estimated price submit processing, performed when an estimate request regarding said selectively specified vehicle is received from said customer, for reading an estimated price of said selectively specified vehicle set by said distributor selected by said customer, and sending said read estimated price to said customer having made said estimate request;
estimated price setting processing, performed in response to an estimated price update request from any of said plurality of distributors, for presenting, to said distributor, an estimated price, set by said distributor, of a vehicle having specifications related to said update request read from said estimated price database, allowing said distributor to input a new estimated price of said vehicle having said specifications related to said update request, and storing said new estimated price for updating said estimated price database as an estimated price to be sent to a customer by said estimated price submit processing when said distributor is selected by said customer; and
reference information providing processing, performed when said distributor having made said update request inputs said new estimated price, for presenting said reference information read from said reference information database to said distributor having made said update request.

32. The vehicle sales support program of Claim 31,
wherein in said estimated price setting processing, said new estimated price input by said distributor having made said update request is stored for updating said estimated price database and said new estimated price is stored in said reference information database correspondingly to said specifications related to said update request, and
in said reference information providing processing, an estimated price of a vehicle having said specifications related to said update request input by a distributor other than said distributor having made update request is read from said reference information database, and at least said read estimated price is presented to said distributor having made said update request as reference information.

33. The vehicle sales support program of Claim 31 or 32,
wherein said vehicle sales support apparatus is made to further execute negotiation application accepting processing, performed when a negotiation application regarding said selectively specified vehicle is received from said customer to which said estimated price has been sent, for sending negotiation application information corresponding to said negotiation application regarding said selectively specified vehicle to said distributor selected by said customer, and storing said negotiation application information in said reference information database correspondingly to said preferred specifications and said estimated price related to said negotiation application, and
in said reference information providing processing, an estimated price and negotiation application information of another distributor regarding a vehicle having said specifications related to said update request are read from said reference information database, and at least said estimated price and a ratio of a number of times of receiving negotiation applications to a total number of times of presenting the same estimated price are presented to said distributor having made said update request as reference information.

34. The vehicle sales support program of Claim 31, 32 or 33,
wherein in said reference information providing processing, an estimated price, input by another distributor, of a vehicle having specifications different from said specifications related to said update request to a given or smaller extent is read from said reference information database, and said read estimated price and specification difference are presented to said distributor having made said update request as reference information.

35. The vehicle sales support program of one of the preceding claims 30 to 34,
wherein said reference information database stores market price information of vehicles of brands different from the vehicle whose specifications are to be selected by said specification selection processing, and
in said reference information providing processing, market price information of a vehicle having specifications different from said specifications related to said update request to a given or smaller extent is selected from said market price information of the vehicles of different brands, and said selected market price information is presented to said distributor having made said update request as reference information.

36. A vehicle sales support program for controlling a vehicle sales support apparatus for supporting vehicle sales to customers online by allowing a customer to select, via communications lines, preferred specifications from a plurality of specifications previously set with respect to a vehicle and sending an estimated price of a selectively specified vehicle having said preferred specifications to said customer in response to an estimate request from said customer,
said vehicle sales support apparatus including:
a manufacturer recommended retail price database for storing data for enabling calculation of manufacturer recommended retail prices of vehicles having said plurality of specifications;
a reference information database for storing reference information to be used by each of a plurality of vehicle distributors in examining estimated prices of vehicles having said plurality of specifications; and
an estimated price database for storing said estimated prices of the vehicles having said plurality of specifications set by each of said plurality of distributors,
said vehicle sales support program making said vehicle sales support apparatus execute:
specification selection processing for presenting said plurality of specifications of the vehicle to said customer, allowing said customer to select said preferred specifications from said plurality of specifications, calculating a manufacturer recommended retail price of said selectively specified vehicle on the basis of said data stored in said manufacturer recommended retail price database, and presenting said calculated manufacturer recommended retail price to said customer;
distributor selection processing for presenting said plurality of distributors to said customer and allowing said customer to select, from said plurality of distributors, a distributor by which an estimated price of said selectively specified vehicle is desired to be presented;
estimated price setting processing, performed when an estimate request regarding said selectively specified vehicle is received from said customer, for presenting, to said selected distributor, said preferred specifications and an estimated price of said selectively specified vehicle, set by said selected distributor, read from said estimated price database, allowing said selected distributor to input a new estimated price of said selectively specified vehicle, and storing said new estimated price as an estimated price of said selectively specified vehicle set by said selected distributor for updating said estimated price database;
estimated price submit processing for reading, from said estimated price database, said estimated price of said selectively specified vehicle, set by said selected distributor, that has been stored for update by said estimated price setting processing, and sending said read estimated price to said customer having made said estimate request; and
reference information providing processing, performed when said selected distributor inputs said estimated price, for presenting said reference information read from said reference information database to said selected distributor.

37. The vehicle sales support program of Claim 36,
wherein in said estimated price setting processing, said new estimated price input by said selected distributor is stored for updating said estimated price database, and said new estimated price is stored in said reference information database correspondingly to said preferred specifications, and
in said reference information providing processing, an estimated price of a vehicle having said preferred specifications input by another distributor different from said selected distributor is read from said reference information database, and at least said read estimated price is presented to said selected distributor as reference information.

38. The vehicle sales support program of Claim 36 or 37,
wherein in said reference information providing processing, an estimated price input by another distributor in response to an estimate request from a customer identical to said customer having selected said selected distributor is inhibited from being presented to said selected distributor as reference information.

39. The vehicle sales support program of Claim 36, 37 or 38,
wherein said vehicle sales support apparatus is made to further execute negotiation application accepting processing, performed when a negotiation application regarding said selectively specified vehicle is received from said customer to which said estimated price has been sent, for sending negotiation application information corresponding to said negotiation application regarding said selectively specified vehicle to said selected distributor selected by said customer, and storing said negotiation application information in said reference information database correspondingly to said preferred specifications and said estimated price related to said negotiation application, and
in said reference information providing processing, an estimated price and negotiation application information of another distributor regarding a vehicle having said preferred specifications are read from said reference information database, and at least said read estimated price and a ratio of a number of times of receiving negotiation applications to a total number of times of presenting the same estimated price are presented to said selected distributor as reference information.

40. The vehicle sales support program of one of the preceding claims 36 to 39,
wherein in said reference information providing processing, an estimated price, input by another distributor, of a vehicle having specifications different from said preferred specifications to a given or smaller extent is read from said reference information database, and said read estimated price and specification difference are presented to said selected distributor as reference information.

41. The vehicle sales support program of one of the preceding claims 36 to 40,
wherein said reference information database stores market price information of vehicles of brands different from the vehicle whose specifications are to be selected by said specification selection processing, and
in said reference information providing processing, market price information of a vehicle having specifications different from said preferred specifications to a given or smaller extent is selected from said market price information of the vehicles of different brands, and said selected market price information of the vehicle of different brand is presented to said selected distributor as reference information.

42. A vehicle sales support program for controlling a vehicle sales support apparatus for supporting vehicle sales to customers online by allowing a customer to select, via communications lines, preferred specifications from a plurality of specifications previously set with respect to a vehicle and sending an estimated price of a selectively specified vehicle having said preferred specifications to said customer in response to an estimate request from said customer,
said vehicle sales support apparatus including:
a manufacturer recommended retail price database for storing data for enabling calculation of manufacturer recommended retail prices of vehicles having said plurality of specifications; and
a reference information database for storing reference information to be used by each of a plurality of vehicle distributors in examining estimated prices of vehicles having said plurality of specifications,
said vehicle sales support program making said vehicle sales support apparatus execute:
specification selection processing for presenting said plurality of specifications of the vehicle to said customer, allowing said customer to select said preferred specifications from said plurality of specifications, calculating a manufacturer recommended retail price of said selectively specified vehicle on the basis of said data stored in said manufacturer recommended retail price database, and presenting said calculated manufacturer recommended retail price to said customer;
distributor selection processing for presenting said plurality of distributors to said customer and allowing said customer to select, from said plurality of distributors, a distributor by which an estimated price of said selectively specified vehicle is desired to be presented;
estimated price setting processing, performed when an estimate request regarding said selectively specified vehicle is received from said customer, for presenting said preferred specifications to said distributor selected by said customer, and allowing said selected distributor to input an estimated price of said selectively specified vehicle;
estimated price submit processing for sending said estimated price input by said selected distributor to said customer having made said estimate request; and
reference information providing processing, performed when said selected distributor inputs said estimated price, for presenting said reference information read from said reference information database to said selected distributor.

43. The vehicle sales support program of Claim 42,
wherein in said estimated price setting processing, said estimated price input by said selected distributor is stored in said reference information database correspondingly to said preferred specifications, and
in said reference information providing processing, an estimated price of a vehicle having said preferred specifications input by another distributor different from said selected distributor is read from said reference information database, and at least said read estimated price is presented to said selected distributor as reference information.

44. The vehicle sales support program of Claim 42 or 43,
wherein in said reference information providing processing, an estimated price input by another distributor in response to an estimate request made by a customer identical to said customer having selected said selected distributor is inhibited from being presented to said selected distributor as reference information.

45. The vehicle sales support program of Claim 42, 43 or 44,
wherein said vehicle sales support apparatus is made to further execute negotiation application accepting processing, performed when a negotiation application regarding said selectively specified vehicle is received from said customer to which said estimated price has been sent, for sending negotiation application information corresponding to said negotiation application regarding said selectively specified vehicle to said selected distributor, and storing said negotiation application information in said reference information database correspondingly to said preferred specifications and said estimated price related to said negotiation application, and
in said reference information providing processing, an estimated price and negotiation application information of another distributor regarding a vehicle having said preferred specifications are read from said reference information database, and at least said read estimated price and a ratio of a number of times of receiving negotiation applications to a total number of times of presenting the same estimated price are presented to said selected distributor as reference information.

46. The vehicle sales support program of one of the preceding claims 42 to 45,
wherein in said reference information providing processing, an estimated price, input by another distributor, of a vehicle having specifications different from said preferred specifications to a given or smaller extent is read from said reference information database, and said read estimated price and specification difference are presented to said selected distributor as reference information.

47. The vehicle sales support program of one of the preceding claims 42 to 46,
wherein said reference information database stores market price information of vehicles of brands different from the vehicle whose specifications are to be selected by said specification selection processing, and
in said reference information providing processing, market price information of a vehicle having specifications different from said preferred specifications to a given or smaller extent is selected from said market price information of the vehicles of different brands, and said selected market price information is presented to said selected distributor as reference information.

48. The vehicle sales support program of one of the preceding claims 42 to 47,
wherein said vehicle sales support apparatus further includes an estimated price database for storing estimated prices of vehicles having said plurality of specifications set by each of said plurality of distributors, and
in said estimated price setting processing, when an estimate request regarding said selectively specified vehicle selected by said customer is received from said customer, said preferred specifications and said estimated price of said selectively specified vehicle, set by said selected distributor, read from said estimated price database are presented to said selected distributor selected by said customer.

49. A vehicle sales support method for supporting vehicle sales to customers online by allowing a customer to select, via communications lines, preferred specifications from a plurality of specifications previously set with respect to a vehicle and sending an estimated price of a selectively specified vehicle having said preferred specifications to said customer in response to an estimate request from said customer,
a manufacturer recommended retail price database for storing data for enabling calculation of manufacturer recommended retail prices of vehicles having said plurality of specifications, a reference information database for storing reference information to be used by each of a plurality of vehicle distributors in examining estimated prices of vehicles having said plurality of specifications and an estimated price database for storing said estimated prices of vehicles having said plurality of specifications set by each of said plurality of distributors being previously prepared, said method comprising:
a specification selection step of presenting said plurality of specifications of the vehicle to said customer, allowing said customer to select said preferred specifications from said plurality of specifications, calculating a manufacturer recommended retail price of said selectively specified vehicle on the basis of said data stored in said manufacturer recommended retail price database and presenting said calculated manufacturer recommended retail price to said customer;
a distributor selection step of presenting said plurality of distributors to said customer and allowing said customer to select, from said plurality of distributors, a distributor by which an estimated price of said selectively specified vehicle is desired to be presented;
an estimated price submitting step, performed when an estimate request regarding said selectively specified vehicle is received from said customer, of reading an estimated price of said selectively specified vehicle set by said distributor selected by said customer, and sending said read estimated price to said customer having made said estimate request;
an estimated price setting step, performed in response to an estimated price update request from any of said plurality of distributors, of presenting, to said distributor, an estimated price, set by said distributor, of a vehicle having specifications related to said update request read from said estimated price database, allowing said distributor to input a new estimated price of said vehicle having said specifications related to said update request, and storing said new estimated price for updating said estimated price database as an estimated price to be sent to a customer in said estimated price submitting step when said distributor is selected by said customer; and
a reference information providing step, performed when said distributor having made said update request inputs said new estimated price, of presenting said reference information read from said reference information database to said distributor having made said update request.

50. The vehicle sales support method of Claim 49,
wherein in said estimated price setting step, said new estimated price input by said distributor having made said update request is stored for updating said estimated price database and said new estimated price is stored in said reference information database correspondingly to said specifications related to said update request, and
in said reference information providing step, an estimated price of a vehicle having said specifications related to said update request input by a distributor other than said distributor having made update request is read from said reference information database, and at least said read estimated price is presented to said distributor having made said update request as reference information.

51. The vehicle sales support method of Claim 49 or 50, further comprising:
a negotiation application accepting step, performed when a negotiation application regarding said selectively specified vehicle is received from said customer to which said estimated price has been sent, of sending negotiation application information corresponding to said negotiation application regarding said selectively specified vehicle to said distributor selected by said customer, and storing said negotiation application information in said reference information database correspondingly to said preferred specifications and said estimated price related to said negotiation application,
wherein in said reference information providing step, an estimated price and negotiation application information of another distributor regarding a vehicle having said specifications related to said update request are read from said reference information database, and at least said estimated price and a ratio of a number of times of receiving negotiation applications to a total number of times of presenting the same estimated price are presented to said distributor having made said update request as reference information.

52. The vehicle sales support method of Claim 49, 50 or 51,
wherein in said reference information providing step, an estimated price, input by another distributor, of a vehicle having specifications different from said specifications related to said update request to a given or smaller extent is read from said reference information database, and said read estimated price and specification difference are presented to said distributor having made said update request as reference information.

53. The vehicle sales support method of one of the preceding claims 49 to 52,
wherein said reference information database stores market price information of vehicles of brands different from the vehicle whose specifications are to be selected in said specification selection step, and in said reference information providing step, market price information of a vehicle having specifications different from said specifications related to said update request to a given or smaller extent is selected from said market price information of the vehicles of different brands, and said selected market price information is presented to said distributor having made said update request as reference information.

54. A vehicle sales support method for supporting vehicle sales to customers online by allowing a customer to select, via communications lines, preferred specifications from a plurality of specifications previously set with respect to a vehicle and sending an estimated price of a selectively specified vehicle having said preferred specifications to said customer in response to an estimate request from said customer,
a manufacturer recommended retail price database for storing data for enabling calculation of manufacturer recommended retail prices of vehicles having said plurality of specifications, a reference information database for storing reference information to be used by each of a plurality of vehicle distributors in examining estimated prices of vehicles having said plurality of specifications, and an estimated price database for storing said estimated prices of the vehicles having said plurality of specifications set by each of said plurality of distributors being previously prepared, said method comprising:
a specification selection step of presenting said plurality of specifications of the vehicle to said customer, allowing said customer to select said preferred specifications from said plurality of specifications, calculating a manufacturer recommended retail price of said selectively specified vehicle on the basis of said data stored in said manufacturer recommended retail price database, and presenting said calculated manufacturer recommended retail price to said customer;
a distributor selection step of presenting said plurality of distributors to said customer and allowing said customer to select, from said plurality of distributors, a distributor by which an estimated price of said selectively specified vehicle is desired to be presented;
an estimated price setting step, performed when an estimate request regarding said selectively specified vehicle is received from said customer, of presenting, to said selected distributor, said preferred specifications and an estimated price of said selectively specified vehicle, set by said selected distributor, read from said estimated price database, allowing said selected distributor to input a new estimated price of said selectively specified vehicle, and storing said new estimated price as an estimated price of said selectively specified vehicle set by said selected distributor for updating said estimated price database;
an estimated price submitting step of reading, from said estimated price database, said estimated price of said selectively specified vehicle, set by said selected distributor, that has been stored for update in said estimated price setting step, and sending said read estimated price to said customer having made said estimate request; and
a reference information providing step, performed when said selected distributor inputs said estimated price, of presenting said reference information read from said reference information database to said selected distributor.

55. The vehicle sales support method of Claim 54,
wherein in said estimated price setting step, said new estimated price input by said selected distributor is stored for updating said estimated price database, and said new estimated price is stored in said reference information database correspondingly to said preferred specifications, and
in said reference information providing step, an estimated price of a vehicle having said preferred specifications input by another distributor different from said selected distributor is read from said reference information database, and at least said read estimated price is presented to said selected distributor as reference information.

56. The vehicle sales support method of Claim 54 or 55,
wherein in said reference information providing step, an estimated price input by another distributor in response to an estimate request from a customer identical to said customer having selected said selected distributor is inhibited from being presented to said selected distributor as reference information.

57. The vehicle sales support method of Claim 54, 55 or 56, further comprising a negotiation application accepting step, performed when a negotiation application regarding said selectively specified vehicle is received from said customer to which said estimated price has been sent, of sending negotiation application information corresponding to said negotiation application regarding said selectively specified vehicle to said selected distributor selected by said customer, and storing said negotiation application information in said reference information database correspondingly to said preferred specifications and said estimated price related to said negotiation application,
wherein in said reference information providing step, an estimated price and negotiation application information of another distributor regarding a vehicle having said preferred specifications are read from said reference information database, and at least said read estimated price and a ratio of a number of times of receiving negotiation applications to a total number of times of presenting the same estimated price are presented to said selected distributor as reference information.

58. The vehicle sales support method of one of the preceding claims 54 to 57,
wherein in said reference information providing step, an estimated price, input by another distributor, of a vehicle having specifications different from said preferred specifications to a given or smaller extent is read from said reference information database, and said read estimated price and specification difference are presented to said selected distributor as reference information.

59. The vehicle sales support method of one of the preceding claims 54 to 58,
wherein said reference information database stores market price information of vehicles of brands different from the vehicle whose specifications are to be selected in said specification selection step, and
in said reference information providing step, market price information of a vehicle having specifications different from said preferred specifications to a given or smaller extent is selected from said market price information of the vehicle of different brands, and said selected market price information of the vehicle of different brand is presented to said selected distributor as reference information.

60. A vehicle sales support method for supporting vehicle sales to customers online by allowing a customer to select, via communications lines, preferred specifications from a plurality of specifications previously set with respect to a vehicle and sending an estimated price of a selectively specified vehicle having said preferred specifications to said customer in response to an estimate request from said customer,
a manufacturer recommended retail price database for storing data for enabling calculation of manufacturer recommended retail prices of vehicles having said plurality of specifications, and a reference information database for storing reference information to be used by each of a plurality of vehicle distributors in examining estimated prices of vehicles having said plurality of specifications being previously prepared, said method comprising:
a specification selection step of presenting said plurality of specifications of the vehicle to said customer, allowing said customer to select said preferred specifications from said plurality of specifications, calculating a manufacturer recommended retail price of said selectively specified vehicle on the basis of said data stored in said manufacturer recommended retail price database, and presenting said calculated manufacturer recommended retail price to said customer;
a distributor selection step of presenting said plurality of distributors to said customer and allowing said customer to select, from said plurality of distributors, a distributor by which an estimated price of said selectively specified vehicle is desired to be presented;
an estimated price setting step, performed when an estimate request regarding said selectively specified vehicle is received from said customer, of presenting said preferred specifications to said distributor selected by said customer, and allowing said selected distributor to input an estimated price of said selectively specified vehicle;
an estimated price submitting step of sending said estimated price input by said selected distributor to said customer having made said estimate request; and
a reference information providing step, performed when said selected distributor inputs said estimated price, of presenting said reference information read from said reference information database to said selected distributor.

61. The vehicle sales support method of Claim 60,
wherein in said estimated price setting step, said estimated price input by said selected distributor is stored in said reference information database correspondingly to said preferred specifications, and
in said reference information providing step, an estimated price of a vehicle having said preferred specifications input by another distributor different from said selected distributor is read from said reference information database, and at least said read estimated price is presented to said selected distributor as reference information.

62. The vehicle sales support method of Claim 60 or 61,
wherein in said reference information providing step, an estimated price input by another distributor in response to an estimate request made by a customer identical to said customer having selected said selected distributor is inhibited from being presented to said selected distributor as reference information.

63. The vehicle sales support method of Claim 60, 61 or 62, further comprising a negotiation application accepting step, performed when a negotiation application regarding said selectively specified vehicle is received from said customer to which said estimated price has been sent, of sending negotiation application information corresponding to said negotiation application regarding said selectively specified vehicle to said selected distributor, and storing said negotiation application information in said reference information database correspondingly to said preferred specifications and said estimated price related to said negotiation application,
wherein in said reference information providing step, an estimated price and negotiation application information of another distributor regarding a vehicle having said preferred specifications are read from said reference information database, and at least said read estimated price and a ratio of a number of times of receiving negotiation applications to a total number of times of presenting the same estimated price are presented to said selected distributor as reference information.

64. The vehicle sales support method of Claim 60, 61, 62 or 63,
wherein in said reference information providing step, an estimated price, input by another distributor, of a vehicle having specifications different from said preferred specifications to a given or smaller extent is read from said reference information database, and said read estimated price and specification difference are presented to said selected distributor as reference information.

65. The vehicle sales support method of one of the preceding claims 60 to 64,
wherein said reference information database stores market price information of vehicles of brands different from the vehicle whose specifications are to be selected in said specification selection step, and
in said reference information providing step, market price information of a vehicle having specifications different from said preferred specifications to a given or smaller extent is selected from said market price information of the vehicles of different brands, and said selected market price information is presented to said selected distributor as reference information.

66. The vehicle sales support method of one of the preceding claims 60 to 65,
wherein an estimated price database for storing estimated prices of vehicles having said plurality of specifications set by each of said plurality of distributors is previously prepared in addition to said manufacturer recommended retail price database and said reference information database, and
in said estimated price setting step, when an estimate request regarding said selectively specified vehicle selected by said customer is received from said customer, said preferred specifications and said estimated price of said selectively specified vehicle, set by said selected distributor, read from said estimated price database are presented to said selected distributor selected by said customer.
